# EUROPÄISCHE PATENTSCHRIFT

(11) **EP 4 208 024 B1**
(45) Veröffentlichungstag und Bekanntmachung des Hinweises auf die Patenterteilung: **31.07.2024**
(21) Anmeldenummer: 21773013.4
(22) Anmeldetag: 01.09.2021
(51) Int. Cl.: A01N 43/16, C09D 5/14, C09D 105/08, C04B 24/38, A01P 13/00, A01P 1/00, A01P 3/00, C04B 28/02, C04B 103/67, C09D 5/16

(54) **BESCHICHTUNG GEGEN ALGEN- UND PILZBEFALL**
COATING AGAINST ALGAL AND FUNGAL INFESTATION
REVÊTEMENT CONTRE L'INFESTATION D'ALGUES ET DE CHAMPIGNONS

(30) Priorität: 04.11.2020 DE 102020006769; 29.03.2021 DE 102021107923
(43) Veröffentlichungstag der Anmeldung: 12.07.2023
(73) Patentinhaber: MSLsolutions GmbH, 46047 Oberhausen (DE)
(72) Erfinder: DAHMS, Gerd Herbert, 46047 Oberhausen (DE)
(74) Vertreter: Von Rohr Patentanwälte Partnerschaft mbB
(86) Internationale Anmeldenummer: PCT/EP2021/074105
(87) Internationale Veröffentlichungsnummer: WO 2022/096176

(56) Entgegenhaltungen:
- CN-A- 107 875 373
- DE-A1- 102008 024 846
- DE-A1- 102013 207 083
- KR-A- 20120 034 457
- US-A- 4 659 700
- LI JINGLEI ET AL: "Effects of chitosan coating on curcumin loaded nano-emulsion: Study on stability andin vitrodigestibility", FOOD HYDROCOLLOIDS, ELSEVIER BV, NL, vol. 60, 11 March 2016 (2016-03-11), pages 138 - 147, XP029564976, ISSN: 0268-005X, DOI: 10.1016/J.FOODHYD.2016.03.016
- QIN C ET AL: "Water-solubility of chitosan and its antimicrobial activity", CARBOHYDRATE POLYMERS, APPLIED SCIENCE PUBLISHERS , LTD BARKING, GB, vol. 63, no. 3, 3 March 2006 (2006-03-03), pages 367 - 374, XP027941360, ISSN: 0144-8617, [retrieved on 20060303]
- USTINOVA YULIA V ET AL: "Cement Compositions with the Chitosan Additive", PROCEDIA ENGINEERING, ELSEVIER BV, NL, vol. 153, 24 August 2016 (2016-08-24), pages 810 - 815, XP029697824, ISSN: 1877-7058, DOI: 10.1016/J.PROENG.2016.08.247
- LASHERAS-ZUBIATE M. ET AL: "Studies on chitosan as an admixture for cement-based materials: Assessment of its viscosity enhancing effect and complexing ability for heavy metals", JOURNAL OF APPLIED POLYMER SCIENCE, vol. 120, no. 1, 13 October 2010 (2010-10-13), US, pages 242 - 252, XP055861896, ISSN: 0021-8995, DOI: 10.1002/app.33048

## Beschreibung

Die vorliegende Erfindung betrifft das technische Gebiet des Schutzes gegenüber Umwelteinflüssen bzw. des Bewitterungsschutzes von Baumaterialien bzw. Baustoffen, wie sie insbesondere für den Gebäudebau bzw. für Gebäude eingesetzt werden, und zwar insbesondere im Außen- bzw. Feuchtraumbereich von Gebäuden oder dergleichen.

Insbesondere betrifft die vorliegende Erfindung ein Baumaterial für den Gebäudebau bzw. insbesondere für Gebäude, vorzugsweise für den Außenbereich bzw. Feuchtraumbereich, wobei das Baumaterial als Gebäudeteil bzw. Gebäudebestandteil ausgebildet ist bzw. in Form eines Gebäudeteils bzw. Gebäudebestandteils vorliegt bzw. zur Verwendung bzw. Aufbringung auf Gebäudeteile oder Gebäudebestandteile ausgebildet ist, wobei das Baumaterial mindestens ein antimikrobielles bzw. herbizides Biopolymer enthält bzw. hiermit ausgerüstet ist.

In diesem Zusammenhang betrifft die vorliegende Erfindung auch die Verwendung eines antimikrobiellen bzw. herbiziden Biopolymers zur Ausrüstung eines Baumaterials mit antimikrobiellen bzw. herbiziden Eigenschaften bzw. zur Erhöhung der Standzeit bzw. der Wetterbeständigkeit bzw. zur Verringerung der Verkeimung bzw. des Algen- bzw. Moos- bzw. Pilzbefalls eines Baumaterials.

Darüber hinaus betrifft die vorliegende Erfindung auch eine Zusammensetzung, insbesondere wässrige Zusammensetzung, welche vorzugsweise in Form einer Lösung bzw. Dispersion vorliegt und welche mindestens ein antimikrobielles bzw. herbizides Biopolymer aufweist, wobei die Zusammensetzung zur Ausrüstung und/oder zum Erhalt des Baumaterials mit dem antimikrobiellen bzw. herbiziden Biopolymer verwendet bzw. eingesetzt werden kann.

Diesbezüglich wird durch die vorliegende Erfindung auch die Verwendung der Zusammensetzung nach der Erfindung zur Ausrüstung und/oder zum Erhalt eines Baumaterials mit antimikrobiellen bzw. herbiziden Eigenschaften bzw. zur Erhöhung der Standzeit bzw. der Wetterbeständigkeit eines Baumaterials bzw. zur Verringerung der Verkeimung bzw. zur Verringerung des Algen- bzw. Moos- bzw. Pilzbefalls eines Baumaterials vorgeschlagen.

Schließlich betrifft die vorliegende Erfindung auch ein Verfahren zur diesbezüglichen Ausrüstung und/oder zum Erhalt eines Baumaterials mit antimikrobiellen bzw. herbiziden Eigenschaften bzw. zur Erhöhung der Standzeit bzw. der Wetterbeständigkeit bzw. zur Verringerung der Verkeimung bzw. des Algen- und/oder Moos- und/oder Pilzbefalls eines Baumaterials.

Insbesondere der Außen- bzw. Feuchtraumbereich von Gebäuden bzw. Gebäudeteilen ist zum Teil in erheblichem Maße Umwelteinflüssen und insbesondere einer hohen Feuchtigkeit ausgesetzt. Die diesbezüglichen Umwelteinflüsse ermöglichen auch im Zusammenhang mit der speziellen Struktur bzw. Zusammensetzung entsprechender Bauteile bzw. Baustoffe, wie (Außen-) Putzen oder (Außen-)Farben oder dergleichen, oftmals eine mitunter übermäßige Besiedlung mit Mikroorganismen, wie Pilzen, Bakterien oder Algen. Neben der optischen Beeinträchtigung kann eine übermäßige Besiedlung mit Mikroorganismen auch zu einer Schädigung des Baumaterials bzw. Gebäudes selbst führen, was mit hohen Sanierungskosten einhergehen kann. Zudem geht von derartigen Mikroorganismen auch eine gewisse Gefahr für die Gesundheit einher, beispielsweise im Hinblick auf sporenbildende Schimmelpilze oder dergleichen. Im Allgemeinen hängt das Ausmaß bzw. die Intensität des Befalls bzw. der Besiedlung mit Mikroorganismen von den vorliegenden Umweltbedingungen ab, wobei insbesondere eine hohe Feuchtigkeit im Allgemeinen das Wachstum von Pilzen, Bakterien bzw. Algen oder dergleichen fördert. Zudem hängt das Wachstum bzw. die Besiedelung entsprechender Baumaterialien bzw. Baustoffe auch von deren Struktur bzw. Zusammensetzung ab, wobei beispielsweise poröse Strukturen oder bestimmte chemische Zusammensetzungen der Materialien förderlich gegenüber einer diesbezüglichen Besiedlung sein können.

Vor diesem Hintergrund besteht somit im Stand der Technik ein großer Bedarf an der Bereitstellung entsprechender Konzepte zum Schutz von Baumaterialien bzw. Baustoffen gegenüber einem übermäßigen Bewuchs bzw. Befall mit Mikroorganismen. In diesem Zusammenhang werden im Stand der Technik neben physikalischen Maßnahmen, wie einer Oberflächenversiegelung oder dergleichen, oftmals rein chemisch basierte Biozide eingesetzt, von denen aber mitunter ein hohes toxisches Potential auch gegenüber Menschen ausgeht, wobei zudem auch oftmals keine Umweltkompatibilität vorliegt. Dies ist insbesondere dann äußerst problematisch, wenn die in Rede stehenden Biozide aus dem Baumaterial ausgewaschen werden und somit in den Umweltkreislauf, beispielsweise in das Grundwasser oder in Oberflächengewässer, gelangen. Zudem steht oftmals die biozide Wirkung nicht im Verhältnis zu der allgemeinen Umweltgefahr bzw. dem toxischen Potential der diesbezüglich eingesetzten chemischen Substanzen.

So betrifft die DE 39 32 990 A1 ein Konservierungsverfahren von Putzen oder dergleichen unter Verwendung von Lithiumsilikaten.

Weiterhin betrifft die US 6 291 397 A die Verwendung von chlorierten Isocyanuraten für ein Verfahren zur Beseitigung von Algen auf Oberflächen.

Die DE 197 03 705 A1 beschreibt ein Imprägniermittel zum Abtöten von Mikroorganismen auf Basis von Silikonharz-Emulsionen, Kaliumsilikat und Kaliummethylsilikonat, wobei zudem Kupfersulfat und Kupferoxid eingesetzt werden sollen.

Ustinova et al: "Cement Compositions with the Chitosan Additive", Procedia Engineering, Elsevier BV, NL, Bd. 153, 24. August 2016, Seiten 810 bis 815*,* betrifft Zementzusammensetzungen unter Verwendung eines Chitosanadditivs, wobei der Einfluss auf das Gesamtporenvolumen und die Porenverteilung als auch die Frostbeständigkeit und Stabilität untersucht wird.

Lasheras-Zubiate et al: "Studies on chitosan as an admixture for cement-based materials: Assessment of its viscosity enhancing effect and complexing ability for heavy metals", Journal of Applied Polymer Science, Bd. 120, Nr. 1, 13. Oktober 2010, Seiten 242 bis 252*,* zementbasierte Materialien und den diesbezüglichen Einsatz von Chitosan, und zwar insbesondere zu Zwecken der Beeinflussung der Viskosität und den Komplexierungseigenschaften gegenüber Schwermetallen.

Die DE 10 2013 207 083 A1 betrifft die Verwendung von Chitosan in Baumaterialien, wobei das Chitosan als Zuschlagstoff für die Baumaterialien eingesetzt bzw. als Schicht auf oder um die Baumaterialien aufgebracht wird
Die KR 10 2012 0034457 A betrifft die Herstellung eines Leichtbausteins auf Basis von Zement, wobei das hierzu eingesetzte Bindemittel aus einem anorganischen Material, einem Silikatglas und Chitosan bestehen soll.

Weiterhin betrifft die US 4 659 700 A ein Gel oder eine gelartige Membran, bestehend im Wesentlichen aus Wasser, Chitosan und Glycerol, wobei hierbei eine dreidimensionale Gelstruktur vorliegen soll, wobei insbesondere auf einen Chitosanträger im Bereich der Wundbehandlung abgestellt wird.

Zudem betrifft die CN 107 875 373 A Zusammensetzungen mit antifugaler Wirkung auf Basis eines speziellen Polypeptids sowie weiterer Inhaltsstoffe, wobei die Zusammensetzung als Spray- bzw. Sprühzusammensetzung vorliegen soll.

C QIN et al.: "Water-solubility of chitosan and its antimicrobial activity", Carbohydrate Polymers 2006, 63, 367-374 beschreiben Untersuchungen zur antimikrobiellen Wirkung von Chitosanen verschiedener Molekulargewichte.

LI JINGLEI et al.: "Effects of chitosan coating on curcumin loaded nanoemulsion: Study on stability and in vitro digestibility", Food Hydrocolloids, Elsevier BV, NL, Bd. 60, 11. März 2016, Seiten 138 bis 147 betrifft Untersuchungen zur Auswirkung einer Chitosanbeschichtung auf eine mit Curcumin beladene Nanoemulsion, und zwar auf Basis einer Studie zur Stabilität und In-vitro-Verdaubarkeit, wobei in diesem Dokument ein Fokus auf den Lebensmittelbereich gesetzt wird.

Im Stand der Technik werden im Allgemeinen Konzepte zur Verringerung des Befalls von Baumaterialien bzw. der Oberfläche von Gebäuden verfolgt, welche zum einen auf eine Versiegelung der Oberfläche abstellen, um so einen Bewuchs durch Mikroorganismen zu verringern oder wonach entsprechende Oberflächen mit Bioziden ausgerüstet werden, wie zuvor angeführt. Derartige Maßnahmen führen aber nicht immer zu dem gewünschten Erfolg, und zwar sowohl im Hinblick auf einen dauerhaft wirksamen Schutz gegenüber Mikroorganismen als auch im Hinblick auf eine anzustrebende Umweltkompatibilität, da oftmals ein hohes toxikologisches Risiko für Mensch und Umwelt vorliegt.

Vor diesem Hintergrund besteht eine Aufgabe der vorliegenden Erfindung darin, ein weiterführendes Konzept zur Verhinderung bzw. Verminderung des Befalls von Baumaterialien bzw. Baustoffen mit Mikroorganismen bereitzustellen, wobei die zuvor geschilderten Nachteile des Standes der Technik weitgehend vermieden oder aber wenigstens abgeschwächt werden sollen.

Insbesondere ist eine Aufgabe der vorliegenden Erfindung in der Bereitstellung entsprechender Bauteile bzw. Baustoffe zu sehen, welche auch bei einer langfristigen bzw. dauerhaften Aussetzung in einem feuchtigkeitsintensiven - also in einem den Befall bzw. Bewuchs von Mikroorganismen begünstigendem - Milieu, wie sie in Außen- und Feuchträumen zumeist anzutreffen sind, einen verminderten Befall bzw. Bewuchs mit Mikroorganismen (d.h. neben Bakterien, Pilzen und Algen auch Moose oder dergleichen) aufweisen bzw. diesbezüglich eine hohe Resistenz gegenüber einem derartigen Befalls bzw. Bewuchs aufweisen.

In diesem Zusammenhang ist eine wiederum weitere Aufgabe der vorliegenden Erfindung auch darin zu sehen, dass eine diesbezügliche Zusammensetzung sowie entsprechende Verwendungen und Verfahren bereitgestellt werden sollen, welche zu einer wirksamen und dauerhaften Ausrüstung entsprechender Baumaterialien bzw. Baustoffe im Hinblick auf einen verringerten Befall bzw. Bewuchs mit unerwünschten Mikroorganismen führen und einen wirksamen und dauerhaften Schutz gegen Feuchtigkeits- und Witterungseinflüssen ermöglichen.

Diesbezüglich soll auch eine hohe Umweltverträglichkeit bzw. geringe Toxizität und Umweltschädlichkeit der diesbezüglich eingesetzten Substanzen gewährleistet sein, wobei zudem auch eine einfache und sichere Handhabbarkeit bzw. Anwendung gewährleistet sein soll. Insbesondere soll auch eine negative Materialbeeinflussung, wie Farbveränderungen oder dergleichen, vermieden werden.

Eine wiederum weitere Aufgabe der vorliegenden Erfindung liegt auch darin, entsprechende wirkstoffhaltige Zusammensetzungen bereitzustellen, welche sich insbesondere zur Ausrüstung bzw. zum Erhalt von Baumaterialien mit speziellen bzw. maßgeschneiderten Eigenschaften, insbesondere wie zuvor angeführt, eignen, wobei die Zusammensetzungen als solche eine hohe (Lager-)Stabilität bei gleichermaßen guten Anwendungseigenschaften aufweisen sollen. Insbesondere soll eine Stabilisierung der diesbezüglich eingesetzten Wirkkomponenten gewährleistet werden.

Zur Lösung der zuvor geschilderten Aufgabe schlägt die vorliegende Erfindung - gemäß einem **ersten** Aspekt der vorliegenden Erfindung - ein Baumaterial (Baustoff) für den Gebäudebau und/oder für Gebäude, vorzugsweise für den Außenbereich und/oder Feuchtraumbereich, insbesondere ausgebildet als und/oder in Form eines Gebäudeteils und/oder Gebäudebestandteils, nach Anspruch 1 vor; weitere, insbesondere vorteilhafte Ausgestaltungen des erfindungsgemäßen Baumaterials sind Gegenstand der diesbezüglichen Unteransprüche.

Weiterhin betrifft die vorliegende Erfindung - gemäß einem **zweiten** Aspekt der vorliegenden Erfindung - die Verwendung eines antimikrobiellen bzw. herbiziden Biopolymers zur Ausrüstung bzw. zum Erhalt eines Baumaterials mit antimikrobiellen und/oder herbiziden Eigenschaften bzw. zur Erhöhung der Standzeit und/oder der Wetterbeständigkeit eines Baumaterials oder zur Verringerung der Verkeimung bzw. des Algen- und/oder Moos- und/oder Pilzbefalls eines Baumaterials gemäß dem die diesbezügliche Verwendung betreffenden unabhängigen Verwendungsanspruch (Anspruch 6); weitere, insbesondere vorteilhafte Ausgestaltungen der erfindungsgemäßen Verwendung sind Gegenstand der diesbezüglichen Unteransprüche.

Die vorliegende Erfindung betrifft - gemäß einem **dritten** Aspekt der vorliegenden Erfindung - auch die Zusammensetzung, insbesondere wässrige Zusammensetzung, vorzugsweise in Form einer Lösung oder Dispersion, zur Ausrüstung bzw. zum Erhalt eines Baumaterials für den Gebäudebau und/oder insbesondere für Gebäude, vorzugsweise für den Außenbereich und/oder Feuchtraumbereich, mit mindestens einem antimikrobiellen und/oder herbiziden Biopolymer gemäß dem diesbezüglichen und die Zusammensetzung als solche betreffenden unabhängigen Anspruch 10; weitere, insbesondere vorteilhafte Ausgestaltungen der erfindungsgemäßen Zusammensetzung sind Gegenstand der diesbezüglichen Nebenansprüche sowie der diesbezüglichen Unteransprüche.

Zudem betrifft die vorliegende Erfindung - gemäß einem **vierten** Aspekt der vorliegenden Erfindung - auch die Verwendung der Zusammensetzung nach der Erfindung zur Ausrüstung bzw. zum Erhalt eines Baumaterials mit antimikrobiellen und/oder herbiziden Eigenschaften oder zur Erhöhung der Standzeit und/oder der Wetterbeständigkeit eines Baumaterials oder zur Verringerung der Verkeimung bzw. des Algen- und/oder Moos- und/oder Pilzbefalls eines Baumaterials gemäß dem diesbezüglichen und diese Verwendung betreffenden unabhängigen Anspruch 14.

Darüber hinaus betrifft die vorliegende Erfindung - gemäß einem **fünften** Aspekt der vorliegenden Erfindung - auch das Verfahren zur Ausrüstung bzw. zum Erhalt eines Baumaterials mit antimikrobiellen und/oder herbiziden Eigenschaften oder zur Erhöhung der Standzeit und/oder der Wetterbeständigkeit eines Baumaterials oder zur Verringerung der Verkeimung und/oder des Algen- und/oder Moos- und/oder Pilzbefalls eines Baumaterials gemäß dem diesbezüglichen und das Verfahren betreffenden unabhängigen Anspruch 15.

Es versteht sich im Zusammenhang mit den nachfolgenden Ausführungen von selbst, dass Ausgestaltungen, Ausführungsformen, Vorteile und dergleichen, welche nachfolgend zu Zwecken der Vermeidung von Wiederholungen nur zu einem Erfindungsaspekt angeführt sind, selbstverständlich auch in Bezug auf die übrigen Erfindungsaspekte entsprechend gelten, ohne dass dies einer gesonderten Erwähnung bedarf.

Bei allen nachstehend genannten relativen bzw. prozentualen gewichtsbezogenen Angaben, insbesondere Mengenangaben, ist weiterhin zu beachten, dass diese im Rahmen der vorliegenden Erfindung vom Fachmann derart auszuwählen sind, dass sie sich in der Summe unter Einbezug sämtlicher Komponenten bzw. Inhaltsstoffen, insbesondere wie nachfolgend definiert, stets zu 100 % bzw. 100 Gew.-% ergänzen bzw. addieren; dies versteht sich für den Fachmann aber von selbst.

Weiterhin gilt, dass der Fachmann - anwendungsbezogen oder einzelfallbedingt - von den nachfolgend angeführten Konzentrations-, Gewichts-, Mengen- und Bereichsangaben abweichen kann, ohne dass er den Rahmen der vorliegenden Erfindung verlässt, solange die abweichend gewählten Werte innerhalb der durch die Ansprüche definierten erfindungsgemässen Bereiche liegen.

Zudem gilt, dass sämtliche im Folgenden genannten Werte- bzw. Parameterangaben oder dergleichen grundsätzlich mit genormten bzw. standardisierten oder explizit angegebenen Bestimmungsverfahren oder andernfalls mit dem Fachmann auf diesem Gebiet an sich geläufigen Bestimmungs- bzw. Messmethoden ermittelt bzw. bestimmt werden können.

Dies vorausgeschickt, wird die vorliegende Erfindung nunmehr nachfolgend im Detail erläutert.

Gegenstand der vorliegenden Erfindung - gemäß einem **ersten** Aspekt der vorliegenden Erfindung - ist somit ein Baumaterial (Baustoff) für den Gebäudebau und/oder für Gebäude, vorzugsweise für den Außenbereich und/oder Feuchtraumbereich, ausgebildet als und/oder in Form eines Gebäudeteils und/oder Gebäudebestandteils oder zur Verwendung bzw. Aufbringung auf Gebäudeteilen und/oder Gebäudebestandteilen,
wobei das Baumaterial mindestens ein antimikrobielles und/oder herbizides Biopolymer, ausgewählt aus Chitosan und/oder dessen Salz, enthält oder hiermit ausgerüstet ist, wobei das antimikrobielle und/oder herbizide Biopolymer ein gewichtsmittleres Molekulargewicht M_{w} im Bereich von 1.500 Da bis 9.499 Da aufweist und wobei das antimikrobielle und/oder herbizide Biopolymer einen Polydispersitätsindex, berechnet als Quotient aus gewichtsmittlerem Molekulargewicht M_{w} und zahlenmittlerem Molekulargewicht Mₙ, im Bereich von 1,05 bis 5 aufweist; und
wobei das Baumaterial mindestens ein Additiv aufweist und/oder hiermit ausgerüstet ist, wobei das Additiv ausgewählt ist aus der Gruppe von (i) Proteinen und Proteinhydrolysaten, ausgewählt aus der Gruppe von Molke, Molkeproteinen, Keratinhydrolysat, Weizenproteinhydrolysat, Kollagenhydrolysat und Gelatine; (ii) Hydroxycarbonsäuren, ausgewählt aus der Gruppe von Milchsäure, Zitronensäure, Apfelsäure, Weinsäure, Mandelsäure und Salicylsäure; und (iii) Ascorbinsäure; sowie deren Mischungen und Kombinationen.

In diesem Zusammenhang kann es erfindungsgemäß insbesondere vorgesehen sein, dass das Baumaterial ausgewählt ist aus der Gruppe von (i) Putzen, insbesondere Außen- und/oder Feuchtraumputzen, sowie deren Ausgangsmischungen und -materialien; (ii) Bausteinen, insbesondere Ziegelsteinen, Kalksandsteinen und (Fassaden-)Klinkersteinen, vorzugsweise Kalksandsteinen, sowie deren Ausgangsmaterialien; (iii) Mörteln, insbesondere Außen- und/oder Feuchtraummörteln, sowie deren Ausgangsmischungen und - materialien; (iv) Zementen, insbesondere Außen- und/oder Feuchtraumzementen, sowie deren Ausgangsmischungen und -materialien, (v) Betonen, insbesondere Außen- und/oder Feuchtraumbetonen, sowie deren Ausgangsmischungen und - materialien; (vi) Anstrichfarben, insbesondere Außen- und/oder Feuchtraumanstrichfarben, vorzugsweise Mineralfarben, sowie deren Ausgangsmischungen und -materialien; (vii) Lacken, insbesondere Außen- und/oder Feuchtraumlacken, sowie deren Ausgangsmischungen und -materialien; (viii) Wandbelägen, insbesondere Tapeten, sowie deren Ausgangsmaterialien; (ix) Bodenbelägen, insbesondere Terrassen- und/oder Waschküchenbodenbelägen, sowie deren Ausgangsmaterialien; (x) Estrichen, insbesondere Außen- und/oder Feuchtraumestrichen, sowie deren Ausgangsmischungen und -materialien; (xi) Plattenelementen, insbesondere Fassadenelementen und Fassadenplatten, sowie deren Ausgangsmaterialien; (xii) Dämmelementen, insbesondere Dämmplatten, sowie deren Ausgangsmaterialien; (xiii) Holzbaumaterialien und holzbasierten Baumaterialien, insbesondere Holz- oder holzbasierten Boden-, Decken- und/oder Wandelementen und/oder -paneelen, Sperrholzplatten, OSB-Platten (*Oriented Strand Board*) und Holz-Kunststoff-Verbundwerkstoffen (WPC), sowie deren Ausgangsmaterialien; und (xiv) Metallträgern und Metallsubstraten.

Im Hinblick auf die vorliegende Erfindung hat die Anmelderin in völlig überraschender Weise herausgefunden, dass der Einsatz eines speziellen antimikrobiellen bzw. herbiziden Biopolymers in Bezug auf Baumaterialien bzw. Baustoffe, insbesondere wie zuvor definiert, zu einer erhöhten Bewitterungsbeständigkeit der in Rede stehenden Baumaterialien bzw. Baustoffe führt, und zwar insbesondere im Hinblick auf einen verringerten Befall bzw. Bewuchs mit Mikroorganismen, wie Bakterien, Pilzen, Algen, Moose, Flechten oder dergleichen. Die vorliegende Erfindung geht dabei auch mit dem Vorteil einher, dass es sich bei dem antimikrobiellen bzw. herbiziden Biopolymer um eine naturbasierte Substanz handelt, welche bei gleichzeitig hoher Wirkeffizienz gegenüber Mikroorganismen umweltfreundlich und insbesondere biologisch abbaubar ist und zudem kein übermäßiges toxikologisches Potential aufweist.

Darüber hinaus weist das erfindungsgemäß eingesetzte antimikrobielle bzw. herbizide Biopolymer eine hohe Materialkompatibilität auf, so dass das zugrundeliegende Baumaterial bzw. der diesbezügliche Baustoff in seinen Materialeigenschaften nicht nachhaltig verändert wird. Insbesondere werden auch die bauphysikalischen Eigenschaften, wie z. B. das Wasserdampfdiffusionsvermögen, nicht negativ beeinflusst. Zudem treten bei entsprechender Ausrüstung des Baumaterials bzw. Baustoffs mit dem antimikrobiellen bzw. herbiziden Biopolymer zumindest im Wesentlichen keine farblichen bzw. ästhetisch nachteilig erscheinende Veränderungen oder dergleichen in dem Baumaterial bzw. Baustoff auf. Ein weiterer Vorteil der vorliegenden Erfindung ist zudem auch darin zu sehen, dass aufgrund der hohen Materialkompatibilität bzw. -verträglichkeit des antimikrobiellen bzw. herbiziden Biopolymers eine Vielzahl verschiedener Baumaterialien bzw. Baustoffe mit entsprechender Ausrüstung bereitgestellt werden können. Die erfindungsgemäßen Baumaterialien bzw. Baustoffe zeichnen sich insgesamt über eine erhöhte Langzeit- bzw. Bewitterungsbeständigkeit aus, wobei die Verkeimung bzw. Veralgung bzw. Vermoosung deutlich reduziert ist.

Dementsprechend weist das erfindungsgemäße Baumaterial (Baustoff) antimikrobielle und/oder herbizide Eigenschaften auf, insbesondere infolge des Vorhandenseins bzw. der Ausrüstung mit dem antimikrobiellen bzw. herbiziden Biopolymer.

Der Begriff "Biopolymer", wie er im Rahmen der vorliegenden Erfindung verwendet wird, ist als Chitosan und/oder dessen Salz aufzufassen, wobei das genannte Chitosan ein gewichtsmittleres Molekulargewicht M_{w} im Bereich von 1.500 Da bis 9.499 Da aufweist und wobei es einen Polydispersitätsindex, berechnet als Quotient aus dem gewichtsmittleren Molekulargewicht M_{w} und dem zahlenmittleren Molekulargewicht Mₙ, im Bereich von 1,05 bis 5 aufweist.

Der Begriff "antimikrobiell und/oder herbizid" (z.B. "antimikrobielles und/oder herbizides Biopolymer", "antimikrobielle und/oder herbizide Eigenschaften"), wie er im Rahmen der vorliegenden Erfindung verwendet wird, ist gleichermaßen sehr breit zu verstehen. Insbesondere bezieht sich der in Rede stehende Begriff auf wachstumshemmende, neutralisierende, inaktivierende, unschädlichmachende und/oder abtötende und/oder die Infektiösität und/oder die Pathogenität verringernde Eigenschaften, und zwar insbesondere in Bezug auf Keime, Mikroorganismen bzw. spezielle Lebensformen, wie Bakterien, Viren, Pilze, Algen, Moose, Hefen, Flechten oder dergleichen. Im Allgemeinen handelt es sich bei den diesbezüglichen Keimen, Mikroorganismen bzw. Lebensformen beispielsweise um die Qualität bzw. die Substanz bzw. die Optik von Baumaterialien bzw. Baukörpern bzw. Gegenständen nachteilig beeinflussende bzw. verschlechternde Keime, Mikroorganismen bzw. Lebensformen. Grundsätzlich kann es sich hierbei auch um pathogene bzw. infektiöse Krankheitserreger handeln. Insbesondere umfasst der in Rede stehende Begriff in entsprechender Weise auch biostatische bzw. biozide Eigenschaften in Bezug auf die zugrundeliegenden Keime bzw. Mikroorganismen bzw. Lebensformen.

Die Anmelderin hat in diesem Zusammenhang in völlig überraschender Weise herausgefunden, dass die vorliegend angeführten Biopolymere in ziel- und zweckgerichteter Weise im Hinblick auf ein Baumaterial bzw. in einem Baustoff eingesetzt werden können, wobei auf diese Weise das Baumaterial nach der Erfindung ziel- und zweckgerichtet mit entsprechenden Eigenschaften ausgestattet werden kann, insbesondere einhergehend mit einer Erhöhung der Standzeit bzw. Witterungsbeständigkeit infolge einer geringeren Verkeimung des Baumaterials, wobei in diesem Zusammenhang erfindungsgemäß Chitosan wie vorstehend definiert als antimikrobielles Biopolymer eingesetzt wird.

Was das im Rahmen der vorliegenden Erfindung als antimikrobielles bzw. herbizides Biopolymer eingesetzte Chitosan anbelangt, so handelt es sich hierbei insbesondere um eine naturbasierte Substanz, welche nicht toxisch und zudem biologisch abbaubar ist, was gleichermaßen der Anwendungssicherheit zuträglich ist. Darüber hinaus ist Chitosan im Allgemeinen nicht allergen.

Im Rahmen der erfindungsgemäßen Konzeption kann das erfindungsgemäße Baumaterial zudem auf einfache und sozusagen dem jeweiligen Anwendungsfall angepasste Art und Weise mit dem antimikrobiellen bzw. herbiziden Biopolymer ausgerüstet werden. So kann das antimikrobielle bzw. herbizide Biopolymer in das Baumaterial eingearbeitet sein, beispielsweise durch Zugabe in eine Ausgangsmischung bzw. in die Ausgangsmaterialien des zugrundeliegenden Baustoffs (z. B. einer Putz- oder Mörtelmischung oder dergleichen). Zudem kann das antimikrobielle bzw. herbizide Biopolymer beispielsweise einer anwendungsfertigen Anstrichfarbe bzw. einem diesbezüglichen Lack oder dergleichen zugegeben sein. Darüber hinaus kann das Baumaterial gewissermaßen nachträglich am endfertigen Produkt mit dem antimikrobiellen bzw. herbiziden Biopolymer ausgerüstet werden, beispielsweise durch (nachträgliches) Auftragen auf einen an einem Gebäude befindlichen Putz, einer bereits aufgetragenen Anstrichfarbe oder dergleichen.

In diesem Zusammenhang hat die Anmelderin zudem eine spezielle Zusammensetzung entwickelt, wie sie nachfolgend noch im Detail beschrieben ist, auf deren Basis eine dauerhafte und gleichmäßige Ausrüstung des Baumaterials mit dem antimikrobiellen bzw. herbiziden Biopolymer erfolgen kann.

Wie nachfolgend gleichermaßen noch im Detail angeführt, wird im Rahmen der Ausrüstung des Baumaterials bzw. Baustoffs mit dem antimikrobiellen bzw. herbiziden Biopolymer insbesondere derart vorgegangen, dass hierzu eine vorzugsweise wässrige Zusammensetzung eingesetzt wird, welche Chitosan als antimikrobielles bzw. herbizides Biopolymer aufweist (wobei diese Zusammensetzung beispielsweise in das Baumaterial bzw. deren Ausgangsmischungen bzw. -materialien eingearbeitet oder aber auf ein Baumaterial als solches aufgetragen werden kann, beispielsweise durch Aufstreichen oder dergleichen). In diesem Zusammenhang ist es im Rahmen der vorliegenden Erfindung gleichermaßen völlig überraschend gelungen, die allgemeinen Nachteile von Chitosan im Hinblick auf eine gewisse verringerte Löslichkeit in Wasser zu überkommen. Unter Verwendung der erfindungsgemäßen Zusammensetzung kann somit eine effiziente und dauerhafte Ausrüstung bzw. Ausstattung des Baumaterials nach der Erfindung mit dem antimikrobiellen bzw. herbiziden Biopolymer erfolgen.

Was das erfindungsgemäß als antimikrobielles bzw. herbizides Biopolymer eingesetzte Chitosan (synonym auch als Poliglusam, Poly-D-Glucosamin oder Polyglucosamin bezeichnet) zudem anbelangt, so handelt es sich hierbei insbesondere um ein naturbasiertes Biopolymer bzw. um ein Biopolymer natürlichen Ursprungs, und zwar in Form eines Polyaminosaccharids. Im Allgemeinen kann Chitosan von Chitin abgeleitet werden, wobei Chitin β-1,4-glycosidisch verknüpfte N-Acetylglucosaminreste, insbesondere 2-Acetamido-2-deoxy-β-D-glucopyranose-Reste, aufweist bzw. hieraus besteht. Zur Herstellung von Chitosan wird Chitin zumindest teilweise deacetyliert, so dass das resultierende Chitosan-Molekül 2-Amino-2-desoxy-β-D-glucopyranose-Einheiten bzw. Glucosamin-Einheiten aufweist. In diesem Zusammenhang kann die Deacetylierung von Chitin zur Ausbildung von Chitosan erheblich variieren, wobei die Deacetylierung vollständig oder teilweise erfolgen kann. Hierbei kann beispielsweise eine Verteilung stark deacetylierter Bereiche und wenig deacetylierter Bereiche oder eine homogene Deacetylierungsverteilung im Molekül resultieren. Der Grad der Acetylierung bestimmt dabei neben der Kettenlänge und der Konformation die physikalischen und chemischen Eigenschaften des resultierenden Chitosanmoleküls. Im Allgemeinen ist der Übergang vom Chitin zum Chitosan, welches weniger Acetylgruppen als Chitin aufweist, fließend. Für weitergehende Einzelheiten zu Chitosan bzw. Chitin kann zudem verwiesen werden auf RÖMPP Chemielexikon, 10. Auflage, Band 1, 1996, Georg Thieme Verlag, Stuttgart/New York, Seite 704, Stichwort: "Chitin", mit den dortigen Ausführungen zu Chitosan sowie auf die dort referierte Literatur, wobei der gesamte Offenbarungsgehalt der vorgenannten Literatur hiermit durch Bezugnahme vollumfänglich eingeschlossen ist.

Das Baumaterial kann das antimikrobielle bzw. herbizide Biopolymer, das Chitosan, in weiten Mengenbereichen enthalten:
- So kann das Baumaterial das antimikrobielle und/oder herbizide Biopolymer in einer Menge von mindestens 0,00001 Gew.-%, insbesondere mindestens 0,0001 Gew.-%, vorzugsweise mindestens 0,001 Gew.-%, bevorzugt mindestens 0,01 Gew.-%, bezogen auf das Baumaterial, enthalten.
- Zudem kann das Baumaterial das antimikrobielle und/oder herbizide Biopolymer in einer Menge von höchstens 20 Gew.-%, insbesondere höchstens 10 Gew.-%, vorzugsweise höchstens 5 Gew.-%, bevorzugt höchstens 3 Gew.-%, bezogen auf das Bauteil, enthalten.
- In diesem Zusammenhang kann es erfindungsgemäß somit vorgesehen sein, dass das Baumaterial das antimikrobielle und/oder herbizide Biopolymer in einer Menge im Bereich von 0,00001 Gew.-% bis 20 Gew.-%, insbesondere im Bereich von 0,0001 Gew.-% bis 15 Gew.-%, vorzugsweise im Bereich von 0,001 Gew.-% bis 10 Gew.-%, bevorzugt im Bereich von 0,01 Gew.-% bis 3 Gew.-%, bezogen auf das Baumaterial, enthält.
- Erfindungsgemäß kann es zudem vorgesehen sein, dass das Baumaterial das antimikrobielle und/oder herbizide Biopolymer in einer Menge von mindestens 0,01 g/m², insbesondere mindestens 0,02 g/m², vorzugsweise mindestens 0,05 g/m², bevorzugt mindestens 0,1 g/m², bezogen auf die Oberfläche des Baumaterials, enthält, insbesondere wobei das antimikrobielle und/oder herbizide Biopolymer in Form einer Beschichtung oder Imprägnierung vorliegt.
- Diesbezüglich kann das Bauteil das antimikrobielle und/oder herbizide Biopolymer in einer Menge von höchstens 200 g/m², insbesondere höchstens 100 g/m², vorzugsweise höchstens 25 g/m², bevorzugt höchstens 10 g/m², bezogen auf die Oberfläche des Baumaterials, enthalten, insbesondere wobei das antimikrobielle und/oder herbizide Biopolymer in Form einer Beschichtung oder Imprägnierung vorliegt.
- In diesem Zusammenhang kann es somit vorgesehen sein, dass das Baumaterial das antimikrobielle und/oder herbizide Biopolymer in einer Menge im Bereich von 0,01 g/m² bis 200 g/m², insbesondere im Bereich von 0,02 g/m² bis 100 g/m², vorzugsweise im Bereich von 0,05 g/m² bis 25 g/m², bevorzugt im Bereich von 0,1 g/m² bis 10 g/m², bezogen auf die Oberfläche des Baumaterials, enthält, insbesondere wobei das antimikrobielle und/oder herbizide Biopolymer in Form einer Beschichtung oder Imprägnierung vorliegt.

Insbesondere im Hinblick auf die antimikrobielle bzw. herbizide Wirksamkeit und die definierte Ausrüstung des Baumaterials mit dem antimikrobiellen bzw. herbiziden Biopolymer hat es sich im Rahmen der vorliegenden Erfindung als vorteilhaft erwiesen, dass das antimikrobielle bzw. herbizide Biopolymer ein definiertes Molekulargewicht (Molmasse) aufweist. Insbesondere wird auf Basis der nachfolgend angeführten Molmassen eine besonders hohe antimikrobielle bzw. herbizide Wirksamkeit bzw. eine hohe Bioverfügbarkeit des antimikrobiellen bzw. herbiziden Biopolymers in Bezug auf das Baumaterial bzw. eine hohe Stabilität und Homogenität der zugrundeliegenden Ausrüstung gewährleistet.

Was die Bestimmung des Molekulargewichts des erfindungsgemäß eingesetzten antimikrobiellen bzw. herbiziden Biopolymers anbelangt, so kann das Molekulargewicht, insbesondere das gewichtsmittlere Molekulargewicht M_{w} bzw. das zahlenmittlere Molekulargewicht Mₙ bzw. der Polydispersitätsindex (PDI) insbesondere mittels Gelpermeationschromatographie (GPC) bzw. Größenausschlusschromatographie (SEC, Size Exclusion Chromatography) bzw. bevorzugt auf Grundlage der DIN 55672-3:2016-03 bestimmt werden.

Wie zuvor angeführt, hat die Anmelderin in überraschender Weise gefunden, dass die Verwendung eines speziellen antimikrobiellen bzw. herbiziden Biopolymers mit einem relativ kleinen Molekulargewicht, wie zuvor angeführt, zu verbesserten Eigenschaften hinsichtlich der antimikrobiellen bzw. herbiziden Ausrüstung bzw. Ausstattung bzw. hinsichtlich der antimikrobiellen bzw. herbiziden Eigenschaften des Baumaterials nach der Erfindung führt, so dass die Verwendung eines antimikrobiellen bzw. herbiziden Biopolymers mit relativ geringem Molekulargewicht gegenüber der Verwendung eines antimikrobiellen bzw. herbiziden Biopolymers mit einem relativ großen Molekulargewicht, insbesondere wie gleichermaßen zuvor definiert, erfindungsgemäß grundsätzlich bevorzugt ist.

Erfindungsgemäß kann es zudem vorgesehen sein, dass das antimikrobielle Biopolymer acetylierte funktionelle Gruppen, insbesondere acetylierte Aminogruppen, aufweist. Hierdurch können die Moleküleigenschaften weiterführend eingestellt bzw. maßgeschneidert werden, und zwar insbesondere auch im Hinblick auf die Interaktionseigenschaften gegenüber dem Additiv, die Löslichkeits- bzw. Dispersionseigenschaften in dem Trägermedium und/oder die weiterführende Ausbildung antimikrobieller Eigenschaften. Dabei führen, ohne sich auf diese Theorie beschränken oder berufen zu wollen, eher geringere Acetylierungsgrade tendenziell zu einer höheren Löslichkeit bzw. Dispergierfähigkeit des Moleküls als solches und eher größere Acetylierungsgrade tendenziell zu einer erhöhten antimikrobiellen Wirksamkeit (insbesondere durch eine erhöhte Interaktionsfähigkeit mit zu neutralisierenden Keimen) und/oder zu einer höheren Wechselwirkung bzw. Interaktion mit dem Additiv (was wiederum die Einarbeitbarkeit in das Trägermedium verbessern kann). Insbesondere vor dem Hintergrund dieses überraschend gefundenen Zusammenhangs können insbesondere die nachfolgenden Acetylierungsgrade für das Chitosan ausgewählt werden:
Erfindungsgemäß kann es dabei insbesondere vorgesehen sein, dass das antimikrobielle bzw. herbizide Biopolymer einen Acetylierungsgrad von mindestens 2,1 %, insbesondere mindestens 2,5 %, vorzugsweise mindestens 3 %, bevorzugt mindestens 4 %, besonders bevorzugt mindestens 5 %, bezogen auf die acetylierbaren funktionellen Gruppen, insbesondere Aminogruppen, des Biopolymers aufweist. Insbesondere kann das antimikrobielle bzw. herbizide Biopolymer einen Acetylierungsgrad von höchstens 40 %, insbesondere höchstens 30 %, vorzugsweise höchstens 25 %, bevorzugt höchstens 20 %, besonders bevorzugt höchstens 15 %, bezogen auf die acetylierbaren funktionellen Gruppen, insbesondere Aminogruppen, des Biopolymers aufweisen.

Folglich kann es erfindungsgemäß vorgesehen sein, dass das antimikrobielle bzw. herbizide Biopolymer einen Acetylierungsgrad im Bereich von 2,1 % bis 40 %, insbesondere im Bereich von 2,5 % bis 30 %, vorzugsweise im Bereich von 3 % bis 25 %, bevorzugt im Bereich von 4 % bis 20 %, besonders bevorzugt im Bereich von 5 % bis 15 %, bezogen auf die acetylierbaren funktionellen Gruppen, insbesondere Aminogruppen, des Biopolymers, aufweist.

Folglich kann es erfindungsgemäß vorgesehen sein, dass 2,1 % bis 40 %, insbesondere 2,5 % bis 30 %, vorzugsweise 3 % bis 25 %, bevorzugt 4 % bis 20 %, besonders bevorzugt 5 % bis 15 %, der acetylierbaren funktionellen Gruppen, insbesondere Aminogruppen, des Biopolymers, acetyliert sind.

Das erfindungsgemäß eingesetzte antimikrobielle bzw. herbizide Biopolymer, mit welchem das Baumaterial ausgerüstet ist, zeichnet sich insbesondere durch die nachfolgend beschriebenen antimikrobiellen Eigenschaften aus:
Insbesondere weist das antimikrobielle bzw. herbizide Biopolymer eine Eigenschaft, ausgewählt aus der Gruppe von (i) antibakteriellen Eigenschaften, insbesondere bakteriziden und bakteriostatischen Eigenschaften; (ii) antimykotischen (antifungalen) Eigenschaften, insbesondere fungistatischen und fungiziden Eigenschaften; (iii) herbiziden und herbistatischen Eigenschaften; (iv) antialgischen Eigenschaften, insbesondere algistatischen und algiziden Eigenschaften; (v) antiviralen Eigenschaften, insbesondere viruziden und virustatischen Eigenschaften; und (vi) deren Kombinationen, auf.

Zudem kann das antimikrobielle bzw. herbizide Biopolymer eine Eigenschaft, ausgewählt aus der Gruppe von (i) antibakteriellen Eigenschaften, insbesondere bakteriziden und bakteriostatischen Eigenschaften; (ii) antimykotischen (antifungalen) Eigenschaften, insbesondere fungistatischen und fungiziden Eigenschaften; (iii) herbiziden und herbistatischen Eigenschaften; (iv) antialgischen Eigenschaften, insbesondere algistatischen und algiziden Eigenschaften; und (v) deren Kombinationen, aufweisen.

Im Allgemeinen kann es im Rahmen der vorliegenden Erfindung vorgesehen sein, dass das antimikrobielle bzw. herbizide Biopolymer das Wachstum und/oder die Aktivität von Bakterien, Pilzen, Viren, Algen, Moosen und/oder Flechten hemmende und/oder verhindernde Eigenschaften aufweist.

Mit anderen Worten kann es erfindungsgemäß vorgesehen sein, dass das Baumaterial bakterienhemmend und/oder pilzhemmend und/oder virenhemmend und/oder algenhemmend und/oder mooshemmend und/oder flechtenhemmend ausgebildet ist.

Erfindungsgemäß kann es insbesondere vorgesehen sein, dass das Baumaterial mit einer bakterienhemmenden und/oder pilzhemmenden und/oder virenhemmenden und/oder algenhemmenden und/oder flechtenhemmenden Ausrüstung versehen ist, insbesondere auf Basis des antimikrobiellen und/oder herbiziden Biopolymers.

Insbesondere kann das Baumaterial eine Beschichtung gegen Bakterien-, Moos-, Flechten, Algen- und/oder Pilzbefall, insbesondere gegen Algen- und Pilzbefall, aufweisen, insbesondere auf Basis des antimikrobiellen und/oder herbiziden Biopolymers.

Auf dieser Basis können somit die antimikrobiellen bzw. herbiziden Eigenschaften des Baumaterials nach der Erfindung gezielt eingestellt bzw. erhöht werden.

Im Allgemeinen kann es im Rahmen der vorliegenden Erfindung vorgesehen sein, dass das antimikrobielle bzw. herbizide Biopolymer in das Baumaterial eingearbeitet, insbesondere inkorporiert, ist. Diesbezüglich kann es erfindungsgemäß vorgesehen sein, dass das antimikrobielle bzw. herbizide Biopolymer bei der Herstellung des Baumaterials in das Baumaterial eingearbeitet, insbesondere inkorporiert, ist.

Beispielsweise kann das antimikrobielle bzw. herbizide Biopolymer, wie zuvor angeführt, in entsprechende Ausgangsmischungen bzw. -materialien beispielsweise von Putzen, Mörteln, Zementen oder dergleichen eingearbeitet sein.

Zudem kann das antimikrobielle bzw. herbizide Biopolymer in anwendungs- bzw. auftragsfertigen Anstrichfarben bzw. Lacken eingearbeitet bzw. inkorporiert sein.

Erfindungsgemäß kann es vorgesehen sein, dass das Baumaterial das antimikrobielle bzw. herbizide Biopolymer in zumindest im Wesentlichen homogener Verteilung und/oder über zumindest im Wesentlichen dem gesamten Körper und/oder über das zumindest im Wesentlichen vollständige Volumen des Baumaterials insbesondere homogen verteilt enthält.

Erfindungsgemäß kann es aber auch vorgesehen sein, dass das antimikrobielle bzw. herbizide Biopolymer auf das Baumaterial aufgebracht ist, insbesondere in Form einer Beschichtung und/oder Imprägnierung. In diesem Zusammenhang kann das Baumaterial mit dem antimikrobiellen bzw. herbiziden Biopolymer beschichtet und/oder imprägniert sein. Erfindungsgemäß kann es zudem vorgesehen sein, dass das antimikrobielle und/oder herbizide Biopolymer nachträglich auf das insbesondere fertig vorliegende Baumaterial aufgebracht ist, insbesondere in Form einer Beschichtung oder Imprägnierung.

Mit anderen Worten kann das antimikrobielle bzw. herbizide Biopolymer auf das bereits hergestellte bzw. fertiggestellte bzw. an ein Gebäude angebrachtes bzw. als Bestandteil eines Gebäudes vorliegende Baumaterial aufgebracht bzw. aufgetragen sein.

Im Allgemeinen kann die Ausrüstung des Baumaterials mit dem antimikrobiellen und/oder herbiziden Biopolymer mittels Auftragen, Aufsprühen, Beschichten, Befilmen, Einbringen, Einmischen, Eintauchen, Einwaschen und/oder Imprägnieren oder dergleichen erfolgt sein.

Erfindungsgemäß kann es insbesondere vorgesehen sein, dass das Baumaterial zumindest im Wesentlichen vollständig mit dem antimikrobiellen und/oder herbiziden Biopolymer ausgerüstet ist. Wie zuvor angeführt, kann es in diesem Zusammenhang vorgesehen sein, dass das Baumaterial das in Rede stehende Biopolymer zumindest im Wesentlichen über den gesamten Körper bzw. zumindest im Wesentlichen über das gesamte Volumen des Baumaterials verteilt aufweist.

Erfindungsgemäß ist es zudem möglich, dass das Baumaterial an dessen Oberfläche, insbesondere an der im Anwendungszustand dem Witterungseinfluss und/oder der Feuchtigkeit ausgesetzten und/oder zugewandten Oberfläche, vorzugsweise zumindest im Wesentlichen vollflächig, mit dem antimikrobiellen und/oder herbiziden Biopolymer ausgerüstet, insbesondere beschichtet und/oder imprägniert, ist.

Erfindungsgemäß kann es zudem vorgesehen sein, dass das antimikrobielle bzw. herbizide Biopolymer auf die Oberfläche des Baumaterials in Form eines Films und/oder einer Schicht, insbesondere als Monofilm und/oder Monoschicht, aufgebracht ist. Erfindungsgemäß kann es somit vorgesehen sein, dass das antimikrobielle bzw. herbizide Biopolymer auf dem Baumaterial in Form eines Films und/oder einer Schicht, insbesondere als Monofilm und/oder Monoschicht, vorliegt.

Erfindungsgemäß kann es weiterhin vorgesehen sein, dass das Baumaterial unter Verwendung der erfindungsgemäßen Zusammensetzung, wie nachfolgend definiert, mit dem antimikrobiellen bzw. herbiziden Biopolymer ausgerüstet ist. Hierzu kann auch auf nachfolgende Ausführungen zu der Zusammensetzung nach der Erfindung verwiesen werden. Hierdurch wird eine besonders gute Ausrüstung des Baumaterials mit dem in Rede stehenden Biopolymer erhalten.

Insbesondere in diesem Zusammenhang ist es erfindungsgemäss vorgesehen, dass das Baumaterial zudem mindestens ein Additiv aufweist bzw. hiermit ausgerüstet ist. Das Additiv dient insbesondere der Erhöhung der (Bio-) Verfügbarkeit des Chitosans bzw. der homogenen Verteilung bzw. einer verbesserten Einlagerung bzw. Anlagerung des Biopolymers in bzw. auf dem Baumaterial.

Erfindungsgemäß ist das Additiv ausgewählt aus der Gruppe von (i) Proteinen und Proteinhydrolysaten, ausgewählt aus der Gruppe von Molke, Molkeproteinen, Keratinhydrolysat, Weizenproteinhydrolysat, Kollagenhydrolysat und Gelatine; (ii) Hydroxycarbonsäuren, ausgewählt aus der Gruppe von Milchsäure, Zitronensäure, Apfelsäure, Weinsäure, Mandelsäure und Salicylsäure; und (iii) Ascorbinsäure; sowie deren Mischungen und Kombinationen.

Im Allgemeinen kommen im Hinblick auf das erfindungsgemäße Baumaterial für das Additiv die folgenden Mengen in Betracht:
- Im Allgemeinen kann das Baumaterial das Additiv in einer Menge im Bereich von 0,00001 Gew.-% bis 5 Gew.-%, insbesondere im Bereich von 0,0001 Gew.-% bis 3 Gew.-%, vorzugsweise im Bereich von 0,0005 Gew.-% bis 1 Gew.-%, bezogen auf das Baumaterial, enthalten.
- Zudem kann das Baumaterial das Additiv in einer Menge im Bereich von 0,00001 g/m² bis 15 g/m², insbesondere im Bereich von 0,0001 g/m² bis 10 g/m², vorzugsweise im Bereich von 0,001 g/m² bis 5 g/m², bezogen auf bezogen auf die Oberfläche des Baumaterials, enthalten, insbesondere wobei das antimikrobielle und/oder herbizide Biopolymer in Form einer Beschichtung oder Imprägnierung vorliegt.
- Zudem kann das Baumaterial das (a) Biopolymer und das (b) Additiv in einem gewichtsbezogenem Verhältnis von (a) Biopolymer zu (b) Additiv im Bereich von 1:1 bis 1.000: 1, insbesondere im Bereich von 2:1 bis 500:1, vorzugsweise im Bereich von 10 : 1 bis 2500 : 1, aufweisen.

Erfindungsgemäß kann es darüber hinaus auch vorgesehen sein, dass das Baumaterial mehrwertige Kationen und/oder mehrwertige Metallionen, insbesondere zweiwertige Kationen und/oder zweiwertige Metallionen, vorzugsweise Erdalkalimetallionen, bevorzugt Calciumionen und/oder Magnesiumionen, aufweist bzw. hiermit ausgerüstet ist. In diesem Zusammenhang kann es erfindungsgemäß vorgesehen sein, dass die mehrwertigen Kationen bzw. die mehrwertigen Metallionen, insbesondere die zweiwertigen Kationen bzw. die zweiwertigen Metallionenen, vorzugsweise die Erdalkalimetallionen, bevorzugt die Calciumionen bzw. die Magnesiumionen, insbesondere unabhängig voneinander, in Form von Salzen, vorzugsweise in Form von anorganischen oder organischen Salzen, bevorzugt in Form von Carbonaten, Hydrogencarbonaten, Hydroxiden, Halogeniden und/oder halogenidhaltigen Salzen, eingesetzt sind oder vorliegen.

Im Rahmen der vorliegenden Erfindung wird somit insgesamt ein Baumaterial bzw. ein Baustoff bereitgestellt, welcher aufgrund der antimikrobiellen bzw. herbiziden Ausrüstung auf Basis eines speziellen Biopolymers eine verbesserte Bewitterungsbeständigkeit, einhergehend mit einem verringerten Befall an Mikroorganismen oder dergleichen, aufweist. Gleichermaßen können auch verbesserte Antifouling-Eigenschaften bereitgestellt werden. Insbesondere können auch verbesserte Korrosionsschutzeigenschaften und somit eine erhöhte Korrosionsbeständigkeit vorliegen. Weiterhin kann die Kompatibilität zu anderen Materialien erhöht werden, beispielsweise was das Aufbringen von Farbe oder dergleichen anbelangt. Zudem können sich die erfindungsgemäßen Baustoffe bzw. Baumaterialien durch verbesserte Umwelteigenschaften auszeichnen.

Zu weiteren Ausführungen zu dem erfindungsgemäßen Baumaterial gemäß dem vorliegenden Aspekt kann auch auf die nachfolgend angeführten Aspekte der vorliegenden Erfindung verwiesen werden, welche entsprechend gelten.

Die vorliegende Erfindung betrifft weiterhin - gemäß einem **weiteren** Aspekt der vorliegenden Erfindung - auch die Verwendung eines antimikrobiellen bzw. herbiziden Biopolymers, insbesondere eines antimikrobiellen und/oder herbiziden Biopolymers mit Proteinaffinität, ausgewählt aus Chitosan und/oder dessen Salz,
wobei das antimikrobielle und/oder herbizide Biopolymer ein gewichtsmittleres Molekulargewicht M_{w} im Bereich von 1.500 Da bis 9.499 Da aufweist und wobei das antimikrobielle und/oder herbizide Biopolymer einen Polydispersitätsindex, berechnet als Quotient aus gewichtsmittlerem Molekulargewicht M_{w} und zahlenmittlerem Molekulargewicht Mₙ, im Bereich von 1,05 bis 5 aufweist und
wobei das antimikrobielle und/oder herbizide Biopolymer gemeinsam mit mindestens einem Additiv verwendet wird, wobei das Additiv ausgewählt ist aus der Gruppe von (i) Proteinen und Proteinhydrolysaten, ausgewählt aus der Gruppe von Molke, Molkeproteinen, Keratinhydrolysat, Weizenproteinhydrolysat, Kollagenhydrolysat und Gelatine; (ii) Hydroxycarbonsäuren, ausgewählt aus der Gruppe von Milchsäure, Zitronensäure, Apfelsäure, Weinsäure, Mandelsäure und Salicylsäure; und (iii) Ascorbinsäure; sowie deren Mischungen und Kombinationen,
zur Ausrüstung bzw. zum Erhalt eines Baumaterials für den Gebäudebau und/oder für Gebäude, vorzugsweise für den Außenbereich und/oder Feuchtraumbereich, insbesondere wie zuvor definiert, mit antimikrobiellen und/oder herbiziden Eigenschaften; oder
zur Verringerung der Verkeimung eines Baumaterials für den Gebäudebau und/oder für Gebäude, vorzugsweise für den Außenbereich und/oder Feuchtraumbereich, insbesondere wie zuvor definiert.

Auch im Hinblick auf die erfindungsgemäße Verwendung gemäß dem vorliegenden Aspekt kann das antimikrobielle bzw. herbizide Biopolymer acetylierte funktionelle Gruppen, insbesondere acetylierte Aminogruppen, aufweisen.

Diesbezüglich kann es erfindungsgemäß vorgesehen sein, dass das antimikrobielle bzw. herbizide Biopolymer einen Acetylierungsgrad von mindestens 2,1 %, insbesondere mindestens 2,5 %, vorzugsweise mindestens 3 %, bevorzugt mindestens 4 %, besonders bevorzugt mindestens 5 %, bezogen auf die acetylierbaren funktionellen Gruppen, insbesondere Aminogruppen, des Biopolymers aufweist. Insbesondere kann das antimikrobielle bzw. herbizide Biopolymer einen Acetylierungsgrad von höchstens 40 %, insbesondere höchstens 30 %, vorzugsweise höchstens 25 %, bevorzugt höchstens 20 %, besonders bevorzugt höchstens 15 %, bezogen auf die acetylierbaren funktionellen Gruppen, insbesondere Aminogruppen, des Biopolymers, aufweisen. Folglich kann es erfindungsgemäß vorgesehen sein, dass das antimikrobielle bzw. herbizide Biopolymer einen Acetylierungsgrad im Bereich von 2,1 % bis 40 %, insbesondere im Bereich von 2,5 % bis 30 %, vorzugsweise im Bereich von 3 % bis 25 %, bevorzugt im Bereich von 4 % bis 20 %, besonders bevorzugt im Bereich von 5 % bis 15 %, bezogen auf die acetylierbaren funktionellen Gruppen, insbesondere Aminogruppen, des Biopolymers, aufweist.

Im Rahmen der erfindungsgemäßen Verwendung kann das antimikrobielle bzw. herbizide Biopolymer eine Eigenschaft, ausgewählt aus der Gruppe von (i) antibakteriellen Eigenschaften, insbesondere bakteriziden und bakteriostatischen Eigenschaften; (ii) antimykotischen (antifungalen) Eigenschaften, insbesondere fungistatischen und fungiziden Eigenschaften; (iii) herbiziden und herbistatischen Eigenschaften; (iv) antialgischen Eigenschaften, insbesondere algistatischen und algiziden Eigenschaften; (v) antiviralen Eigenschaften, insbesondere viruziden und virustatischen Eigenschaften; und (vi) deren Kombinationen, aufweisen. Insbesondere kann das antimikrobielle und/oder herbizide Biopolymer eine Eigenschaft, ausgewählt aus der Gruppe von (i) antibakteriellen Eigenschaften, insbesondere bakteriziden und bakteriostatischen Eigenschaften; (ii) antimykotischen (antifungalen) Eigenschaften, insbesondere fungistatischen und fungiziden Eigenschaften; (iii) herbiziden und herbistatischen Eigenschaften; (iv) antialgischen Eigenschaften, insbesondere algistatischen und algiziden Eigenschaften; und (v) deren Kombinationen, aufweisen. Zudem kann das antimikrobielle bzw. herbizide Biopolymer das Wachstum und/oder die Aktivität von Bakterien, Pilzen, Viren, Algen, Moosen und/oder Flechten hemmende und/oder verhindernde Eigenschaften aufweisen.

Im Rahmen der erfindungsgemäßen Verwendung ist es zudem anspruchsgemäss vorgesehen, dass das antimikrobielle bzw. herbizide Biopolymer gemeinsam mit mindestens einem Additiv verwendet wird.

In diesem Zusammenhang ist das Additiv ausgewählt aus der Gruppe von (i) Proteinen und Proteinhydrolysaten, ausgewählt aus der Gruppe von Molke, Molkeproteinen, Keratinhydrolysat, Weizenproteinhydrolysat, Kollagenhydrolysat und Gelatine; (ii) Hydroxycarbonsäuren, ausgewählt aus der Gruppe von Milchsäure, Zitronensäure, Apfelsäure, Weinsäure, Mandelsäure und Salicylsäure; und (iii) Ascorbinsäure; sowie deren Mischungen und Kombinationen.

Erfindungsgemäß kann es insbesondere vorgesehen sein, dass das antimikrobielle und/oder herbizide Biopolymer gemeinsam mit mehrwertigen Kationen und/oder mehrwertigen Metallionen, insbesondere zweiwertigen Kationen und/oder zweiwertigen Metallionen, vorzugsweise Erdalkalimetallionen, bevorzugt Calciumionen und/oder Magnesiumionen, verwendet bzw. eingesetzt wird. Hierzu können die mehrwertigen Kationen und/oder die mehrwertigen Metallionen, insbesondere die zweiwertigen Kationen und/oder die zweiwertigen Metallionenen, vorzugsweise die Erdalkalimetallionen, bevorzugt die Calciumionen und/oder die Magnesiumionen, insbesondere unabhängig voneinander, in Form von Salzen, vorzugsweise in Form von anorganischen oder organischen Salzen, bevorzugt in Form von Carbonaten, Hydrogencarbonaten, Hydroxiden, Halogeniden und/oder halogenidhaltigen Salzen, eingesetzt werden oder vorliegen.

Im Hinblick auf die erfindungsgemäße Verwendung kann es zudem vorgesehen sein, dass das antimikrobielle bzw. herbizide Biopolymer auf Basis einer Zusammensetzung, wie nachfolgend definiert, verwendet wird. Somit kann zur Ausrüstung bzw. zum Erhalt entsprechender Baumaterialien mit dem antimikrobiellen bzw. herbiziden Biopolymer die erfindungsgemäße Zusammensetzung eingesetzt werden.

Für weitere Einzelheiten zu der erfindungsgemäßen Verwendung gemäß diesem Aspekt der vorliegenden Erfindung kann auch auf die Ausführungen zu den übrigen Erfindungsaspekten verwiesen werden, welche in Bezug auf die erfindungsgemäße Verwendung entsprechend gelten.

Gegenstand der vorliegenden Erfindung - gemäß einem **weiteren** Aspekt der vorliegenden Erfindung - ist zudem die erfindungsgemäße Zusammensetzung, insbesondere wässrige Zusammensetzung, vorzugsweise in Form einer Lösung oder Dispersion, bevorzugt in Form einer wässrig ausgebildeten und/oder insbesondere wässrig basierten Lösung oder Dispersion, zur Ausrüstung bzw. zum Erhalt eines Baumaterials, insbesondere wie zuvor definiert, mit mindestens einem antimikrobiellen und/oder herbiziden Biopolymer,
wobei die Zusammensetzung die folgenden Inhaltsstoffe enthält:
   (a) mindestens ein antimikrobielles und/oder herbizides Biopolymer, insbesondere mindestens ein antimikrobielles und/oder herbizides Biopolymer mit Proteinaffinität, ausgewählt aus Chitosan und/oder dessen Salz, wobei das antimikrobielle und/oder herbizide Biopolymer ein gewichtsmittleres Molekulargewicht M_{w} im Bereich von 1.500 Da bis 9.499 Da aufweist und wobei das antimikrobielle und/oder herbizide Biopolymer einen Polydispersitätsindex, berechnet als Quotient aus gewichtsmittlerem Molekulargewicht M_{w} und zahlenmittlerem Molekulargewicht Mₙ, im Bereich von 1,05 bis 5 aufweist;
   (b) mindestens ein Additiv, insbesondere mindestens ein Additiv zur Verbesserung der Verteilung und/oder der Homogenisierung des (a) Biopolymers, vorzugsweise mindestens ein Additiv zur Verbesserung der Löslichkeit und/oder der Dispergierbarkeit des (a) Biopolymers,
      wobei das Additiv ausgewählt ist aus der Gruppe von Lösungsvermittlern, Dispergiermitteln (Dispergatoren) und Komplexbildnern sowie deren Mischungen und Kombinationen, insbesondere ausgewählt aus der Gruppe von Lösungsvermittlern, Dispergiermitteln sowie deren Mischungen und Kombinationen, wobei das (b) Additiv ausgewählt ist aus der Gruppe von (i) Proteinen und Proteinhydrolysaten, ausgewählt aus der Gruppe von Molke, Molkeproteinen, Keratinhydrolysat, Weizenproteinhydrolysat, Kollagenhydrolysat und Gelatine; (ii) Hydroxycarbonsäuren, ausgewählt aus der Gruppe von Milchsäure, Zitronensäure, Apfelsäure, Weinsäure, Mandelsäure und Salicylsäure; und (iii) Ascorbinsäure; sowie deren Mischungen und Kombinationen; und
   (c) mindestens ein Trägermedium, insbesondere mindestens ein bei Raumtemperatur (20 °C) und Umgebungsdruck (1.013,25 hPa) flüssiges Trägermedium, vorzugsweise in Form eines Lösemittels (Lösungsmediums) oder Dispersionsmediums (Dispersionmittels), vorzugsweise Wasser,
wobei die Zusammensetzung einen pH-Wert von höchstens 7 aufweist.

Was die erfindungsgemäße Zusammensetzung anbelangt, so hat die Anmelderin in überraschender Weise gefunden, dass sich eine derartige Zusammensetzung in hohem Maße zur Ausrüstung bzw. zum Erhalt der Baumaterialien nach der Erfindung mit dem antimikrobiellen bzw. herbiziden Biopolymer eignet, wobei unter Einsatz der erfindungsgemäßen Zusammensetzung auch eine gleichmäßige und dauerhafte Ausrüstung des zugrundeliegenden Baumaterials gewährleistet ist.

Durch den ziel- und zweckgerichteten Einsatz eines Additivs, wie vorliegend definiert, werden zudem Zusammensetzungen mit einer homogenen Verteilung des antimikrobiellen bzw. herbiziden Biopolymers bei gleichzeitig hoher (Lager-) Stabilität erhalten. Durch die Interaktion zwischen antimikrobiellem bzw. herbiziden Biopolymer und Additiv kann dabei insbesondere - ohne sich auf diese Theorie beschränken oder sich hierauf berufen zu wollen - die Löslichkeit bzw. Dispersionsfähigkeit des antimikrobiellen bzw. herbiziden Biopolymers in dem Trägermedium, insbesondere Wasser, verbessert werden. Dies führt auch zu einer verbesserten (Bio-)Verfügbarkeit des antimikrobiellen bzw. herbiziden Biopolymers bzw. Chitosans im Hinblick auf die Ausrüstung insbesondere von Baumaterialien, einhergehend mit einer Wirksamkeitssteigerung in Bezug auf die durch das antimikrobielle bzw. herbizide Biopolymer bereitgestellten antimikrobiellen Eigenschaften.

Auf Basis der erfindungsgemäßen Konzeption kann zudem auch bei relativ hohen (d. h. insbesondere pH-Werten im neutralen Bereich bzw. geringfügig niedriger als pH 7) eine gute Inkorporierung auf Basis der Ausbildung einer stabilen Lösung bzw. Dispersion des antimikrobiellen bzw. herbiziden Biopolymers in dem Trägermedium bzw. in der Zusammensetzung gewährleistet werden, einhergehend mit entsprechenden Vorteilen hinsichtlich der Anwendbarkeit, Wirkeffizienz und Stabilität der Zusammensetzung.

Ohne sich auf diese Theorie beschränken oder berufen zu wollen, wird die Erhöhung der Stabilität der Zusammensetzung nach der Erfindung bzw. die verbesserten Löslichkeits- bzw. Dispersionseigenschaften des antimikrobiellen bzw. herbiziden Biopolymers in der Zusammensetzung durch eine gezielte Interaktion, beispielsweise auf Basis von Komplexbildungsvorgängen oder dergleichen, des Additivs mit dem antimikrobiellen bzw. herbiziden Biopolymer hervorgerufen bzw. gewährleistet.

Erfindungsgemäß weist die Zusammensetzung nach der Erfindung im Allgemeinen einen pH-Wert von höchstens 7, insbesondere höchstens 6,75, vorzugsweise höchstens 6,5, bevorzugt höchstens 6,25, besonders bevorzugt höchstens 6, ganz besonders höchstens 5,4, weiter bevorzugt höchstens 4,9 auf. Zudem kann es erfindungsgemäß vorgesehen sein, dass die Zusammensetzung einen pH-Wert im Bereich von 2 bis 7, insbesondere im Bereich von 2,5 bis 6,75, vorzugsweise im Bereich von 3 bis 6,5, bevorzugt im Bereich von 3,5 bis 6,25, besonders bevorzugt im Bereich von 4 bis 6, ganz besonders bevorzugt im Bereich von 4 bis 5,4, weiter bevorzugt im Bereich von 4 bis 4,9, aufweist. Insbesondere kann durch die Einstellung bzw. Vorgabe kleinerer pH-Werte die Inkorporation des antimikrobiellen bzw. herbiziden Biopolymers nochmals verbessert werden. Die Einstellung des pH-Wertes der zugrundeliegenden Zusammensetzung kann in dem Fachmann geläufiger Weise erfolgen, beispielsweise unter Einsatz entsprechender Säuren oder Basen bzw. Puffersysteme.

Was das (a) antimikrobielle bzw. herbizide Biopolymer anbelangt, so können die diesbezüglichen Mengen in der Zusammensetzung nach der Erfindung in weiten Bereichen variieren bzw. eingestellt werden. Erfindungsgemäß ist es jedoch im Allgemeinen vorgesehen, dass die Zusammensetzung das antimikrobielle bzw. herbizide Biopolymer in einer Menge von höchstens 25 Gew.-%, insbesondere höchstens 20 Gew.-%, vorzugsweise höchstens 15 Gew.-%, bevorzugt höchstens 10 Gew.-%, besonders bevorzugt höchstens 6 Gew.-%, bezogen auf die Zusammensetzung, enthält. Hierdurch wird bei entsprechend hoher Menge eine nach wie vor gute Inkorporation bzw. Einarbeitung des antimikrobiellen bzw. herbiziden Biopolymers gewährleistet.

Zudem kann die Zusammensetzung nach der Erfindung das (a) antimikrobielle bzw. herbizide Biopolymer in einer Menge von mindestens 0,01 Gew.-%, insbesondere mindestens 0,05 Gew.-%, vorzugsweise mindestens 0,1 Gew.-%, bevorzugt mindestens 0,5 Gew.-%, besonders bevorzugt mindestens 1 Gew.-%, bezogen auf die Zusammensetzung, enthalten. Hierdurch wird insbesondere eine gute Wirkeffizienz gewährleistet.

Im Allgemeinen kann es im Rahmen der vorliegenden Erfindung somit vorgesehen sein, dass die Zusammensetzung das (a) antimikrobielle bzw. herbizide Biopolymer in einer Menge im Bereich von 0,01 Gew.-% bis 25 Gew.-%, insbesondere im Bereich von 0,05 Gew.-% bis 20 Gew.-%, vorzugsweise im Bereich von 0,1 Gew.-% bis 15 Gew.-%, bevorzugt im Bereich von 0,5 Gew.-% bis 10 Gew.-%, besonders bevorzugt im Bereich von 1 Gew.-% bis 6 Gew.-%, bezogen auf die Zusammensetzung, enthält.

Weiterhin weist das für die erfindungsgemäße Zusammensetzung eingesetzte antimikrobielle bzw. herbizide Biopolymer ein definiertes Molekulargewicht auf. Hierdurch wird insbesondere eine gute bzw. stabile Inkorporation des herbiziden bzw. antimikrobiellen Biopolymers in der Zusammensetzung gewährleistet, wobei gleichermaßen in Bezug auf diesbezüglich ausgerüstete Baumaterialien eine hohe antimikrobielle Wirksamkeit gewährleistet wird.

Erfindungsgemäß kann es dabei insbesondere vorgesehen sein, dass das (a) antimikrobielle bzw. herbizide Biopolymer einen Acetylierungsgrad von mindestens 2,1 %, insbesondere mindestens 2,5 %, vorzugsweise mindestens 3 %, bevorzugt mindestens 4 %, besonders bevorzugt mindestens 5 %, bezogen auf die acetylierbaren funktionellen Gruppen, insbesondere Aminogruppen, des Biopolymers, aufweist. Insbesondere kann das antimikrobielle bzw. herbizide Biopolymer einen Acetylierungsgrad von höchstens 40 %, insbesondere höchstens 30 %, vorzugsweise höchstens 25 %, bevorzugt höchstens 20 %, besonders bevorzugt höchstens 15 %, bezogen auf die acetylierbaren funktionellen Gruppen, insbesondere Aminogruppen, des Biopolymers, aufweisen. Folglich kann es erfindungsgemäß vorgesehen sein, dass das antimikrobielle bzw. herbizide Biopolymer einen Acetylierungsgrad im Bereich von 2,1 % bis 40 %, insbesondere im Bereich von 2,5 % bis 30 %, vorzugsweise im Bereich von 3 % bis 25 %, bevorzugt im Bereich von 4 % bis 20 %, besonders bevorzugt im Bereich von 5 % bis 15 %, bezogen auf die acetylierbaren funktionellen Gruppen, insbesondere Aminogruppen, des Biopolymers, aufweist. Auch hierdurch kann die Inkorporierung des antimikrobiellen bzw. herbiziden Biopolymers in der Zusammensetzung gezielt eingestellt bzw. gesteuert werden, und zwar auch im Hinblick auf eine gegebenenfalls zugrundeliegende Interaktion mit dem erfindungsgemäß eingesetzten (b) Additiv, insbesondere in Form eines Lösungsvermittlers, Dispergiermittels bzw. Komplexbildners.

Das antimikrobielle bzw. herbizide Biopolymer kann eine Eigenschaft, ausgewählt aus der Gruppe von (i) antibakteriellen Eigenschaften, insbesondere bakteriziden und bakteriostatischen Eigenschaften; (ii) antimykotischen (antifungalen) Eigenschaften, insbesondere fungistatischen und fungiziden Eigenschaften; (iii) herbiziden und herbistatischen Eigenschaften; (iv) antialgischen Eigenschaften, insbesondere algistatischen und algiziden Eigenschaften; (v) antiviralen Eigenschaften, insbesondere viruziden und virustatischen Eigenschaften; und (vi) deren Kombinationen, aufweisen.

Insbesondere kann das antimikrobielle bzw. herbizide Biopolymer eine Eigenschaft, ausgewählt aus der Gruppe von (i) antibakteriellen Eigenschaften, insbesondere bakteriziden und bakteriostatischen Eigenschaften; (ii) antimykotischen (antifungalen) Eigenschaften, insbesondere fungistatischen und fungiziden Eigenschaften; (iii) herbiziden und herbistatischen Eigenschaften; (iv) antialgischen Eigenschaften, insbesondere algistatischen und algiziden Eigenschaften; und (v) deren Kombinationen, aufweisen.

Insbesondere kann das antimikrobielle bzw. herbizide Biopolymer das Wachstum und/oder die Aktivität von Bakterien, Pilzen, Viren, Algen, Moosen und/oder Flechten hemmende und/oder verhindernde Eigenschaften aufweisen.

Auf Basis der erfindungsgemäßen Verwendung eines speziellen antimikrobiellen bzw. herbiziden Biopolymers kann somit sozusagen eine Breitbandwirkung gegenüber einer Vielzahl von Mikroorganismen erreicht werden.

Im Rahmen der vorliegenden Erfindung kann die Zusammensetzung das Additiv in großen Mengenbereichen aufweisen:
- So kann die Zusammensetzung das (b) Additiv, insbesondere Additiv zur Verbesserung der Verteilung und/oder der Homogenisierung des (a) Biopolymers, bevorzugt des Chitosans, in einer Menge von höchstens 49 Gew.-%, insbesondere höchstens 45 Gew.-%, vorzugsweise höchstens 40 Gew.-%, bevorzugt höchstens 35 Gew.-%, besonders bevorzugt höchstens 32,5 Gew.-%, bezogen auf die Zusammensetzung, enthalten.
- Insbesondere kann die Zusammensetzung das (b) Additiv, insbesondere Additiv zur Verbesserung der Verteilung und/oder der Homogenisierung des (a) Biopolymers, bevorzugt des Chitosans, in einer Menge von mindestens 0,1 Gew.-%, insbesondere mindestens 0,5 Gew.-%, vorzugsweise mindestens 1 Gew.-%, bevorzugt mindestens 1,5 Gew.-%, besonders bevorzugt mindestens 2 Gew.-%, bezogen auf die Zusammensetzung, enthalten.
- Folglich kann es im Rahmen der vorliegenden Erfindung insbesondere vorgesehen sein, dass die Zusammensetzung das (b) Additiv, insbesondere Additiv zur Verbesserung der Verteilung und/oder der Homogenisierung des (a) Biopolymers, bevorzugt des Chitosans, in einer Menge im Bereich von 0,1 Gew.-% bis 49 Gew.-%, insbesondere im Bereich von 0,5 Gew.-% bis 45 Gew.-%, vorzugsweise im Bereich von 1 Gew.-% bis 40 Gew.-%, bevorzugt im Bereich von 1,5 Gew.-% bis 35 Gew.-%, besonders bevorzugt im Bereich von 2 Gew.-% bis 32,5 Gew.-%, bezogen auf die Zusammensetzung, enthält.

Was das für die erfindungsgemäße Zusammensetzung eingesetzte Additiv anbelangt, so lassen sich hinsichtlich der Zusammensetzung nach der Erfindung besonders gute Eigenschaften insbesondere im Hinblick auf Stabilität und Wirkeffizienz des antimikrobiellen Biopolymers realisieren, wenn das Additiv wie folgt ausgebildet ist:
So ist das (b) Additiv, insbesondere Additiv zur Verbesserung der Verteilung und/oder der Homogenisierung des (a) Biopolymers, ausgewählt aus der Gruppe von (i) Proteinen und Proteinhydrolysaten, ausgewählt aus der Gruppe von Molke, Molkeproteinen, Keratinhydrolysat, Weizenproteinhydrolysat, Kollagenhydrolysat und Gelatine; (ii) Hydroxycarbonsäuren, ausgewählt aus der Gruppe von Milchsäure, Zitronensäure, Apfelsäure, Weinsäure, Mandelsäure und Salicylsäure; und (iii) Ascorbinsäure; sowie deren Mischungen und Kombinationen.

Zudem kann es erfindungsgemäß vorgesehen sein, dass das (b) Additiv, insbesondere Additiv zur Verbesserung der Verteilung und/oder der Homogenisierung des (a) Biopolymers ausgewählt ist derart und/oder in einer Menge eingesetzt ist derart, dass das molare Verhältnis der funktionellen Gruppen des (b) Additivs, insbesondere das molare Verhältnis der funktionellen Gruppen des (b) Additivs, welche mit dem Biopolymer bzw. Chitosan in Wechselwirkung zu treten und/oder zu interagieren imstande sind, vorzugsweise in Form von Hydroxylgruppen, Carboxylgruppen und/oder Carbonylgruppen, bevorzugt Hydroxylgruppen und/oder Carboxylgruppen, einerseits zu den acetylierten Gruppen, insbesondere zu den acetylierten Aminogruppen, des (a) Biopolymers andererseits im Bereich von 0,2 bis 2, insbesondere im Bereich von 0,3 bis 1,5, vorzugsweise im Bereich von 0,4 bis 1,3, bevorzugt im Bereich von 0,6 bis 1,25, liegt.

Zudem kann die Zusammensetzung das (a) Biopolymer und das (b) Additiv in einem gewichtsbezogenen Verhältnis von (a) Biopolymer zu (b) Additiv im Bereich von 1 : 1 bis 1.000 : 1, insbesondere im Bereich von 2 : 1 bis 500 : 1, vorzugsweise im Bereich von 10 : 1 bis 2500 : 1, aufweisen.

Auf Basis der vorgenannten Maßnahmen hinsichtlich der speziellen chemischen Gruppen des (b) Additivs sowie der angeführten molaren bzw. gewichtsbezogenen Verhältnisse kann eine besonders gute Interaktion bzw. Wechselwirkung zwischen antimikrobiellem Biopolymer einerseits und Additiv andererseits vorliegen, einhergehend mit einer besonders guten Stabilisierung der Wirksubstanz in der Zusammensetzung bzw. Bereitstellung einer hohen Wirkeffizienz.

Wie zuvor angeführt, handelt es sich bei der erfindungsgemäßen Zusammensetzung insbesondere um eine wässrige Zusammensetzung bzw. um eine wässrig basierte Zusammensetzung.

Erfindungsgemäß kann es insbesondere vorgesehen sein, dass die Zusammensetzung das (c) Trägermedium, vorzugsweise Wasser, in einer Menge von mindestens 10 Gew.-%, insbesondere mindestens 20 Gew.-%, vorzugsweise mindestens 30 Gew.-%, bevorzugt mindestens 40 Gew.-%, besonders bevorzugt mindestens 50 Gew.-%, bezogen auf die Zusammensetzung, enthält.

Zudem kann die Zusammensetzung das (c) Trägermedium, vorzugsweise Wasser, in einer Menge von höchstens 99,5 Gew.-%, insbesondere höchstens 99 Gew.-%, vorzugsweise höchstens 98 Gew.-%, bevorzugt höchstens 97 Gew.-%, besonders bevorzugt höchstens 95 Gew.-%, bezogen auf die Zusammensetzung, enthalten.

Erfindungsgemäß kann es somit im Allgemeinen vorgesehen sein, dass die Zusammensetzung das (c) Trägermedium, vorzugsweise Wasser, in einer Menge im Bereich von 10 Gew.-% bis 99,5 Gew.-%, insbesondere im Bereich von 20 Gew.-% bis 99 Gew.-%, vorzugsweise im Bereich von 30 Gew.-% bis 98 Gew.-%, bevorzugt im Bereich von 40 Gew.-% bis 97 Gew.-%, besonders bevorzugt im Bereich von 50 Gew.-% bis 95 Gew.-%, bezogen auf die Zusammensetzung, enthält.

Im Allgemeinen kann die Zusammensetzung nach der Erfindung zudem (d) mindestens einen weiteren Inhaltsstoff bzw. Hilfsstoff enthalten, insbesondere ausgewählt aus der Gruppe von Rheologieadditiven; Ölen; Konservierungsmitteln; Stabilisatoren, Säuren und/oder Basen; waschaktiven Substanzen, insbesondere Tensiden; entschäumenden Komponenten; Filmbildnern; Wachsen, biogenen Wirkstoffen; pH-Stabilisatoren; und pH-Einstellmitteln, insbesondere jeweils in Mengen im Bereich von 0,001 Gew.-% bis 20 Gew.-%, insbesondere im Bereich von 0,005 Gew.-% bis 10 Gew.-%, vorzugsweise im Bereich von 0,01 Gew.-% bis 5 Gew.-%, bezogen auf die Zusammensetzung. Die obigen Mengenangaben gelten dabei für einen jeweiligen Inhalts- bzw. Hilfsstoff als solchen.

In Bezug auf erfindungsgemäß einsetzbare Öle können dabei beispielsweise Neutralöle, z. B. Caprylic/Capric-Triglyceride, eingesetzt werden.

Gleichermaßen kann die Zusammensetzung nach der Erfindung zudem (d) mindestens ein Alkylpolyglucosid, insbesondere C₈- bis C₁₆-Alkylpolyglucosid, vorzugsweise C₈- bis C₁₄-Alkylpolyglucosid, insbesondere mit einem Polymerisationsgrad von 1 (Alkylmonoglucosid) bis 8, insbesondere 2 bis 5, enthalten, insbesondere in Mengen im Bereich von 0,005 Gew.-% bis 25 Gew.-%, insbesondere im Bereich von 0,01 Gew.-% bis 20 Gew.-%, vorzugsweise im Bereich von 0,1 Gew.-% bis 15 Gew.-%, bezogen auf die Zusammensetzung.

Zudem kann es erfindungsgemäß grundsätzlich auch vorgesehen sein, dass die Zusammensetzung nach der Erfindung weiterhin (d) Cocamidopropylbetain enthält, insbesondere in Mengen im Bereich von 0,005 Gew.-% bis 20 Gew.-%, insbesondere im Bereich von 0,01 Gew.-% bis 15 Gew.-%, vorzugsweise im Bereich von 0,1 Gew.-% bis 10 Gew.-%, bezogen auf die Zusammensetzung.

Insbesondere kann die Zusammensetzung zudem (e) mehrwertige Kationen und/oder mehrwertige Metallionen, insbesondere zweiwertige Kationen und/oder zweiwertige Metallionen, vorzugsweise Erdalkalimetallionen, bevorzugt Calciumionen und/oder Magnesiumionen, enthalten.

In diesem Zusammenhang können die mehrwertigen Kationen und/oder die mehrwertigen Metallionen, insbesondere die zweiwertigen Kationen und/oder die zweiwertigen Metallionenen, vorzugsweise die Erdalkalimetallionen, bevorzugt die Calciumionen und/oder die Magnesiumionen, insbesondere unabhängig voneinander, in Form von Salzen, vorzugsweise in Form von anorganischen oder organischen Salzen, bevorzugt in Form von Carbonaten, Hydrogencarbonaten, Hydroxiden, Halogeniden und/oder halogenidhaltigen Salzen, eingesetzt sein oder vorliegen.

Erfindungsgemäß ist es insbesondere von Vorteil, wenn die Zusammensetzung die mehrwertigen Kationen und/oder die mehrwertigen Metallionen, insbesondere die zweiwertigen Kationen und/oder die zweiwertigen Metallionenen, vorzugsweise die Erdalkalimetallionen, bevorzugt die Calciumionen und/oder die Magnesiumionen, in Mengen im Bereich von 0,001 mmol/l bis 100 mmol/l, insbesondere im Bereich von 0,01 mmol/l bis 75 mmol/l, vorzugsweise im Bereich von 0,1 mmol/l bis 50 mmol/l, bevorzugt im Bereich von 0,2 mmol/l bis 40 mmol/l, besonders bevorzugt im Bereich von 0,5 mmol/l bis 30 mmol/l, ganz besonders bevorzugt im Bereich von 1 mmol/l bis 20 mmol/l, berechnet als mehrwertige(s) Kation(en) oder mehrwertige(s) Metallion(en) und bezogen auf die Zusammensetzung, enthält.

Durch die Verwendung der vorgenannten Kationen bzw. Salze kann insbesondere die Kompatibilität von mit der erfindungsgemäßen Zusammensetzung ausgerüsteten Baumaterialien bzw. Produkten zu anderen Materialien erhöht werden. Insbesondere kann auch die Kompatibilität bzw. Haftung und somit auch die Beständigkeit und Deckkraft beispielsweise von Farben, Lacken oder Lasuren gegenüber hiermit zu beschichtenden Untergründen bzw. Materialien erhöht werden. Weiterhin wird ein Bewuchs mit den in Rede stehenden Mikroorganismen oder dergleichen weiterführend verringert, so dass auch von daher die Beständigkeit erhöht wird. Zudem geht das Vorhandensein entsprechender zweiwertiger Kationen mit dem Vorteil einher, dass es zur Herstellung der Zusammensetzung nicht erforderlich ist, auf demineralisiertes bzw. entionisiertes Wasser als Dispersionsmedium zurückzugreifen.

Somit kann die erfindungsgemäße Zusammensetzung auch als Primer, Beschichtungszusammensetzung, Farbe, insbesondere Mineralfarbe, Lack, Lasur oder dergleichen ausgebildet sein bzw. vorliegen oder deren Bestandteil sein.

In überraschender Weise hat die Anmelderin auch gefunden, dass die zielgerichtete Verwendung von zweiwertigen Kationen, insbesondere Calciumionen bzw. Magnesiumionen, insbesondere bei sogenannten Mineralfarben zu einer verbesserten Eigenschaften führt, und zwar sowohl was die Haftung einer derartigen Farbe auf einem Untergrund, wie Beton, Putz, Kalksandstein oder dergleichen anbelangt, als auch die erhöhte Beständigkeit gegenüber Mikroorganismen oder dergleichen anbelangt. In diesem Zusammenhang kann die erfindungsgemäße Zusammensetzung, welche in diesem Zusammenhang ziel- und zweckgerichtet mit den in Rede stehenden zweiwertigen Kationen ausgerüstet sein kann, beispielsweise als Grundierungs- bzw. Haftvermittlerzusammensetzung (*Primer*) eingesetzt werden bzw. direkt in die (Mineral-)Farbe oder dergleichen inkorporiert werden.

Einhergehend mit den verbesserten Haft- bzw. Deckeigenschaften kann in dabei für eine (Mineral-)Farbe beispielsweise die Menge an in der Farbe vorhandenen Pigmenten, wie insbesondere Titandioxid, verringert werden. Zudem kann auch die Menge an organischen Bindemitteln, wie Polysterol oder Polyacryl, in der (Mineral-) Farbe verringert werden, einhergehend mit der Verringerung der Freisetzung von Mikropartikeln bzw. Mikroplastik (wie es beispielsweise bei der Verwitterung bzw. bei Abrieb der Farbe freigesetzt werden kann).

Ohne sich auf diese Theorie beschränken zu wollen, können die zweiwertigen Kationen zu Vernetzungen bzw. Molekülinteraktionen führen, und zwar innerhalb des mit der Zusammensetzung nach der Erfindung ausgerüsteten Materials als solchen als auch an dessen Grenzfläche(n), insbesondere im Bereich der Oberfläche als auch der Grenzfläche zu einem Substrat oder dergleichen (beispielsweise an der Grenzfläche zwischen (Mineral-)Farbe einerseits und Substrat andererseits), was zu den nochmals verbesserten Eigenschaften auch hinsichtlich der Erhöhung der Kompatibilität und der verbesserten Beständigkeit führt, da hierdurch die Wachstumsbedingungen für Mikroorganismen oder dergleichen weiter verschlechtert und die Haftung gegenüber dem Substrat weiter erhöht werden kann. Insbesondere kann es an den Grenzflächen zur Ausbildung von die Kompatibilität gegenüber Substraten erhöhenden und/oder von das Wachstum von Mikroorganismen oder dergleichen bzw. deren Haftung auf dem Material verringernden Verbindungen auf Basis der zweiwertigen Kationen, insbesondere Calciumionen und/oder Magnesiumionen, kommen, wie Carbonaten, insbesondere Calciumcarbonat und/oder Magnesiumcarbonat. Hierdurch kann die Haftung gegenüber dem Substrat erhöht bzw. die Oberfläche sozusagen versiegelt werden.

Der Einsatz der erfindungsgemäßen Zusammensetzung beispielsweise in Mineralfarben mit den damit einhergehenden positiven Effekten ist auch von daher von Bedeutung, dass Mineralfarben im Allgemeinen häufig eingesetzt werden, und zwar sowohl im gewerblichen Bereich als auch im Privathaushalt, etwa im Wohnbereich oder für Außenfassaden. Dabei ist der Einsatzbereich auf bestimmte Untergründe fokussiert, welche insbesondere mineralischer Natur sind. Durch die Verwendung der erfindungsgemäßen Zusammensetzung für Mineralfarben wird dabei die diesbezügliche Kompatibilität erhöht, wobei zudem auf den Einsatz problematischer Biozide zum Schutz gegen Schimmelpilz oder Bakterien verzichtet werden kann. Im Allgemeinen weisen Mineralfarben auch positive Eigenschaften hinsichtlich eines geringen allergischen Potentials und einer hohen Diffusionsfähigkeit auf, so dass auch die Bildung von Kondenswasser beispielsweise in Innenräumen verringert werden kann, wobei derartige Farben im Allgemeinen auch pH-neutral bzw. leicht sauer sind, was deren Eigenschaften weiter verbessert. Die positiven Eigenschaften werden unter Verwendung der erfindungsgemäßen Zusammensetzung beibehalten oder sogar noch verstärkt.

Auch vor diesem Hintergrund ist ein zentraler Vorteil der vorliegenden Erfindung darin zu sehen, dass die Eigenschaften von (Mineral-)Farben weiterführend verbessert werden, was deren Verarbeitungs- und Verwendungseigenschaften nochmals zugutekommt.

Insbesondere im Hinblick auf die Verwendung der Zusammensetzung im Zusammenhang mit (Mineral-)Farben, Lacken bzw. Lasuren, insbesondere Mineralfarben, ist es erfindungsgemäß von Vorteil, wenn die Zusammensetzung nach der Erfindung weiterhin Additive aus der Gruppe von Proteinen, Proteinhydrolysaten und Polyolen sowie deren Mischungen und Kombinationen aufweist.

Dabei hat die Anmelderin überraschend auch gefunden, dass sich erfindungsgemäß besonders gute Effekte für auf Gips, Zement, Magnesit bzw. Kalk, insbesondere Magnesit, als Bindemittel basierende (Farb-) Systeme, wie es für Mineralfarbe der Fall ist, erhalten werden können. Zudem ergeben sich besonders gute Effekte gegenüber Substraten wie Zement, Beton, Putz oder dergleichen. Ohne sich auf diese Theorie beschränken zu wollen, gehen derartige Systeme mit besonders guten Vernetzungen bzw. Molekülinteraktionen auf Basis der vorliegenden zweiwertigen Kationen einher (und zwar auch im Hinblick auf die Bildung von Carbonaten).

Insbesondere vor dem Hintergrund, dass Gips, Zement, Magnesit bzw. Kalk, insbesondere Magnesit, auch als Bindemittel in holzbasierten Baustoffen, wie Spanplatten oder dergleichen, zum Einsatz kommen kann, eignet sich die erfindungsgemäße Zusammensetzung auch von daher beispielsweise als Grundierungs- bzw. Haftvermittler für Beschichtungen derartiger Spanplatten, so dass die diesbezüglichen Eigenschaften weiterführend verbessert werden können. Der grundlegende Vorteil von auf Basis von Magnesit als mineralisches Bindemittel hergestellten Spanplatten oder dergleichen ist zudem darin zu sehen, dass Magnesit im Allgemeinen gesundheitlich unbedenklich ist und insbesondere nicht zur Freisetzung von Formaldehyd oder dergleichen führt.

Die Zusammensetzung nach der Erfindung kann im Allgemeinen viskos oder gelförmig ausgebildet sein. Hierbei können die Anwendungseigenschaften gezielt eingestellt werden, beispielsweise im Hinblick auf das Auftragen der Zusammensetzung nach der Erfindung auf einen entsprechend auszurüstenden Gegenstand. Insbesondere kann die Zusammensetzung flüssig bzw. gering viskos ausgebildet sein. Die Viskosität kann beispielsweise über die Verwendung von Alginaten eingestellt werden.

Im Allgemeinen kann die Zusammensetzung nach der Erfindung in Form einer Zusammensetzung zum Auftragen bzw. Einarbeiten bzw. Inkorporieren des antimikrobiellen bzw. herbiziden Biopolymers insbesondere als Spray, Reinigungs- und/oder Waschmittelzusammensetzung und/oder Imprägnierungszusammensetzung, ausgebildet sein. Grundsätzlich kann die Zusammensetzung auch als Creme oder Salbe ausgebildet sein.

Darüber hinaus kann die Zusammensetzung nach der Erfindung auch wie folgt ausgebildet sein bzw. vorliegen: Insbesondere kann die Zusammensetzung als Fugen- bzw. Rissverfüllungszusammensetzung bzw. als Fugen- bzw. Rissmaterial ausgebildet sein bzw. vorliegen. Zudem kann die erfindungsgemäße Zusammensetzung auch als Grundierungs- bzw. Haftvermittlerzusammensetzung (Primer) ausgebildet sein bzw. vorliegen. Weiterhin kann die erfindungsgemäße Zusammensetzung als Imprägnier- bzw. Schmutzschutzzusammensetzung ausgebildet sein bzw. vorliegen. Weiterhin kann die Zusammensetzung als Bestandteil von Farben, insbesondere Mineralfarben, Lacken oder dergleichen, insbesondere zur Erhöhung der Haftung und/oder Kompatibilität gegenüber Substraten und/oder zur Erhöhung Standzeit und/oder der Wetterbeständigkeit und/oder zur Verringerung der Verkeimung und/oder des Algen- und/oder Moos- und/oder Pilzbefalls der Farben, insbesondere Mineralfarben, Lacken oder dergleichen, ausgebildet sein bzw. vorliegen. Darüber hinaus kann die erfindungsgemäße Zusammensetzung als Klebstoff- bzw. Haftzusammensetzung ausgebildet sein bzw. vorliegen. Gleichermaßen kann die erfindungsgemäße Zusammensetzung als Korrosionsschutzmittel ausgebildet sein bzw. vorliegen. Die erfindungsgemäße Zusammensetzung kann auch als *Antifouling-*Zusammensetzung, insbesondere als Antifouling-Behandlungszusammensetzung für im (See-) Wasserbereich eingesetzte Bauteile oder Gegenstände, ausgebildet sein bzw. vorliegen. Hierzu kann auch auf die Ausführungen zu den nachfolgend beschriebenen erfindungsgemäßen Verwendungen sowie zu dem Verfahren nach der Erfindung verwiesen werden kann.

Beispielhafte erfindungsgemäße Zusammensetzungen können beispielsweise jeweils (i) Chitosan, Ascorbinsäure, Resveratrol, Lecithin, Glycerin und Wasser; (ii) Chitosan, Chondroitinsulfat, Natrium-Alginate, Milchsäure, Glycerin und Wasser; (iii) Chitosan, Ascorbinsäure, Salicylsäure, Glycerin und Wasser; (iv) Chitosan, Keratin-Hydrolysat, Cystein, Resveratrol, Molkeprotein, Milchsäure, Lecithin, Glycerin und Wasser; (v) Chitosan, Chondroitinsulfat, Natrium-Alginate, Molkeprotein sowie Wasser; enthalten. Weitere erfindungsgemäße Zusammensetzungen können beispielsweise (vi) Chitosan, Ascorbinsäure, Resveratrol, Lecithin, Glycerin, Alkylpolyglucosid, Milchsäure und Wasser; sowie (vii) Chitosan, Ascorbinsäure, Cystus, Milchsäure, Lecithin, Cocamidopropylbetain, Alkylpolyglucosid und Wasser; enthalten.

Auch die vorgenannten weiteren Zusammensetzungen gemäß dem vorliegenden erfindungsgemäßen Aspekt können jeweils zudem (insbesondere als weitere Komponente bzw. als Komponente (d) oder (e)) mehrwertige Kationen und/oder mehrwertige Metallionen, insbesondere zweiwertige Kationen und/oder zweiwertige Metallionen, vorzugsweise Erdalkalimetallionen, bevorzugt Calciumionen und/oder Magnesiumionen, insbesondere wie zuvor definiert, enthalten.

Im Rahmen der vorliegenden Erfindung wird somit insgesamt eine leistungsfähige Zusammensetzung bereitgestellt, welche ein spezielles antimikrobielles bzw. herbizides Biopolymer als Wirksubstanz bzw. Wirkstoff enthält. Dabei zeichnet sich die erfindungsgemäße Zusammensetzung durch eine hohe Lagerstabilität und hervorragende Anwendungseigenschaften im Hinblick auf die Ausrüstung von Baumaterialien bzw. Baustoffen mit antimikrobiellen bzw. herbiziden Eigenschaften auf Basis des Biopolymers d.h. des Chitosans aus.

Für weitergehende Einzelheiten zu der erfindungsgemäßen Zusammensetzung kann auf die Ausführungen zu den übrigen Erfindungsaspekten verwiesen werden, welche in Bezug auf die erfindungsgemäße Zusammensetzung entsprechend gelten.

Gemäß einem wiederum **weiteren** Aspekt der vorliegenden Erfindung betrifft die vorliegende Erfindung gleichermaßen die Verwendung einer Zusammensetzung, insbesondere wässrige Zusammensetzung, vorzugsweise in Form einer Lösung oder Dispersion, bevorzugt in Form einer wässrig ausgebildeten und/oder insbesondere wässrig basierten Lösung oder Dispersion, wie zuvor definiert,
zur Ausrüstung bzw. zum Erhalt eines Baumaterials für den Gebäudebau und/oder für Gebäude, vorzugsweise für den Außenbereich und/oder Feuchtraumbereich, insbesondere wie zuvor definiert, mit antimikrobiellen und/oder herbiziden Eigenschaften; oder
zur Verringerung der Verkeimung und/oder des Algen- und/oder Moos- und/oder Pilzbefalls eines Baumaterials für den Gebäudebau und/oder für Gebäude, vorzugsweise für den Außenbereich und/oder Feuchtraumbereich, insbesondere wie zuvor definiert.

In diesem Zusammenhang führt die Anwendung der erfindungsgemäßen Zusammensetzungen auch zu einer deutlichen Verringerung des Algenbefalls auf Holzmaterialien bzw. holzbasierten Materialien, wobei zudem das auf Basis der erfindungsgemäßen Zusammensetzung behandelte Holz bzw. diesbezügliche Holzmaterialien vor Fäulnisbildung geschützt werden. Auch bei Holz-Kunststoff-Verbundwerkstoffen (WBC) kann ein Befall mit Algen und Schimmel verhindert bzw. effektiv behandelt werden.

Die vorliegende Erfindung betrifft gleichermaßen die Verwendung der Zusammensetzung nach der Erfindung zum Verfüllen bzw. Verschließen von Fugen bzw. Rissen eines Baumaterials für den Gebäudebau und/oder für Gebäude, vorzugsweise für den Außenbereich und/oder Feuchtraumbereich, insbesondere wie zuvor definiert, insbesondere zum Verfüllen und/oder Verschließen von Fugen und/oder Rissen bei Putzen, Bausteinen, insbesondere Kalksandsteinen, Zement- und/oder Betonkörpern bzw. -flächen, Bodenbelägen, Estrichen, Plattenelementen oder dergleichen beispielsweise bei Hausfassaden. In diesem Zusammenhang betrifft die vorliegende Erfindung auch die Verwendung der erfindungsgemäßen Zusammensetzung als Fugen- bzw. Rissverfüllungszusammensetzung.

Erfindungsgemäß kann die Zusammensetzung somit als Material zur Risssanierung und/oder als Fugenmaterial ausgebildet sein bzw. eingesetzt werden. Dabei können die elastischen Eigenschaften insbesondere durch Verwendung von Proteinen, Proteinhydrolysaten, Peptiden, Polyolen und/oder Diolen gezielt eingestellt bzw. maßgeschneidert werden. Die vorliegende Erfindung geht dabei auch mit dem Vorteil einher, dass auf dauerhafte bzw. dauerelastische Materialien bereitgestellt werden können. Im Stand der Technik werden demgegenüber im Hinblick auf die Sanierung von Rissen bzw. auch als Fugenmaterial oftmals Zusammensetzungen auf Basis von Silikonharzen eingesetzt. Längerkettige Silikonöle (speziell Polydimethylsiloxane, PDMS) bauen sich in feuchten Sedimenten so langsam ab, dass diese auch nach Jahrzehnten als Marker für anthropogene Aktivitäten zu sehen sind, wobei im Stand der Technik verwendete Silikonharze auch zur Bildung von Mikroplastik beitragen, was auf Basis der erfindungsgemäßen Konzeption verhindert wird.

Die vorliegende Erfindung betrifft auch die Verwendung der Zusammensetzung nach der Erfindung zum Grundieren eines Baumaterials für den Gebäudebau und/oder für Gebäude, vorzugsweise für den Außenbereich und/oder Feuchtraumbereich, insbesondere wie zuvor definiert, vorzugsweise zum Grundieren von Putzen, Bausteinen, insbesondere Kalksandsteinen, Zement- und/oder Betonkörpern bzw. -flächen, Wandbelägen, Bodenbelägen, Estrichen, Plattenelementen oder dergleichen, vorzugsweise Spanplatten oder OSB-Platten, bevorzugt zur Verbesserung der Haftung von Farben, insbesondere Mineralfarben, Lacken oder dergleichen. In diesem Zusammenhang betrifft die vorliegende Erfindung auch die Verwendung der erfindungsgemäßen Zusammensetzung als Grundierungs- und/oder Haftvermittlerzusammensetzung (Primer).

Insbesondere Kalksandsteine weisen ein starkes Saugverhalten gegenüber Wasser auf. Mit der erfindungsgemäßen Zusammensetzung kann das dieses Saugverhalten verringert werden, wobei die erfindungsgemäße Zusammensetzung in diesem Zusammenhang als sogenannter Tiefgrund fungieren bzw. eingesetzt werden kann. Dabei übertreffen die erfindungsgemäßen Zusammensetzungen in ihrer Wirksamkeit sogar die hierzu üblicherweise im Stand der Technik eingesetzten Silikonharze. Dabei können erfindungsgemäß bereits geringe Schichtdicken der aufgetragenen Zusammensetzung zu einer wirksamen Beschichtung entsprechender Oberflächen insbesondere von Kalksandsteinen führen, und dies bereits nach relativ kurzer Einwirkzeit. Infolge des verbesserten Haftungsvermögens bzw. der hohen Kompatibilität beispielsweise gegenüber Farben, Lacken oder Lasuren kann nach der Behandlung bzw. dem Auftragen der erfindungsgemäßen Zusammensetzung diese leicht und problemlos und mit verringertem Materialeinsatz gestrichen werden, wobei auch eine gute Beständigkeit erzielt wird.

Die vorliegende Erfindung betrifft zudem die Verwendung der Zusammensetzung nach der Erfindung zum Imprägnieren eines Baumaterials für den Gebäudebau und/oder für Gebäude, vorzugsweise für den Außenbereich und/oder Feuchtraumbereich, insbesondere wie zuvor definiert, vorzugsweise zum Imprägnieren von Putzen, Bausteinen, insbesondere Kalksandsteinen, Zement- und/oder Betonkörpern bzw. -flächen, Farben, insbesondere Mineralfarben, Lacken oder dergleichen, Wandbelägen, Bodenbelägen, Estrichen, Plattenelementen oder dergleichen, bevorzugt zur Ausrüstung bzw. zum Erhalt der vorgenannten Baumaterialien mit feuchtigkeits- und/oder schmutzabweisenden Eigenschaften und/oder zur Bereitstellung eines Lotuseffekts (Selbstreinigungseigenschaften). In diesem Zusammenhang betrifft die vorliegende Erfindung auch die Verwendung der erfindungsgemäßen Zusammensetzung als Imprägnier- und/oder Schmutzschutzzusammensetzung.

Erfindungsgemäß verhält es sich beispielsweise für mit der erfindungsgemäßen Zusammensetzung beschichteten bzw. ausgerüsteten Farben, wie Fassadenfarben, insbesondere derart, dass - ohne sich auf diese Theorie beschränken zu wollen - deren thermoplastische Eigenschaften verringert werden, so dass sich die Härteeigenschaften der Farbschicht unter Temperatureinfluss nicht bzw. allenfalls im geringeren Maße verändert, wobei zudem auch das Wasserquellverhalten unter Einsatz der erfindungsgemäßen Zusammensetzung verringert ist. Diese modifizierten Eigenschaften tragen dazu bei, dass die Haftung von Schmutzpartikeln auf der Oberfläche derart behandelter Systeme verringert ist, wobei das Abperlverhalten von (Regen-) Wasser verbessert ist, wodurch ein gewisser Selbstreinigungseffekt bereitgestellt wird. Auch infolge dieser modifizierten Eigenschaften wird zudem das Wachstum von Mikroorganismen bzw. Algen bzw. Moosen auf der Oberfläche erschwert bzw. verhindert. Demgegenüber verhält es sich bei herkömmlichen bzw. unbehandelten Fassadenfarben insbesondere derart, dass die getrocknete Farbschicht thermoplastisch ist, so dass diese bei niedrigen Temperaturen hart und unelastisch und bei höheren Temperaturen weich ist. Infolgedessen zieht eine derartige Farbschicht verstärkt Staub und Schmutz an. Dabei kommt noch hinzu, dass der getrocknete Farbfilm bei herkömmlichen Farben bzw. Fassadenfarben unter Feuchtigkeitseinfluss mitunter aufquillt, wobei auch das Abtrocknungsverhalten verschlechtert ist. Diese Nachteile des Standes der Technik werden unter Anwendung der erfindungsgemäßen Zusammensetzung überkommen bzw. zumindest verringert.

In diesem Zusammenhang betrifft die vorliegende Erfindung auch die Verwendung der Zusammensetzung nach der Erfindung als Bestandteil von Farben, insbesondere Mineralfarben, Lacken oder dergleichen, insbesondere zur Erhöhung der Haftung und/oder Kompatibilität gegenüber Substraten und/oder zur Erhöhung Standzeit und/oder der Wetterbeständigkeit und/oder zur Verringerung der Verkeimung und/oder des Algen- und/oder Moos- und/oder Pilzbefalls der Farben, insbesondere Mineralfarben, Lacken oder dergleichen.

Die vorliegende Erfindung betrifft weiterhin auch die Verwendung der Zusammensetzung nach der Erfindung zum Verkleben von Wandbelägen, insbesondere Tapeten, vorzugsweise papierbasierten Tapeten, bzw. als Haftmittel und/oder Klebstoff für Wandbeläge, insbesondere Tapeten, vorzugsweise papierbasierte Tapeten. In diesem Zusammenhang betrifft die vorliegende Erfindung auch die Verwendung der erfindungsgemäßen Zusammensetzung als Klebstoff- und/oder Haftzusammensetzung.

Auf dieser Basis kann im Rahmen der vorliegenden Erfindung das Haftungsvermögen bzw. das Verkleben von Tapeten auf entsprechende Oberflächen verbessert werden, wobei die auf Basis der erfindungsgemäßen Zusammensetzung behandelten bzw. verklebten Tapeten gleichzeitig verbesserte Eigenschaften hinsichtlich eines verringerten Befalls mit Keimen, Algen, Moosen oder dergleichen aufweisen, was insbesondere in feuchten Räumen von Bedeutung ist.

Die vorliegende Erfindung betrifft auch die Verwendung der Zusammensetzung nach der Erfindung zur Ausrüstung von Metallträgern und/oder Metallsubstraten mit Korrosionsschutzeigenschaften. In diesem Zusammenhang betrifft die vorliegende Erfindung auch die Verwendung der erfindungsgemäßen Zusammensetzung als Korrosionsschutzmittel.

Die vorliegende Erfindung betrifft weiterführend auch die Verwendung der Zusammensetzung nach der Erfindung zur Ausrüstung von insbesondere im Seewasserbereich eingesetzten Bauteilen oder Gegenständen, insbesondere Schiffen, Booten, Bojen, Netzen, Unterwasserröhren, Ölplattformen (Förderplattformen) oder dergleichen, mit Antifouling-Eigenschaften. In diesem Zusammenhang betrifft die vorliegende Erfindung auch die Verwendung der erfindungsgemäßen Zusammensetzung als Antifouling-Zusammensetzung, insbesondere als Antifouling-Behandlungszusammensetzung für im Seewasserbereich eingesetzte Bauteile oder Gegenstände.

Erfindungsgemäß kann die Zusammensetzung somit sozusagen als Antifouling-Mittel zum Einsatz kommen, beispielsweise um das Wachstum und die Ansiedlung von bewuchsbildenden Organismen an Schiffen, Booten und anderen im Wasser eingesetzten Bauteilen oder Gegenständen zu verhindern bzw. zu verringern. In diesem Zusammenhang weisen die erfindungsgemäßen Zusammensetzungen im Vergleich zu den Ansätzen des Standes der Technik deutlich verbesserte Eigenschaften auf, und zwar sowohl im Hinblick auf die Effizienz der Verhinderung des Bewuchses als auch die Anwendungs- und Umwelteigenschaften. Denn im Stand der Technik werden als Antifouling-Beschichtungen oftmals Zusammensetzungen verwendet, welche stark bzw. permanent toxische Biozide aufweisen, welche mitunter in das Wasser abgegeben werden, wobei derartige permanent toxische Biozide im Stand der Technik beispielsweise das Anheften von Organismen unter Wasser auf entsprechenden Oberflächen verhindern sollen, wobei der Einsatz von permanent toxischen Bioziden auch zu einem Absterben von Larven oder dergleichen entsprechender Mikroorganismen führen soll, wenn diese mit der Oberfläche, wie einem Schiffsrumpf oder dergleichen, in Berührung kommen. Hierzu wurden im Stand der Technik vormals sogenannte zinnorganische Breitbandbiozide eingesetzt, wobei die bekannteste Verbindung aus dieser Gruppe das Tributylzinn (TBT) ist. Der Einsatz derartiger zinnorganischer Verbindungen in Antifouling-Beschichtungen ist jedoch seit dem Jahr 2008 international verboten, da diese Substanzen für eine lange Zeit in der Umwelt verbleiben, hochgiftig sind und zudem hormonell auf Lebewesen im Wasser wirken. In biozidhaltigen Antifouling-Beschichtungen des Standes der Technik werden derzeit überwiegend Kupferverbindungen als Wirkstoffe eingesetzt. Zur Verstärkung der Effektivität werden diese häufig mit weiteren Bioziden kombiniert. Zwar sind diese Antifouling-Biozide nicht so extrem schädlich wie Tributylzinn, dennoch handelt es sich auch hierbei um toxische und oftmals schwer abbaubare Substanzen, welche ebenfalls unerwünschte Wirkungen auf im Wasser lebenden Organismen haben können. Im Jahr 2000 wurden in der Europäischen Union jährlich etwa 668 Tonnen Biozid-Wirkstoffe produziert, welche für die Verwendung in Antifouling-Beschichtungen vorgesehen waren. Die erfindungsgemäßen Zusammensetzungen können demgegenüber als umweltverträgliche Antifouling-Mittel eingesetzt werden. Hierzu können die erfindungsgemäßen Zusammensetzungen beispielsweise als zusätzliche Beschichtung eingesetzt oder in Farbesysteme, wie (Beschichtungs-) Lacken, eingearbeitet vorliegen bzw. eingesetzt werden. Dabei zeichnen sich die erfindungsgemäßen Zusammensetzungen bei gleichzeitig hoher Wirksamkeit durch eine hohe Umweltverträglichkeit aus.

Für weitere Einzelheiten zu der erfindungsgemäßen Verwendung kann auf die weiteren Erfindungsaspekte verwiesen werden, wobei die diesbezüglichen Ausführungen vorliegend entsprechend gelten.

Schließlich betrifft die vorliegende Erfindung gemäß einem nochmals **weiteren** Aspekt der vorliegenden Erfindung auch das erfindungsgemäße Verfahren zur Ausrüstung bzw. zum Erhalt eines Baumaterials für den Gebäudebau und/oder für Gebäude, vorzugsweise für den Außenbereich und/oder Feuchtraumbereich, insbesondere wie zuvor definiert, mit antimikrobiellen und/oder herbiziden Eigenschaften; oder
zur Erhöhung der Standzeit und/oder der Wetterbeständigkeit, insbesondere zur Erhöhung der Langzeit- und/oder Bewitterungsbeständigkeit eines Baumaterials für den Gebäudebau und/oder für Gebäude, vorzugsweise für den Außenbereich und/oder Feuchtraumbereich, insbesondere wie zuvor definiert; oder
zur Verringerung der Verkeimung und/oder des Algen- und/oder Moos- und/oder Pilzbefalls eines Baumaterials für den Gebäudebau und/oder für Gebäude, vorzugsweise für den Außenbereich und/oder Feuchtraumbereich, insbesondere wie zuvor definiert; oder
zum Verfüllen und/oder Verschließen von Fugen und/oder Rissen eines Baumaterials für den Gebäudebau und/oder für Gebäude, vorzugsweise für den Außenbereich und/oder Feuchtraumbereich, insbesondere wie zuvor definiert, insbesondere zum Verfüllen und/oder Verschließen von Fugen und/oder Rissen bei Putzen, Bausteinen, insbesondere Kalksandsteinen, Zement- und/oder Betonkörpern bzw. -flächen, Bodenbelägen, Estrichen, Plattenelementen oder dergleichen beispielsweise Hausfassaden; oder
zum Grundieren eines Baumaterials für den Gebäudebau und/oder für Gebäude, vorzugsweise für den Außenbereich und/oder Feuchtraumbereich, insbesondere wie zuvor definiert, vorzugsweise zum Grundieren von Putzen, Bausteinen, insbesondere Kalksandsteinen, Zement- und/oder Betonkörpern bzw -flächen, Wandbelägen, Bodenbelägen, Estrichen, Plattenelementen oder dergleichen, vorzugsweise Spanplatten oder OSB-Platten, bevorzugt zur Verbesserung der Haftung von Farben, insbesondere Mineralfarben, Lacken oder dergleichen; oder
zum Imprägnieren eines Baumaterials für den Gebäudebau und/oder für Gebäude, vorzugsweise für den Außenbereich und/oder Feuchtraumbereich, insbesondere wie zuvor definiert, vorzugsweise zum Imprägnieren von Putzen, Bausteinen, insbesondere Kalksandsteinen, Zement- und/oder Betonkörpern bzw. -flächen, Farben, insbesondere Mineralfarben, Lacken oder dergleichen, Wandbelägen, Bodenbelägen, Estrichen, Plattenelementen oder dergleichen, bevorzugt zur Ausrüstung bzw. zum Erhalt der vorgenannten Baumaterialien mit feuchtigkeits- und/oder schmutzabweisenden Eigenschaften und/oder zur Bereitstellung eines Lotuseffekts (Selbstreinigungseigenschften); oder
zum Verkleben von Wandbelägen, insbesondere Tapeten, vorzugsweise papierbasierten Tapeten, und/oder als Haftmittel und/oder Klebstoff für Wandbeläge, insbesondere Tapeten, vorzugsweise papierbasierte Tapeten; oder zur Ausrüstung von Metallträgern und/oder Metallsubstraten mit Korrosionsschutzeigenschaften; oder
zur Austrüstung von insbesondere im Seewasserbereich eingesetzten Bauteilen oder Gegenständen, insbesondere Schiffen, Booten, Bojen, Netzen, Unterwasserröhren, Ölplattformen oder dergleichen, mit Antifouling-Eigenschaften.

In diesem Zusammenhang wird das Baumaterial bzw. der Gegenstand mit einer Zusammensetzung, wie zuvor definiert, in Kontakt gebracht, insbesondere mittels Auftragen, Aufsprühen, Beschichten, Befilmen, Einbringen, Einmischen, Eintauchen, Einwaschen und/oder Imprägnieren oder dergleichen, insbesondere wobei nachfolgend das Trägermedium der Zusammensetzung, vorzugsweise Wasser entfernt wird, insbesondere mittels Verdampfen oder dergleichen.

In diesem Zusammenhang kann auch auf die Ausführungen zu den weiteren Erfindungsaspekten verwiesen werden, wobei die diesbezüglichen Ausführungen entsprechend gelten.

Was insbesondere die erfindungsgemäßen Verwendungen sowie die Zusammensetzung und das Verfahren nach der Erfindung anbelangt, so kann das diesbezüglich angeführte Baumaterial zusammenfassend und im Allgemeinen ausgewählt sein aus der Gruppe von Putzen, insbesondere Außen- und/oder Feuchtraumputzen, sowie deren Ausgangsmischungen und -materialien; Bausteinen, insbesondere Ziegelsteinen, Kalksandsteinen und (Fassaden-) Klinkersteinen, vorzugsweise Kalksandsteinen, sowie deren Ausgangsmaterialien; Mörteln, insbesondere Außen- und/oder Feuchtraummörteln, sowie deren Ausgangsmischungen und -materialien; Zementen, insbesondere Außen- und/oder Feuchtraumzementen, sowie deren Ausgangsmischungen und -materialien, Betonen, insbesondere Außen- und/oder Feuchtraumbetonen, sowie deren Ausgangsmischungen und -materialien; Anstrichfarben, insbesondere Außen- und/oder Feuchtraumanstrichfarben, vorzugsweise Mineralfarben, sowie deren Ausgangsmischungen und -materialien; Lacken, insbesondere Außen- und/oder Feuchtraumlacken, sowie deren Ausgangsmischungen und -materialien; Wandbelägen, insbesondere Tapeten, sowie deren Ausgangsmaterialien; Bodenbelägen, insbesondere Terrassen- und/oder Waschküchenbodenbelägen, sowie deren Ausgangsmaterialien; Estrichen, insbesondere Außen- und/oder Feuchtraumestrichen, sowie deren Ausgangsmischungen und -materialien; Plattenelementen, insbesondere Fassadenelementen und Fassadenplatten, sowie deren Ausgangsmaterialien; Dämmelementen, insbesondere Dämmplatten, sowie deren Ausgangsmaterialien; Holzbaumaterialien und holzbasierten Baumaterialien, insbesondere Holz- oder holzbasierten Boden-, Decken- und/oder Wandelementen und/oder -paneelen, Sperrholzplatten, OSB-Platten (*Oriented Strand Board*) und Holz-Kunststoff-Verbundwerkstoffen (WPC), sowie deren Ausgangsmaterialien; und Metallträgern und Metallsubstraten. Die Baumaterialien bzw. deren Ausgangsmaterialien können dabei auf Basis der kann dabei auf Basis der erfindungsgemäßen Verwendungen bzw. der erfindungsgemäßen Zusammensetzung bzw. dem erfindungsgemäßen Verfahren mit dem antimikrobiellen bzw. herbiziden Biopolymer ausgerüstet bzw. bereitgestellt werden.

Bei den im Rahmen der vorliegenden Erfindung eingesetzten bzw. erfindungsgemäßen Putzen kann es sich insbesondere um Putze auf Basis von Kalk, Gips bzw. Zement als Bindemittel handeln. Insbesondere kann es sich um Putze gemäß den Putz(mörtel)gruppen P Ia, P Ib, P Ic, PII, P III, P IVa, P IVb, P IVc und P IVd gemäß der DIN V 18550:2005-4 handeln.

Im Rahmen der vorliegenden Erfindung kann die Ausrüstung des Baumaterials, insbesondere wie zuvor definiert, mit dem antimikrobiellen bzw. herbiziden Biopolymer beispielsweise nachträglich erfolgen, beispielsweise mittels Auftragen der Zusammensetzung auf einen bereits vorhandenen bzw. fertiggestellten Putz oder einer aufgetragenen Farbschicht oder dergleichen. Zudem kann die Ausrüstung auch vorab erfolgen, beispielsweise durch Einmischen der Zusammensetzung in eine Ausgangsmischung bzw. Ausgangsmaterial des Baumaterials.

Die folgenden Ausführungsbeispiele dienen lediglich der Veranschaulichung der vorliegenden Erfindung.

### AUSFÜHRUNGSBEISPIELE:

Die nachfolgenden Ausführungsbeispiele verdeutlichen die Vorteile und speziellen Eigenschaften und Besonderheiten, wie sie mit der erfindungsgemäßen Konzeption einhergehen.

Dabei ist auch hervorzuheben, dass Chitosan als solches in seiner Stoffform zumeist körnig oder in Form von Schuppen vorliegt und in Bezug auf den Stand der Technik nur unzureichend in einem insbesondere wässrigen Trägersystem eingebracht bzw. stabilisiert werden kann. Wässrige Chitosanmischungen ohne weiterführende Stabilisierung bzw. des Standes der Technik zeigen bei der Lagerung bei Raumtemperatur oftmals schon nach kurzer Zeit eine Farbverschiebung nach gelb, die sich im weiteren Verlauf zu dunkelbraun verändern kann, wobei es nachfolgend oder einhergehen zusätzlich noch zu einer Flokkulation kommen kann. Demgegenüber weisen die erfindungsgemäßen Zusammensetzungen eine verbesserte Stabilität bzw. eine bessere Einarbeitung des Chitosans auf.

Die vorteilhaften Eigenschaften der erfindungsgemäßen Chitosan-Lösungen können insbesondere auch anhand der UV-Absorption wässriger Lösungen gezeigt werden. Vorteilhaft in die Zusammensetzung eingebrachtes bzw. komplexiertes Chitosan zeigt in UV-Vis-Spektren eine charakteristische Absorption. Nicht aktiviertes Chitosan in Lösung zeigt demgegenüber eine charakteristische Bande bei ca. 200 nm.

Im Hinblick auf die nachfolgenden Zusammensetzung wird als Biopolymer ein Chitosan mit einem gewichtsmittleren Molekulargewicht Mw von etwa 8.000 Da bzw. einem zahlenmittlerem Molekulargewicht Mₙ von etwa 8.480 Da (d.h. mit einem Polydispersitätsindex (PDI), berechnet als Quotient aus gewichtsmittlerem Molekulargewicht M_{w} und zahlenmittlerem Molekulargewicht Mₙ, von etwa 1,06).
**1.** **Herstellungsbeispiele** / **Beispielrezepturen** / **Anwendung an Baumaterialien**
Die nachfolgend beispielhaft angeführten Zusammensetzungen nach der Erfindung können durch Zusammenfügen bzw. Einmischen der Komponenten in das Trägermedium in Form von Wasser erhalten werden. Das Chitosan kann in diesem Zusammenhang auch vordispergiert werden, beispielsweise in dem eingesetzten Additiv, wie Glycerin, insbesondere gemeinsam mit einer Säurekomponente des Additivs, wie Salicylsäure.

| **Zusammensetzung** | **A1** | **A2** | **A3** | **A4** | **A5** | **A6** |
|---|---|---|---|---|---|---|
| | Gew.-% | Gew.-% | Gew.-% | Gew.-% | Gew.-% | Gew.-% |
| Chitosan | 4 | 3 | 3 | 5 | 4 | 3 |
| Ascorbinsäure | 4 | 3 | | 1 | | |
| Salicylsäure | | | | 4 | | |
| Keratin-Hydrolysat | | | | | 2 | |
| Cystein | | | | | 1 | |
| Resveratrol | | 0,5 | | | 0,7 | |
| Chondroitinsulfat | | | 2 | | | 1,5 |
| Natrium-Alginate | | | 1 | | | 1 |
| Pektin | | | | | | 1 |
| Molkeprotein | | | | | 1 | |
| Milchsäure | | | 0,3 | | 0,5 | 0,2 |
| Lecithin | | 1 | | | 1 | |
| Glycerin | | 20 | 10 | 15 | 25 | |
| Wasser | 92 | 72,5 | 83,7 | 75 | 64,8 | 93,3 |
| | | | | | | |
| Gesamt | 100 | 100 | 100 | 100 | 100 | 100 |

| **Zusammensetzung** | **A7** |
|---|---|
| | Gew.-% |
| Chitosan | 3 |
| Ascorbinsäure | 3 |
| Resveratrol | 0,5 |
| Lecithin | 1 |
| Glycerin | 20 |
| Alkylpoly Glucosid 818 | 15 |
| Milchsäure | 1,7 |
| Wasser | 55,8 |
| | |
| Gesamt | 100 |

| **Zusammensetzung** | **A8** |
|---|---|
| | Gew.-% |
| Chitosan | 4 |
| Ascorbinsäure | 2 |
| Cystus | 1 |
| Milchsäure | 2 |
| Lecithin | 2 |
| Cocamidopropylbetaine | 5 |
| Alkylpoly Glucosid 818 | 10 |
| Wasser | 74 |
| | |
| Gesamt | 100 |

Die Zusammensetzungen weisen eine hohe (Lager-)Stabilität und eine antimikrobielle Wirksamkeit auf. Insbesondere ermöglichen die erfindungsgemäßen Zusammensetzungen eine stabile und homogene sowie dauerhafte Inkorporation des antimikrobiellen Biopolymers, und zwar auch bei Temperaturen bis zu 40 °C.
Weiterhin können die erfindungsgemäßen Zusammensetzungen zur Ausrüstung eines erfindungsgemäßem Baumaterials mit antimikrobiellen bzw. herbiziden Eigenschaften bzw. mit dem antimikrobiellen bzw. herbiziden Biopolymer in Form von Chitosan eingesetzt werden. Im Rahmen der Ausrüstung eines Baumaterials in Form von (Außen-)Putzen mittels eines Auftrags bzw. Aufsprühens der entsprechenden Zusammensetzungen auf die Putzoberfläche, gefolgt von einem Entfernen des Wassers bzw. einer Trocknung, weisen die so behandelten Putze in entsprechender Weise antimikrobielle bzw. herbizide Eigenschaften auf.
**2.** **weitere Zusammensetzungen** / **Untersuchungen**
(i) Zudem werden folgende Zusammensetzungen hergestellt und hinsichtlich ihrer jeweiligen Stabilität Zur Bestimmung der Stabilität anhand von UV-Spektren untersucht:

| **Zusammensetzung** | **A9** | **A10** | **A11** | **A12** |
|---|---|---|---|---|
| | Gew.-% | Gew.-% | Gew.-% | Gew.-% |
| Lecithin | 9,8 | 10,1 | 8,6 | 10 |
| Salicylsäure | 4,1 | 1 | 0 | 0 |
| Mandelsäure | 0 | 0 | 2,3 | 0 |
| Milchsäure | 0 | 0 | 0 | 0,6 |
| Chitosan | 4,1 | 5,9 | 5,9 | 6,5 |
| Wasser | 82 | 83 | 83,3 | 82,9 |
| | | | | |
| Gesamt | 100 | 100 | 100 | 100 |

Die Zusammensetzungen sind gelförmig und lassen den Schluss zu, dass das Chitosan effektiv gelöst wird. Wird das eingesetzte molekulare Verhältnis von Chitosan zu eingesetzten Additiven in Form der Säuren in Relation gesetzt, so ergibt sich folgende Abhängigkeit (mit R² = 0,96):

| **Absorption** | **Verhältnis Chitosan/Säurekomponente** |
|---|---|
| 0,8 | 0,86 |
| 0,25 | 0,41 |
| 0,2 | 0,21 |
| 0,03 | 0,16 |

Insbesondere kann die Aktivität des Chitosan durch gezielte Einstellung der Menge der Additive insbesondere im Verhältnis zu der Menge an Chitosan vorgegeben bzw. beeinflusst werden.
(ii) Weiterhin werden die antimikrobiellen Eigenschaften der folgenden Zusammensetzungen mittels eines Challenge-Tests untersucht:

| **Zusammensetzung** | **A13** | **A14** |
|---|---|---|
| | Gew.-% | Gew.-% |
| Sorbitan Caprylat | 0,5 | 0,5 |
| Lecithin | 0,5 | 0,5 |
| Chitosan | 1 | 1 |
| Mandelsäure | 1 | |
| Ascorbinsäure | | 1 |
| Wasser | 97 | 97 |
| | | |
| Gesamt | 100 | 100 |

| **Zusammensetzung** | **A15** |
|---|---|
| | Gew.-% |
| Keratinhydrolysat | 3 |
| Chitosan | 1 |
| Wasser | 96 |
| | |
| Gesamt | 100 |

Die Prüfparameter werden gemäß Ph. Eur. 5.1.3 durchgeführt. Als Testkeime werden *Pseudomonas aeruginosa* (ATCC 9027): mindestens 100.000 bis höchstens 1.000.000 KBE/g 340.000 KBE/g, *Staphylococcus aureus* (ATCC 6538): mindestens 100.000 bis höchstens 1.000.000 KBE/g 170.000 KBE/g, *Candida albicans* (ATCC 10231): mindestens 100.000 bis höchstens 1.000.000 KBE/g 570.000 KBE/g und *Aspergillus brasiliensis* (ATCC 16404): mindestens 100.000 bis höchstens 1.000.000 KBE/g 340.000 KBE/g eingesetzt.
Im Keimbelastungstest erfüllten die Zusammensetzungen das A-Kriterium.
Kombinationen auf Basis von Chitosan mit Mandelsäure, Salicylsäure, Ascorbinsäure oder Milchsäure weisen besonders gute Eigenschaften auf, wobei die antimikrobielle Wirkung bei den vorliegenden Verhältnissen von Additiv bzw. Komplexbildner zu Chitosan besonders gut ist. Weiterhin werden besonders gute Ergebnisse erhalten, wenn pro Monomereinheit Glucosamin im Chitosan insbesondere von 0,6 bis 1,25 Einheiten, wie zuvor definiert, Mandelsäure, Salicylsäure, Ascorbinsäure oder Milchsäure vorliegen. Auch erfindungsgemäße Chitosan-Zusammensetzungen mit Proteinhydrolysat, wie z.B. Keratinhydrolysat oder Molke, bestehen den Keimbelastungstest, wie zuvor angeführt.

(iii) Die erfindungsgemäßen Chitosan-Zusammensetzungen lassen sich zudem flexibel in ihrer Viskosität einstellen. Beispielsweise lässt sich die Viskosität über den Zusatz von Alginaten einstellen. Die aus den erfindungsgemäßen Zusammensetzungen bzw. Lösungen gebildeten Beschichtungen bzw. Filme zeigen eine deutlich bessere Festigkeit auf, und zwar ohne an Elastizität zu verlieren. Der synergistische Effekt der Viskositätsbildung kann auch in der Viskositätsregulierung und Stabilisierung von Emulsionen genutzt werden. Diese Eigenschaften sind besonders von Interesse, da zur Viskositätsregulierung im Allgemeinen vorwiegend Polyacrylsäurederivate eingesetzt werden, die Mikroplastik in die Umwelt freisetzen. Eine erfindungsgemäße Zusammensetzung bzw. Rezeptur ergibt sich beispielsweise wie folgt:

| **Zusammensetzung** | **A16** |
|---|---|
| | Gew.-% |
| Chitosan | 0,64 |
| Keratin | 0,64 |
| Na-Alginate | 0,4 |
| Salicylsäure | 0,46 |
| Wasser | 97,86 |
| | |
| Gesamt | 100 |

(iv) Die erfindungsgemäßen Zusammensetzungen können beispielsweise auch in Form von Emulsionen bereitgestellt werden. Eine mögliche Art der Herstellung kann beispielsweise darin bestehen, dass folgende Rezepturen:

| **Zusammensetzung** | **A17** | **A18** |
|---|---|---|
| **Phase A** | Gew.-% | Gew.-% |
| Glycerin | 10 | 0 |
| Chitosan | 2 | 2 |
| Mandelsäure | 2 | 0 |
| Ascorbinsäure | 0 | 2 |

| **Phase B** | | 1 |
|---|---|---|
| Molke | 0 | 10 |
| Keratinhydrolysat | 5 | 0 |
| Wasser | 10 | 20 |

| **Phase C** | | |
|---|---|---|
| Wasser | 41 | 36 |

| **Phase D** | | |
|---|---|---|
| Capric Caprylic Triglycerid | 30 | 30 |
| | | |
| Gesamt | 100 | 100 |
| | | |
| Partikelgröße median (µ) | 2,8 | 2,3 |
| Varianz ± (µ) | 1,8 | 1,4 |

jeweils in einem Verfahren verarbeitet werden, bei welchem Phase A homogen vermischt wird; Phase A unter Rühren in Phase B gegeben wird, bis ein homogenes Gel entstanden ist; Phase C unter Rühren in Phase A/B gegeben und anschließend Phase D unter Rühren in Phase A/B/C geben und diese dann homogenisiert wird, bis eine homogene Emulsion entstanden ist. Es ergeben sich auch unter Einsatz nur geringer Scherkräfte langzeitstabile Emulsionen, welche insbesondere auch eine monomodale Tröpfchengrößenverteilung aufweisen können.
Es können auch Emulsionen hergestellt werden, welche in der Ölphase amphiphile Öle enthalten, die ein antimikrobielles Spektrum bzw. diesbezügliche Eigenschaften aufweisen:

| **Zusammensetzung** | **A19** |
|---|---|
| **Phase A** | Gew.-% |
| Sorbitan Caprylat | 5 |
| Lecithin | 5 |
| Chitosan | 2 |
| Mandelsäure | 2 |

| **Phase B** | |
|---|---|
| Wasser | 56 |

| **Phase C** | |
|---|---|
| Schwarzkümmelöl | 30 |
| | |
| Gesamt | 100 |
| | |
| Partikelgröße median (µ) | 1,9 |
| Varianz ± (µ) | 1,4 |

(v) Die erfindungsgemäßen Chitosan-Zusammensetzungen, insbesondere Chitosan-Lösungen bzw. Chitosan-Dispersionen, insbesondere in Verbindung mit den erfindungsgemäß eingesetzten Additiven bzw. mit der mengenmäßigen Abstimmung der Komponenten zueinander, weisen eine verbesserte Anti-Moos-Wirkung in Bezug auf Fassaden auf. Eine Fassade wird mit folgenden Zusammensetzungen bzw. Rezepturen behandelt:

| **Zusammensetzung** | **A20** | **A21** | **A22** |
|---|---|---|---|
| | Gew.-% | Gew.-% | Gew.-% |
| Glycerin | 15 | 15 | 15 |
| Chitosan | 2 | 2 | 2 |
| Mandelsäure | 2 | | |
| Ascorbinsäure | | 2 | |
| Salicylsäure | | | 2 |
| Wasser | 81 | 81 | 81 |
| | | | |
| Gesamt | 100 | 100 | 100 |

Die Herstellung der Rezepturen erfolgt insbesondere wie folgt: Chitosan und die entsprechende Säure werden in Glycerin vordispergiert und die erhaltene Vordispersion wird mit Wasser unter Rühren vermischt. Es werden klare Lösungen erhalten, welche auf eine mit Moos befallene Hauswand aufgesprüht werden. Die erfindungsgemäßen Zusammensetzungen führen nach 48 h bis 72 h zu einer deutlichen Reduzierung der Moose. Die Fassadenwand erhält an den behandelten Stellen wieder ihre ursprüngliche Färbung. Die Anti-Moos-Wirkung bleibt auch über eine längere Zeit erhalten. Insbesondere bildet sich nach Entfernen des Wassers ein schützender Fassadenüberzug. Die Anti-Moos-Wirkung und Dauerhaftigkeit der diesbezüglichen Wirkung kann nochmals erhöht werden, wenn in der Zusammensetzungen spezielle Verhältnisse von Chitosan zu den Additiven vorliegen, und zwar wenn pro Monomereinheit Glucosamin im Chitosan insbesondere von 0,6 bis 1,25 Einheiten des Additivs, wie zuvor definiert, vorliegen.
Vergleichszusammensetzungen ohne die erfindungsgemäß vorgesehenen Rezepturbestandteile zeigen demgegenüber allenfalls nur eine deutlich verringerte Anti-Moos-Wirkung, welche zudem auch nicht dauerhaft ist. Es ergibt sich für diese Lösungen nur eine deutlich geringere Verschiebung zu der ursprünglichen Fassadenfarbe, zudem tritt die verringerte Wirkung auch langsamer ein.
Zudem werden folgende Rezepturen mit unterschiedlichem Molverhältnis Chitosan zu Additiv bzw. organischer Säure an befallenen Hauswänden bzw. Fassaden getestet.

| **Zusammensetzung** | **A23** | **A24** | **A25** | **A26** |
|---|---|---|---|---|
| | Gew.-% | Gew.-% | Gew.-% | Gew.-% |
| Salicylsäure | 2,5 | 1 | 0 | 0 |
| Ascorbinsäure | 0 | 0 | 2,5 | 1 |
| Chitosan | 2,5 | 2,5 | 2,5 | 2,5 |
| Glyerin | 15 | 15 | 15 | 15 |
| Wasser | 80 | 81,5 | 80 | 81,5 |
| | | | | |
| Gesamt | 100 | 100 | 100 | 100 |

Beim Auftragen diese insbesondere gelförmig ausgebildeten Zusammensetzungen auf eine stark mit Moos befallene Hauswand kann festgestellt werden, dass die Rezepturen mit einem Chitosan/Säure Verhältnis von etwa 0,86 und etwa 1,1 weisen die höchste Wirksamkeit auf, wobei innerhalb von 3 Tagen der Bafall vollständig beseitigt ist.
(vi) Weiterhin wird der Einfluss von Calciumionen und Magnesiumionen auf die Wirkung gegen Moose einer erfindungsgemäßen Chitosan-Zusammensetzung untersucht. Hierzu wird ein erster Fassadenabschnitt mit einer erfindungsgemäßen Chitosan-Zusammensetzung, welche Calciumionen und Magnesiumionen in einer Menge von etwa 15 mmol/l enthält, behandelt, wobei die Ionen auf Basis von anorganischen Salzen eingesetzt werden. Ein zweiter Fassadenabschnitt wird zudem mit einer korrespondierenden erfindungsgemäßen Chitosan-Zusammensetzung, welche jedoch keine Calciumionen und keine Magnesiumionen enthält, behandelt. Ein dritter Fassadenabschnitt wird zudem mit einer wiederum korrespondierenden Zusammensetzung, welche jedoch kein Chitosan sowie keine Calciumionen und keine Magnesiumionen enthält, behandelt. Während für den dritten Fassadenabschnitt bereits nach einem relativ kurzen Zeitraum ein deutlicher Bewuchs mit Moosen bzw. Algen vorliegt, welcher im weiteren Verlauf noch deutlich zunimmt, ist für den zweiten Fassadenabschnitt auch nach etwa einem Jahr allenfalls nur ein geringer Befall zu beobachten, welcher im weiteren Verlauf auch nur geringfügig zunimmt, so dass auch nach mehr als eineinhalb Jahren insgesamt ein nur geringer Bewuchs vorliegt. Für den ersten Fassadenabschnitt zeigt sich darüber hinaus auch nach mehr als eineinhalb Jahren kein nennenswerter Bewuchs. Die Untersuchungen zeigen somit die hervorragenden Eigenschaften der erfindungsgemäßen Zusammensetzungen mit Chitosan, welche durch gezielte Verwendung von Calcium- bzw. Magnesiumionen nochmals gesteigert werden kann.
(vii) Ein Holzbauteil, welches einen Moos- bzw. Algenbefall aufweist, wird mit einer erfindungsgemäßen Chitosan-Zusammensetzung behandelt. In weniger als 24 h nach dem Auftragen ist der Befall auch ohne mechanische Nachbehandlung im Wesentlichen beseitigt. Auf dieser Basis können auch Holz-Kunststoff-Verbundwerkstoffe behandelt werden.

Insgesamt zeigen die Ausführungsbeispiele die mit der vorliegenden Erfindung einhergehenden Vorteile und Besonderheiten.

## Patentansprüche

1. Baumaterial für den Gebäudebau und/oder für Gebäude, vorzugsweise für den Außenbereich und/oder Feuchtraumbereich, ausgebildet als und/oder in Form eines Gebäudeteils und/oder Gebäudebestandteils oder zur Verwendung auf Gebäudeteilen und/oder Gebäudebestandteilen,
wobei das Baumaterial mindestens ein antimikrobielles und/oder herbizides Biopolymer, ausgewählt aus Chitosan und/oder dessen Salz, enthält oder hiermit ausgerüstet ist, wobei das antimikrobielle und/oder herbizide Biopolymer ein gewichtsmittleres Molekulargewicht M_{w} im Bereich von 1.500 Da bis 9.499 Da aufweist und wobei das antimikrobielle und/oder herbizide Biopolymer einen Polydispersitätsindex, berechnet als Quotient aus gewichtsmittlerem Molekulargewicht M_{w} und zahlenmittlerem Molekulargewicht Mₙ, im Bereich von 1,05 bis 5 aufweist; und
wobei das Baumaterial mindestens ein Additiv aufweist und/oder hiermit ausgerüstet ist, wobei das Additiv ausgewählt ist aus der Gruppe von (i) Proteinen und Proteinhydrolysaten, ausgewählt aus der Gruppe von Molke, Molkeproteinen, Keratinhydrolysat, Weizenproteinhydrolysat, Kollagenhydrolysat und Gelatine; (ii) Hydroxycarbonsäuren, ausgewählt aus der Gruppe von Milchsäure, Zitronensäure, Apfelsäure, Weinsäure, Mandelsäure und Salicylsäure; und (iii) Ascorbinsäure; sowie deren Mischungen und Kombinationen.

2. Baumaterial nach Anspruch 1,
wobei das Baumaterial ausgewählt ist aus der Gruppe von (i) Putzen, insbesondere Außen- und/oder Feuchtraumputzen, sowie deren Ausgangsmischungen und - materialien; (ii) Bausteinen, insbesondere Ziegelsteinen, Kalksandsteinen und Klinkersteinen, vorzugsweise Kalksandsteinen, sowie deren Ausgangsmaterialien; (iii) Mörteln, insbesondere Außen- und/oder Feuchtraummörteln, sowie deren Ausgangsmischungen und -materialien; (iv) Zementen, insbesondere Außen- und/oder Feuchtraumzementen, sowie deren Ausgangsmischungen und -materialien, (v) Betonen, insbesondere Außen- und/oder Feuchtraumbetonen, sowie deren Ausgangsmischungen und -materialien; (vi) Anstrichfarben, insbesondere Außen- und/oder Feuchtraumanstrichfarben, vorzugsweise Mineralfarben, sowie deren Ausgangsmischungen und -materialien; (vii) Lacken, insbesondere Außen- und/oder Feuchtraumlacken, sowie deren Ausgangsmischungen und -materialien; (viii) Wandbelägen, insbesondere Tapeten, sowie deren Ausgangsmaterialien; (ix) Bodenbelägen, insbesondere Terrassen- und/oder Waschküchenbodenbelägen, sowie deren Ausgangsmaterialien; (x) Estrichen, insbesondere Außen- und/oder Feuchtraumestrichen, sowie deren Ausgangsmischungen und -materialien; (xi) Plattenelementen, insbesondere Fassadenelementen und Fassadenplatten, sowie deren Ausgangsmaterialien; (xii) Dämmelementen, insbesondere Dämmplatten, sowie deren Ausgangsmaterialien; (xiii) Holzbaumaterialien und holzbasierten Baumaterialien, insbesondere Holz- oder holzbasierten Boden-, Decken- und/oder Wandelementen und/oder -paneelen, Sperrholzplatten, OSB-Platten und Holz-Kunststoff-Verbundwerkstoffen, sowie deren Ausgangsmaterialien; und (xiv) Metallträgern und Metallsubstraten.

3. Baumaterial nach Anspruch 1 oder 2,
wobei das Baumaterial das antimikrobielle und/oder herbizide Biopolymer, vorzugsweise Chitosan, in einer Menge im Bereich von 0,00001 Gew.-% bis 20 Gew.-%, insbesondere im Bereich von 0,0001 Gew.-% bis 15 Gew.-%, vorzugsweise im Bereich von 0,001 Gew.-% bis 10 Gew.-%, bevorzugt im Bereich von 0,01 Gew.-% bis 3 Gew.-%, bezogen auf das Baumaterial, enthält; und/oder
wobei das antimikrobielle und/oder herbizide Biopolymer, vorzugsweise Chitosan, einen Acetylierungsgrad im Bereich von 2,1 % bis 40 %, insbesondere im Bereich von 2,5 % bis 30 %, vorzugsweise im Bereich von 3 % bis 25 %, bevorzugt im Bereich von 4 % bis 20 %, besonders bevorzugt im Bereich von 5% bis 15 %, bezogen auf die acetylierbaren funktionellen Gruppen, insbesondere Aminogruppen, des Biopolymers, vorzugsweise des Chitosans, aufweist.

4. Baumaterial nach einem der vorangehenden Ansprüche,
wobei das Baumaterial das Additiv in einer Menge im Bereich von 0,00001 Gew.-% bis 5 Gew.-%, insbesondere im Bereich von 0,0001 Gew.-% bis 3 Gew.-%, vorzugsweise im Bereich von 0,0005 Gew.-% bis 1 Gew.-%, bezogen auf das Baumaterial, enthält.

5. Baumaterial nach einem der vorangehenden Ansprüche,
wobei das Baumaterial mehrwertige Kationen und/oder mehrwertige Metallionen, insbesondere zweiwertige Kationen und/oder zweiwertige Metallionen, vorzugsweise Erdalkalimetallionen, bevorzugt Calciumionen und/oder Magnesiumionen, aufweist und/oder hiermit ausgerüstet ist,
insbesondere wobei die mehrwertigen Kationen und/oder die mehrwertigen Metallionen, insbesondere die zweiwertigen Kationen und/oder die zweiwertigen Metallionenen, vorzugsweise die Erdalkalimetallionen, bevorzugt die Calciumionen und/oder die Magnesiumionen, insbesondere unabhängig voneinander, in Form von Salzen, vorzugsweise in Form von anorganischen oder organischen Salzen, bevorzugt in Form von Carbonaten, Hydrogencarbonaten, Hydroxiden, Halogeniden und/oder halogenidhaltigen Salzen, eingesetzt sind oder vorliegen.

6. Verwendung eines antimikrobiellen und/oder herbiziden Biopolymers, ausgewählt aus Chitosan und/oder dessen Salz,
wobei das antimikrobielle und/oder herbizide Biopolymer ein gewichtsmittleres Molekulargewicht M_{w} im Bereich von 1.500 Da bis 9.499 Da aufweist und wobei das antimikrobielle und/oder herbizide Biopolymer einen Polydispersitätsindex, berechnet als Quotient aus gewichtsmittlerem Molekulargewicht M_{w} und zahlenmittlerem Molekulargewicht Mₙ, im Bereich von 1,05 bis 5 aufweist und
wobei das antimikrobielle und/oder herbizide Biopolymer gemeinsam mit mindestens einem Additiv verwendet wird, wobei das Additiv ausgewählt ist aus der Gruppe von (i) Proteinen und Proteinhydrolysaten, ausgewählt aus der Gruppe von Molke, Molkeproteinen, Keratinhydrolysat, Weizenproteinhydrolysat, Kollagenhydrolysat und Gelatine; (ii) Hydroxycarbonsäuren, ausgewählt aus der Gruppe von Milchsäure, Zitronensäure, Apfelsäure, Weinsäure, Mandelsäure und Salicylsäure; und (iii) Ascorbinsäure; sowie deren Mischungen und Kombinationen,
zur Ausrüstung und/oder zum Erhalt eines Baumaterials für den Gebäudebau und/oder für Gebäude, vorzugsweise für den Außenbereich und/oder Feuchtraumbereich, insbesondere wie in einem der vorangehenden Ansprüche definiert, mit antimikrobiellen und/oder herbiziden Eigenschaften; oder
zur Verringerung der Verkeimung und/oder des Algen- und/oder Moos- und/oder Pilzbefalls eines Baumaterials für den Gebäudebau und/oder für Gebäude, vorzugsweise für den Außenbereich und/oder Feuchtraumbereich, insbesondere wie in einem der vorangehenden Ansprüche definiert.

7. Verwendung nach Anspruch 6,
wobei das antimikrobielle und/oder herbizide Biopolymer, vorzugsweise Chitosan, einen Acetylierungsgrad im Bereich von 2,1 % bis 40 %, insbesondere im Bereich von 2,5 % bis 30 %, vorzugsweise im Bereich von 3 % bis 25 %, bevorzugt im Bereich von 4 % bis 20 %, besonders bevorzugt im Bereich von 5% bis 15 %, bezogen auf die acetylierbaren funktionellen Gruppen, insbesondere Aminogruppen, des Biopolymers, vorzugsweise des Chitosans, aufweist.

8. Verwendung nach Anspruch 6 oder 7,
wobei das antimikrobielle und/oder herbizide Biopolymer, vorzugsweise Chitosan, eine Eigenschaft, ausgewählt aus der Gruppe von (i) antibakteriellen Eigenschaften, insbesondere bakteriziden und bakteriostatischen Eigenschaften; (ii) antimykotischen Eigenschaften, insbesondere fungistatischen und fungiziden Eigenschaften; (iii) herbiziden und herbistatischen Eigenschaften; (iv) antialgischen Eigenschaften, insbesondere algistatischen und algiziden Eigenschaften; und (vi) deren Kombinationen, aufweist; und/oder
wobei das antimikrobielle und/oder herbizide Biopolymer, vorzugsweise Chitosan, das Wachstum und/oder die Aktivität von Bakterien, Pilzen, Viren, Algen, Moosen und/oder Flechten hemmende und/oder verhindernde Eigenschaften aufweist.

9. Verwendung nach einem der Ansprüche 6 bis 8,
wobei das antimikrobielle und/oder herbizide Biopolymer, vorzugsweise Chitosan, gemeinsam mit mehrwertigen Kationen und/oder mehrwertigen Metallionen, insbesondere zweiwertigen Kationen und/oder zweiwertigen Metallionen, vorzugsweise Erdalkalimetallionen, bevorzugt Calciumionen und/oder Magnesiumionen, verwendet wird,
insbesondere wobei die mehrwertigen Kationen und/oder die mehrwertigen Metallionen, insbesondere die zweiwertigen Kationen und/oder die zweiwertigen Metallionenen, vorzugsweise die Erdalkalimetallionen, bevorzugt die Calciumionen und/oder die Magnesiumionen, insbesondere unabhängig voneinander, in Form von Salzen, vorzugsweise in Form von anorganischen oder organischen Salzen, bevorzugt in Form von Carbonaten, Hydrogencarbonaten, Hydroxiden, Halogeniden und/oder halogenidhaltigen Salzen, eingesetzt werden oder vorliegen.

10. Zusammensetzung, bevorzugt in Form einer wässrig ausgebildeten und/oder insbesondere wässrig basierten Lösung oder Dispersion, zur Ausrüstung und/oder zum Erhalt eines Baumaterials, insbesondere wie in einem der Ansprüche 1 bis 5 definiert, mit mindestens einem antimikrobiellen und/oder herbiziden Biopolymer,
wobei die Zusammensetzung die folgenden Inhaltsstoffe enthält:
(a) mindestens ein antimikrobielles und/oder herbizides Biopolymer, ausgewählt aus Chitosan und/oder dessen Salz, wobei das antimikrobielle und/oder herbizide Biopolymer ein gewichtsmittleres Molekulargewicht M_{w} im Bereich von 1.500 Da bis 9.499 Da aufweist und wobei das antimikrobielle und/oder herbizide Biopolymer einen Polydispersitätsindex, berechnet als Quotient aus gewichtsmittlerem Molekulargewicht M_{w} und zahlenmittlerem Molekulargewicht Mₙ, im Bereich von 1,05 bis 5 aufweist;
(b) mindestens ein Additiv, insbesondere mindestens ein Additiv zur Verbesserung der Verteilung und/oder der Homogenisierung des (a) Biopolymers,
wobei das Additiv ausgewählt ist aus der Gruppe von Lösungsvermittlern, Dispergiermitteln und Komplexbildnern sowie deren Mischungen und Kombinationen, wobei das (b) Additiv ausgewählt ist aus der Gruppe von (i) Proteinen und Proteinhydrolysaten, ausgewählt aus der Gruppe von Molke, Molkeproteinen, Keratinhydrolysat, Weizenprotein-hydrolysat, Kollagenhydrolysat und Gelatine; (ii) Hydroxycarbonsäuren, ausgewählt aus der Gruppe von Milchsäure, Zitronensäure, Apfelsäure, Weinsäure, Mandelsäure und Salicylsäure; und (iii) Ascorbinsäure; sowie deren Mischungen und Kombinationen; und
(c) mindestens ein Trägermedium, insbesondere mindestens ein bei Raumtemperatur und Umgebungsdruck flüssiges Trägermedium, vorzugsweise Wasser;
wobei die Zusammensetzung einen pH-Wert von höchstens 7 aufweist.

11. Zusammensetzung nach Anspruch 10,
wobei die Zusammensetzung einen pH-Wert von höchstens 6,75, vorzugsweise höchstens 6,5, bevorzugt höchstens 6,25, besonders bevorzugt höchstens 6, ganz besonders höchstens 5,4, weiter bevorzugt höchstens 4,9 aufweist; und/oder
wobei die Zusammensetzung einen pH-Wert im Bereich von 2 bis 7, insbesondere im Bereich von 2,5 bis 6,75, vorzugsweise im Bereich von 3 bis 6,5, bevorzugt im Bereich von 3,5 bis 6,25, besonders bevorzugt im Bereich von 4 bis 6, ganz besonders bevorzugt im Bereich von 4 bis 5,4, weiter bevorzugt im Bereich von 4 bis 4,9, aufweist; und/oder
wobei die Zusammensetzung das (a) antimikrobielle und/oder herbizide Biopolymer, vorzugsweise Chitosan, in einer Menge im Bereich von 0,01 Gew.-% bis 25 Gew.-%, insbesondere im Bereich von 0,05 Gew.-% bis 20 Gew.-%, vorzugsweise im Bereich von 0,1 Gew.-% bis 15 Gew.-%, bevorzugt im Bereich von 0,5 Gew.-% bis 10 Gew.-%, besonders bevorzugt im Bereich von 1 Gew.-% bis 6 Gew.-%, bezogen auf die Zusammensetzung, enthält; und/oder
wobei das antimikrobielle und/oder herbizide Biopolymer, vorzugsweise Chitosan, einen Acetylierungsgrad im Bereich von 2,1 % bis 40 %, insbesondere im Bereich von 2,5 % bis 30 %, vorzugsweise im Bereich von 3 % bis 25 %, bevorzugt im Bereich von 4 % bis 20 %, besonders bevorzugt im Bereich von 5% bis 15 %, bezogen auf die acetylierbaren funktionellen Gruppen, insbesondere Aminogruppen, des Biopolymers, vorzugsweise des Chitosans, aufweist.

12. Zusammensetzung nach Anspruch 10 oder 11,
wobei die Zusammensetzung das (b) Additiv in einer Menge im Bereich von 0,1 Gew.-% bis 49 Gew.-%, insbesondere im Bereich von 0,5 Gew.-% bis 45 Gew.-%, vorzugsweise im Bereich von 1 Gew.-% bis 40 Gew.-%, bevorzugt im Bereich von 1,5 Gew.-% bis 35 Gew.-%, besonders bevorzugt im Bereich von 2 Gew.-% bis 32,5 Gew.-%, bezogen auf die Zusammensetzung, enthält.

13. Zusammensetzung nach einem der Ansprüche 10 bis 12,
wobei das (b) Additiv funktionelle Gruppen in Form von Hydroxylgruppen, Carboxylgruppen und/oder Carbonylgruppen, vorzugsweise Hydroxylgruppen und/oder Carboxylgruppen aufweist; und/oder
wobei das (b) Additiv in einer Menge eingesetzt ist derart, dass das molare Verhältnis der funktionellen Gruppen des (b) Additivs, vorzugsweise in Form von Hydroxylgruppen, Carboxylgruppen und/oder Carbonylgruppen, bevorzugt Hydroxylgruppen und/oder Carboxylgruppen, zu den acetylierten Gruppen, insbesondere zu den acetylierten Aminogruppen, des (a) Biopolymers im Bereich von 0,2 bis 2, insbesondere im Bereich von 0,3 bis 1,5, vorzugsweise im Bereich von 0,4 bis 1,3, bevorzugt im Bereich von 0,6 bis 1,25, liegt; und/oder
wobei die Zusammensetzung das (a) Biopolymer und das (b) Additiv in einem gewichtsbezogenem Verhältnis von (a) Biopolymer, bevorzugt Chitosan, zu (b) Additiv im Bereich von 1:1 bis 1.000: 1, insbesondere im Bereich von 2:1 bis 500:1, vorzugsweise im Bereich von 10 : 1 bis 2500 : 1, aufweist.

14. Verwendung einer Zusammensetzung, insbesondere wässrige Zusammensetzung, vorzugsweise in Form einer Lösung oder Dispersion, bevorzugt in Form einer wässrig ausgebildeten und/oder insbesondere wässrig basierten Lösung oder Dispersion, wie in einem der Ansprüche 10 bis 13 definiert,
zur Ausrüstung und/oder zum Erhalt eines Baumaterials für den Gebäudebau und/oder für Gebäude, vorzugsweise für den Außenbereich und/oder Feuchtraumbereich, insbesondere wie in einem der Ansprüche 1 bis 5 definiert, mit antimikrobiellen und/oder herbiziden Eigenschaften; oder
zur Verringerung der Verkeimung und/oder des Algen- und/oder Moos- und/oder Pilzbefalls eines Baumaterials für den Gebäudebau und/oder für Gebäude, vorzugsweise für den Außenbereich und/oder Feuchtraumbereich, insbesondere wie in einem der Ansprüche 1 bis 5 definiert; oder
zum Verfüllen und/oder Verschließen von Fugen und/oder Rissen eines Baumaterials für den Gebäudebau und/oder für Gebäude, vorzugsweise für den Außenbereich und/oder Feuchtraumbereich, insbesondere wie in einem der Ansprüche 1 bis 5 definiert, insbesondere zum Verfüllen und/oder Verschließen von Fugen und/oder Rissen bei Putzen, Bausteinen, insbesondere Kalksandsteinen, Zement- und/oder Betonkörpern bzw. -flächen, Bodenbelägen, Estrichen, Plattenelementen oder dergleichen; oder
als Fugen- und/oder Rissverfüllungszusammensetzung; oder
zum Grundieren eines Baumaterials für den Gebäudebau und/oder für Gebäude, vorzugsweise für den Außenbereich und/oder Feuchtraumbereich, insbesondere wie in einem der Ansprüche 1 bis 5 definiert, vorzugsweise zum Grundieren von Putzen, Bausteinen, insbesondere Kalksandsteinen, Zement- und/oder Betonkörpern bzw. - flächen, Wandbelägen, Bodenbelägen, Estrichen, Plattenelementen oder dergleichen, vorzugsweise Spanplatten oder OSB-Platten, bevorzugt zu Zwecken der Verbesserung der Haftung von Farben, insbesondere Mineralfarben, Lacken oder dergleichen; oder
als Grundierungs- und/oder Haftvermittlerzusammensetzung; oder
zum Imprägnieren eines Baumaterials für den Gebäudebau und/oder für Gebäude, vorzugsweise für den Außenbereich und/oder Feuchtraumbereich, insbesondere wie in einem der Ansprüche 1 bis 5 definiert, vorzugsweise zum Imprägnieren von Putzen, Bausteinen, insbesondere Kalksandsteinen, Zement- und/oder Betonkörpern bzw. -flächen, Farben, insbesondere Mineralfarben, Lacken oder dergleichen, Wandbelägen, Bodenbelägen, Estrichen, Plattenelementen oder dergleichen, bevorzugt zur Ausrüstung der vorgenannten Baumaterialien mit feuchtigkeits- und/oder schmutzabweisenden Eigenschaften und/oder zur Bereitstellung eines Lotuseffekts; oder
als Imprägnier- und/oder Schmutzschutzzusammensetzung; oder
als Bestandteil von Farben, insbesondere Mineralfarben, Lacken oder dergleichen, insbesondere zur Erhöhung der Haftung und/oder Kompatibilität gegenüber Substraten und/oder zur Erhöhung Standzeit und/oder der Wetterbeständigkeit und/oder zur Verringerung der Verkeimung und/oder des Algen- und/oder Moos- und/oder Pilzbefalls der Farben, insbesondere Mineralfarben, Lacken oder dergleichen; oder
zum Verkleben von Wandbelägen, insbesondere Tapeten, vorzugsweise papierbasierten Tapeten, und/oder als Haftmittel und/oder Klebstoff für Wandbeläge, insbesondere Tapeten, vorzugsweise papierbasierte Tapeten; oder
als Klebstoff- und/oder Haftzusammensetzung; oder
zur Ausrüstung von Metallträgern und/oder Metallsubstraten mit Korrosionsschutzeigenschaften; oder
als Korrosionsschutzmittel; oder
zur Ausrüstung von insbesondere im Seewasserbereich eingesetzten Bauteilen oder Gegenständen, insbesondere Schiffen, Booten, Bojen, Netzen, Unterwasserröhren, Ölplattformen oder dergleichen mit Antifouling-Eigenschaften; oder
als Antifouling-Zusammensetzung, insbesondere als *Antifouling*-Behandlungszusammensetzung vorzugsweise für im Seewasserbereich eingesetzte Bauteile oder Gegenstände.

15. Verfahren zur Ausrüstung und/oder zum Erhalt eines Baumaterials für den Gebäudebau und/oder für Gebäude, vorzugsweise für den Außenbereich und/oder Feuchtraumbereich, insbesondere wie in einem der Ansprüche 1 bis 5 definiert, mit antimikrobiellen und/oder herbiziden Eigenschaften; oder
zur Erhöhung der Standzeit und/oder der Wetterbeständigkeit, insbesondere zur Erhöhung der Langzeit- und/oder Bewitterungsbeständigkeit eines Baumaterials für den Gebäudebau und/oder für Gebäude, vorzugsweise für den Außenbereich und/oder Feuchtraumbereich, insbesondere wie in einem der Ansprüche 1 bis 5 definiert; oder
zur Verringerung der Verkeimung und/oder des Algen- und/oder Moos- und/oder Pilzbefalls eines Baumaterials für den Gebäudebau und/oder für Gebäude, vorzugsweise für den Außenbereich und/oder Feuchtraumbereich, insbesondere wie in einem der Ansprüche 1 bis 5 definiert; oder
zum Verfüllen und/oder Verschließen von Fugen und/oder Rissen eines Baumaterials für den Gebäudebau und/oder für Gebäude, vorzugsweise für den Außenbereich und/oder Feuchtraumbereich, insbesondere wie in einem der Ansprüche 1 bis 5 definiert, insbesondere zum Verfüllen und/oder Verschließen von Fugen und/oder Rissen bei Putzen, Bausteinen, insbesondere Kalksandsteinen, Zement- und/oder Betonkörpern bzw. -flächen, Bodenbelägen, Estrichen, Plattenelementen oder dergleichen; oder
zum Grundieren eines Baumaterials für den Gebäudebau und/oder für Gebäude, vorzugsweise für den Außenbereich und/oder Feuchtraumbereich, insbesondere wie in einem der Ansprüche 1 bis 5 definiert, vorzugsweise zum Grundieren von Putzen, Bausteinen, insbesondere Kalksandsteinen, Zement- und/oder Betonkörpern bzw. -flächen, Wandbelägen, Bodenbelägen, Estrichen, Plattenelementen oder dergleichen, vorzugsweise Spanplatten oder OSB-Platten, bevorzugt zur Verbesserung der Haftung von Farben, insbesondere Mineralfarben, Lacken oder dergleichen; oder
zum Imprägnieren eines Baumaterials für den Gebäudebau und/oder für Gebäude, vorzugsweise für den Außenbereich und/oder Feuchtraumbereich, insbesondere wie in einem der Ansprüche 1 bis 5 definiert, vorzugsweise zum Imprägnieren von Putzen, Bausteinen, insbesondere Kalksandsteinen, Zement- und/oder Betonkörpern bzw. -flächen, Farben, insbesondere Mineralfarben, Lacken oder dergleichen, Wandbelägen, Bodenbelägen, Estrichen, Plattenelementen oder dergleichen, bevorzugt zur Ausrüstung der vorgenannten Baumaterialien mit feuchtigkeits- und/oder schmutzabweisenden Eigenschaften und/oder zur Bereitstellung eines Lotuseffekts; oder
zum Verkleben von Wandbelägen, insbesondere Tapeten, vorzugsweise papierbasierten Tapeten, und/oder als Haftmittel und/oder Klebstoff für Wandbeläge, insbesondere Tapeten, vorzugsweise papierbasierte Tapeten; oder
zur Ausrüstung von Metallträgern und/oder Metallsubstraten mit Korrosionsschutzeigenschaften; oder
zur Ausrüstung von insbesondere im Seewasserbereich eingesetzten Bauteilen oder Gegenständen, insbesondere Schiffen, Booten, Bojen, Netzen, Unterwasserröhren, Ölplattformen oder dergleichen, mit Antifouling-Eigenschaften;
wobei das Baumaterial und/oder der Gegenstand mit einer Zusammensetzung, wie in einem der 10 bis 13 definiert, in Kontakt gebracht wird, insbesondere wobei nachfolgend das Trägermedium der Zusammensetzung entfernt wird.

## Claims

1. Building material for building construction and/or for buildings, preferably for outdoor use and/or damp areas, designed as and/or in the form of a building part and/or building component or for use on building parts and/or building components,
wherein the building material contains or is equipped with at least one antimicrobial and/or herbicidal biopolymer selected from chitosan and/or its salt, wherein the antimicrobial and/or herbicidal biopolymer has a weight-average molecular weight M_{w} in the range from 1500 Da to 9,499 Da and wherein the antimicrobial and/or herbicidal biopolymer has a polydispersity index, calculated as the quotient of weight average molecular weight M_{w} and number average molecular weight Mₙ , in the range of 1.05 to 5; and
wherein the building material comprises and/or is provided with at least one additive, wherein the additive is selected from the group of (i) proteins and protein hydrolysates selected from the group of whey, whey proteins, keratin hydrolysate, wheat protein hydrolysate, collagen hydrolysate and gelatin; (ii) hydroxycarboxylic acids selected from the group consisting of lactic acid, citric acid, malic acid, tartaric acid, mandelic acid and salicylic acid; and (iii) ascorbic acid; and mixtures and combinations thereof.

2. Building material according to claim 1,
wherein the building material is selected from the group of (i) plasters, in particular exterior and/or damp room plasters, and their starting mixtures and materials; (ii) building blocks, in particular bricks, sand-lime bricks and clinker bricks, preferably sand-lime bricks, and their starting materials; (iii) mortars, in particular exterior and/or damp room mortars, and their starting mixtures and materials; (iv) cements, in particular outdoor and/or damp room cements, and their starting mixtures and materials, (v) concretes, in particular outdoor and/or damp room concretes, and their starting mixtures and materials; (vi) paints, in particular outdoor and/or damp room paints, preferably mineral paints, and their starting mixtures and materials; (vii) paints, in particular exterior and/or damp-proof paints, and their starting mixtures and materials; (viii) wall coverings, in particular wallpapers, and their starting materials; (ix) floor coverings, in particular terrace and/or laundry room floor coverings, and their starting materials; (x) screeds, in particular exterior and/or damp-proof screeds, and their starting mixtures and materials; (xi) panel elements, in particular façade elements and façade panels, and their starting materials; (xii) insulating elements, in particular insulating panels, and their starting materials; (xiii) wood construction materials and wood-based construction materials, in particular wood or wood-based floor, ceiling and/or wall elements and/or panels, plywood panels, OSB panels and wood-plastic composites, and their starting materials; and (xiv) metal beams and metal substrates.

3. Building material according to claim 1 or 2,
wherein the building material contains the antimicrobial and/or herbicidal biopolymer, preferably chitosan, in an amount in the range from 0.00001% to 20% by weight, in particular in the range from 0.0001% to 15% by weight, preferably in the range from 0.001% to 10% by weight, preferably in the range from 0.01% to 3% by weight, based on the building material; and/or
wherein the antimicrobial and/or herbicidal biopolymer, preferably chitosan, has a degree of acetylation in the range from 2.1 % to 40 %, in particular in the range from 2.5 % to 30 %, preferably in the range from 3 % to 25 %, preferably in the range from 4 % to 20 %, particularly preferably in the range from 5 % to 15 %, relative to the acetylatable functional groups, in particular amino groups, of the biopolymer, preferably of the chitosan.

4. Building material according to any of the preceding claims,
wherein the building material contains the additive in an amount in the range from 0.00001% to 5% by weight, in particular in the range from 0.0001% to 3% by weight, preferably in the range from 0.0005% to 1% by weight, based on the building material.

5. Building material according to any of the preceding claims,
wherein the building material comprises multivalent cations and/or multivalent metal ions, in particular divalent cations and/or divalent metal ions, preferably alkaline earth metal ions, preferably calcium ions and/or magnesium ions, and/or is equipped therewith;
in particular wherein the polyvalent cations and/or the polyvalent metal ions, in particular the divalent cations and/or the divalent metal ions, preferably the alkaline earth metal ions, preferably the calcium ions and/or the magnesium ions, in particular independently of one another, are used or present in the form of salts, preferably in the form of inorganic or organic salts, preferably in the form of carbonates, hydrogen carbonates, hydroxides, halides and/or halide-containing salts.

6. Use of an antimicrobial and/or herbicidal biopolymer selected from chitosan and/or its salt,
wherein the antimicrobial and/or herbicidal biopolymer has a weight-average molecular weight M_{w} in the range from 1,500 Da to 9,499 Da and wherein the antimicrobial and/or herbicidal biopolymer has a polydispersity index, calculated as the quotient of weight-average molecular weight M_{w} and number-average molecular weight Mₙ, in the range from 1.05 to 5 and
wherein the antimicrobial and/or herbicidal biopolymer is used together with at least one additive, wherein the additive is selected from the group of (i) proteins and protein hydrolysates selected from the group of whey, whey proteins, keratin hydrolysate, wheat protein hydrolysate, collagen hydrolysate and gelatin; (ii) hydroxycarboxylic acids selected from the group consisting of lactic acid, citric acid, malic acid, tartaric acid, mandelic acid and salicylic acid; and (iii) ascorbic acid; and mixtures and combinations thereof,
for finishing and/or maintaining a building material for building construction and/or for buildings, preferably for outdoor use and/or damp areas, in particular as defined in one of the preceding claims, with antimicrobial and/or herbicidal properties; or
for reducing the germination and/or algae and/or moss and/or fungal infestation of a building material for building construction and/or for buildings, preferably for outdoor use and/or damp rooms, in particular as defined in one of the preceding claims.

7. Use according to claim 6,
wherein the antimicrobial and/or herbicidal biopolymer, preferably chitosan, has a degree of acetylation in the range from 2.1 % to 40 %, in particular in the range from 2.5 % to 30 %, preferably in the range from 3 % to 25 %, preferably in the range from 4 % to 20 %, particularly preferably in the range from 5 % to 15 %, relative to the acetylatable functional groups, in particular amino groups, of the biopolymer, preferably of the chitosan.

8. Use according to claim 6 or 7,
wherein the antimicrobial and/or herbicidal biopolymer, preferably chitosan, has a property selected from the group of (i) antibacterial properties, in particular bactericidal and bacteriostatic properties; (ii) antifungal properties, in particular fungistatic and fungicidal properties; (iii) herbicidal and herbistatic properties; (iv) antialgal properties, in particular algistatic and algicidal properties; and (vi) combinations thereof; and/or
wherein the antimicrobial and/or herbicidal biopolymer, preferably chitosan, has properties which inhibit and/or prevent the growth and/or activity of bacteria, fungi, viruses, algae, mosses and/or lichens.

9. Use according to any one of claims 6 to 8,
wherein the antimicrobial and/or herbicidal biopolymer, preferably chitosan, is used together with polyvalent cations and/or polyvalent metal ions, in particular divalent cations and/or divalent metal ions, preferably alkaline earth metal ions, preferably calcium ions and/or magnesium ions;
in particular wherein the polyvalent cations and/or the polyvalent metal ions, in particular the divalent cations and/or the divalent metal ions, preferably the alkaline earth metal ions, preferably the calcium ions and/or the magnesium ions, in particular independently of one another, are used or present in the form of salts, preferably in the form of inorganic or organic salts, preferably in the form of carbonates, hydrogen carbonates, hydroxides, halides and/or halide-containing salts.

10. Composition, preferably in the form of an aqueous and/or in particular aqueous-based solution or dispersion, for finishing and/or obtaining a building material, in particular as defined in any one of claims 1 to 5, with at least one antimicrobial and/or herbicidal biopolymer,
where the composition contains the following ingredients:
(a) at least one antimicrobial and/or herbicidal biopolymer selected from chitosan and/or its salt, wherein the antimicrobial and/or herbicidal biopolymer has a weight-average molecular weight M_{w} in the range from 1,500 Da to 9,499 Da and wherein the antimicrobial and/or herbicidal biopolymer has a polydispersity index, calculated as the quotient of weight-average molecular weight M_{w} and number-average molecular weight Mₙ, in the range from 1.05 to 5;
(b) at least one additive, in particular at least one additive for improving the distribution and/or homogenization of the (a) biopolymer,
wherein the additive is selected from the group of solubilizers, dispersants and complexing agents and mixtures and combinations thereof, wherein the (b) additive is selected from the group of (i) proteins and protein hydrolysates selected from the group of whey, whey proteins, keratin hydrolysate, wheat protein hydrolysate, collagen hydrolysate and gelatin; (ii) hydroxycarboxylic acids selected from the group consisting of lactic acid, citric acid, malic acid, tartaric acid, mandelic acid and salicylic acid; and (iii) ascorbic acid; and mixtures and combinations thereof; and
(c) at least one carrier medium, in particular at least one carrier medium which is liquid at room temperature and ambient pressure, preferably water;
the composition having a pH of not more than 7.

11. Composition according to claim 10,
wherein the composition has a pH of at most 6.75, preferably at most 6.5, preferably at most 6.25, particularly preferably at most 6, very particularly at most 5.4, further preferably at most 4.9; and/or
wherein the composition has a pH value in the range from 2 to 7, in particular in the range from 2.5 to 6.75, preferably in the range from 3 to 6.5, preferably in the range from 3.5 to 6.25, more preferably in the range from 4 to 6, most preferably in the range from 4 to 5.4, further preferably in the range from 4 to 4.9; and/or
the composition comprising the (a) antimicrobial and/or herbicidal biopolymer, preferably chitosan, in an amount in the range from 0.01% to 25% by weight, in particular in the range from 0.05% to 20% by weight% by weight, preferably in the range from 0.1 % to 15 % by weight, preferably in the range from 0.5 % to 10 % by weight, particularly preferably in the range from 1 % to 6 % by weight, based on the composition; and/or
wherein the antimicrobial and/or herbicidal biopolymer, preferably chitosan, has a degree of acetylation in the range from 2.1 % to 40 %, in particular in the range from 2.5 % to 30 %, preferably in the range from 3 % to 25 %, preferably in the range from 4 % to 20 %, particularly preferably in the range from 5 % to 15 %, relative to the acetylatable functional groups, in particular amino groups, of the biopolymer, preferably of the chitosan.

12. The composition according to claim 10 or 11,
wherein the composition contains the (b) additive in an amount in the range from 0.1 % to 49 % by weight, in particular in the range from 0.5 % to 45 % by weight, preferably in the range from 1 % to 40 % by weight, preferably in the range from 1.5 % to 35 % by weight, particularly preferably in the range from 2 % to 32.5 % by weight, based on the composition.

13. The composition according to any one of claims 10 to 12,
wherein the (b) additive has functional groups in the form of hydroxyl groups, carboxyl groups and/or carbonyl groups, preferably hydroxyl groups and/or carboxyl groups; and/or
wherein the (b) additive is used in an amount such that the molar ratio of the functional groups of the (b) additive, preferably in the form of hydroxyl groups, carboxyl groups and/or carbonyl groups, preferably hydroxyl groups and/or carboxyl groups to the acetylated groups, in particular to the acetylated amino groups, of the (a) biopolymer is in the range from 0.2 to 2, in particular in the range from 0.3 to 1.5, preferably in the range from 0.4 to 1.3, preferably in the range from 0.6 to 1.25; and/or
wherein the composition comprises the (a) biopolymer and the (b) additive in a weight-related ratio of (a) biopolymer, preferably chitosan, to (b) additive in the range from 1 : 1 to 1,000 : 1, in particular in the range from 2 : 1 to 500 : 1, preferably in the range from 10 : 1 to 2500 : 1.

14. Use of a composition, in particular aqueous composition, preferably in the form of a solution or dispersion, preferably in the form of an aqueous and/or in particular aqueous-based solution or dispersion, as defined in any one of claims 10 to 13,
for finishing and/or maintaining a building material for building construction and/or for buildings, preferably for outdoor use and/or damp areas, in particular as defined in one of claims 1 to 5, with antimicrobial and/or herbicidal properties; or
for reducing the germination and/or algae and/or moss and/or fungal infestation of a building material for building construction and/or for buildings, preferably for outdoor use and/or damp rooms, in particular as defined in one of claims 1 to 5; or
for filling and/or sealing joints and/or cracks in a building material for building construction and/or for buildings, preferably for outdoor use and/or damp rooms, in particular as defined in one of claims 1 to 5, in particular for filling and/or sealing joints and/or cracks in plasters, building blocks, in particular sand-lime bricks, cement and/or concrete bodies or surfaces, floor coverings, screeds, panel elements or the like; or
as a joint and/or crack filling composition; or
for priming a building material for building construction and/or for buildings, preferably for outdoor use and/or damp areas, in particular as defined in one of claims 1 to 5, preferably for priming plasters, building blocks, in particular sand-lime bricks, cement and/or concrete bodies or surfaces, wall coverings, floor coverings, screeds, panel elements or the like, preferably chipboard or OSB panels, preferably for the purpose of improving the adhesion of paints, in particular mineral paints, lacquers or the like; or
as a primer and/or adhesion promoter composition; or
for impregnating a building material for building construction and/or for buildings, preferably for outdoor use and/or damp areas, in particular as defined in one of claims 1 to 5, preferably for impregnating plasters, building blocks, in particular sand-lime bricks, cement and/or concrete bodies or surfaces, paints, in particular mineral paints, varnishes or the like, wall coverings, floor coverings, screeds, panel elements or the like, preferably for impregnating the aforementioned building materials with moisture- and/or surfaces, paints, in particular mineral paints, varnishes or the like, wall coverings, floor coverings, screeds, panel elements or the like, preferably for equipping the aforementioned building materials with moisture- and/or dirt-repellent properties and/or for providing a lotus effect; or
as an impregnating and/or dirt protection composition; or
as a component of paints, in particular mineral paints, varnishes or the like, in particular to increase adhesion and/or compatibility with substrates and/or to increase durability and/or weather resistance and/or to reduce germination and/or algae and/or moss and/or fungal infestation of the paints, in particular mineral paints, varnishes or the like; or
for bonding wall coverings, in particular wallpapers, preferably paper-based wallpapers, and/or as a bonding agent and/or adhesive for wall coverings, in particular wallpapers, preferably paper-based wallpapers; or
as an adhesive and/or bonding composition; or
for equipping metal carriers and/or metal substrates with corrosion protection properties; or
as an anti-corrosion agent; or
for equipping components or objects used in particular in the seawater area, especially ships, boats, buoys, nets, underwater pipes, oil platforms or the like with antifouling *properties*; or
as an *antifouling composition,* in particular as an *antifouling* treatment *composition,* preferably for components or articles used in the seawater sector.

15. Method for equipping and/or obtaining a building material for building construction and/or for buildings, preferably for outdoor use and/or damp areas, in particular as defined in any one of claims 1 to 5, with antimicrobial and/or herbicidal properties; or
for increasing the service life and/or the weather resistance, in particular for increasing the long-term and/or weathering resistance of a building material for building construction and/or for buildings, preferably for outdoor use and/or damp areas, in particular as defined in one of claims 1 to 5; or
for reducing the germination and/or algae and/or moss and/or fungal infestation of a building material for building construction and/or for buildings, preferably for outdoor use and/or damp rooms, in particular as defined in one of claims 1 to 5; or
for filling and/or sealing joints and/or cracks in a building material for building construction and/or for buildings, preferably for outdoor use and/or damp rooms, in particular as defined in one of claims 1 to 5, in particular for filling and/or sealing joints and/or cracks in plasters, building blocks, in particular sand-lime bricks, cement and/or concrete bodies or surfaces, floor coverings, screeds, panel elements or the like; or
for priming a building material for building construction and/or for buildings, preferably for outdoor use and/or damp areas, in particular as defined in one of claims 1 to 5, preferably for priming plasters, building blocks, in particular sand-lime bricks, cement and/or concrete bodies or surfaces, wall coverings, floor coverings, screeds, panel elements or the like, preferably chipboard or OSB panels, preferably for improving the adhesion of paints, in particular mineral paints, lacquers or the like; or
for impregnating a building material for building construction and/or for buildings, preferably for outdoor use and/or damp areas, in particular as defined in one of claims 1 to 5, preferably for impregnating plasters, building blocks, in particular sand-lime bricks, cement and/or concrete bodies or surfaces, paints, in particular mineral paints, varnishes or the like, wall coverings, floor coverings, screeds, panel elements or the like, preferably for impregnating the aforementioned building materials with moisture- and/or surfaces, paints, in particular mineral paints, varnishes or the like, wall coverings, floor coverings, screeds, panel elements or the like, preferably for equipping the aforementioned building materials with moisture- and/or dirt-repellent properties and/or for providing a lotus effect; or
for bonding wall coverings, in particular wallpapers, preferably paper-based wallpapers, and/or as a bonding agent and/or adhesive for wall coverings, in particular wallpapers, preferably paper-based wallpapers; or
for equipping metal carriers and/or metal substrates with corrosion protection properties; or
for equipping components or objects, in particular those used in seawater, especially ships, boats, buoys, nets, underwater pipes, oil platforms or the like, with *antifouling properties*;
wherein the building material and/or article is brought into contact with a composition as defined in any one of 10 to 13, in particular wherein the carrier medium of the composition is subsequently removed.

## Revendications

1. Matériau de construction pour la construction de bâtiments et/ou pour des bâtiments, de préférence pour l'extérieur et/ou pour des locaux humides, conçu comme et/ou sous la forme d'une partie de bâtiment et/ou d'un élément de bâtiment ou destiné à être utilisé sur des parties de bâtiment et/ou des éléments de bâtiment,
où le matériau de construction contient ou est équipé d'au moins un biopolymère antimicrobien et/ou herbicide choisi parmi le chitosane et/ou son sel, où le biopolymère antimicrobien et/ou herbicide a un poids moléculaire moyen en poids M_{w} dans la plage de 1.500 Da à 9.499 Da et où le biopolymère antimicrobien et/ou herbicide a un indice de polydispersité, calculé comme le quotient de la masse moléculaire moyenne en poids M_{w} et de la masse moléculaire moyenne en nombre Mₙ, dans la plage de 1,05 à 5; et
où le matériau de construction comprend et/ou est équipé d'au moins un additif, l'additif étant choisi dans le groupe constitué par (i) des protéines et des hydrolysats de protéines choisis dans le groupe constitué par le petit lait, les protéines de petit lait, l'hydrolysat de kératine, l'hydrolysat de protéines de blé, l'hydrolysat de collagène et la gélatine; (ii) les acides hydroxycarboxyliques choisis dans le groupe constitué par l'acide lactique, l'acide citrique, l'acide malique, l'acide tartrique, l'acide mandélique et l'acide salicylique; et (iii) l'acide ascorbique; ainsi que leurs mélanges et combinaisons.

2. Les matériaux de construction selon la revendication 1,
où le matériau de construction est choisi dans le groupe de (i) enduits, en particulier enduits d'extérieur et/ou de locaux humides, ainsi que leurs mélanges et matériaux de départ; (ii) pierres de construction, en particulier briques, briques silico-calcaires et briques clinkers, de préférence briques silico-calcaires, ainsi que leurs matériaux de départ; (iii) mortiers, en particulier mortiers d'extérieur et/ou de locaux humides, ainsi que leurs mélanges et matériaux de départ; (iv) les ciments, en particulier les ciments d'extérieur et/ou de locaux humides, ainsi que leurs mélanges et matériaux de départ; (v) les bétons, en particulier les bétons d'extérieur et/ou de locaux humides, ainsi que leurs mélanges et matériaux de départ; (vi) les peintures, en particulier les peintures d'extérieur et/ou de locaux humides, de préférence les peintures minérales, ainsi que leurs mélanges et matériaux de départ; (vii) des peintures, en particulier des peintures pour l'extérieur et/ou pour locaux humides, ainsi que leurs mélanges et matériaux de départ; (viii) des revêtements muraux, en particulier des papiers peints, ainsi que leurs matériaux de départ; (ix) des revêtements de sol, en particulier des revêtements de sol de terrasse et/ou de buanderie, ainsi que leurs matériaux de départ; (x) des chapes, en particulier des chapes pour l'extérieur et/ou pour locaux humides, ainsi que leurs mélanges et matériaux de départ; (xi) des éléments de panneaux, en particulier des éléments de façade et des panneaux de façade, ainsi que leurs matériaux de base; (xii) des éléments d'isolation, en particulier des panneaux isolants, ainsi que leurs matériaux de base; (xiii) des matériaux de construction en bois et des matériaux de construction à base de bois, en particulier des éléments et/ou des panneaux de sol, de plafond et/ou de mur en bois ou à base de bois, des panneaux de contreplaqué, des panneaux OSB et des matériaux composites bois-plastique, ainsi que leurs matériaux de base; et (xiv) des supports et des substrats métalliques.

3. Les matériaux de construction selon la revendication 1 ou 2,
où le matériau de construction contient le biopolymère antimicrobien et/ou herbicide, de préférence du chitosan, en une quantité comprise dans la plage de 0,00001 % en poids à 20 % en poids, en particulier dans la plage de 0,0001 % en poids à 15 % en poids, de préférence dans la plage de 0,001 % en poids à 10 % en poids, de préférence dans la plage de 0,01 % en poids à 3 % en poids, par rapport au matériau de construction; et/ou
où le biopolymère antimicrobien et/ou herbicide, de préférence le chitosane, présente un degré d'acétylation dans la plage de 2,1 % à 40 %, en particulier dans la plage de 2,5 % à 30 %, de préférence dans la plage de 3 % à 25 %, de préférence dans la plage de 4 % à 20 %, de manière particulièrement préférée dans la plage de 5 % à 15 %, par rapport aux groupes fonctionnels acétylables, en particulier aux groupes amino, du biopolymère, de préférence du chitosane.

4. Matériau de construction selon l'une quelconque des revendications précédentes,
où le matériau de construction contient l'additif en une quantité dans la plage de 0,00001 % en poids à 5 % en poids, en particulier dans la plage de 0,0001 % en poids à 3 % en poids, de préférence dans la plage de 0,0005 % en poids à 1 % en poids, par rapport au matériau de construction.

5. Matériau de construction selon l'une quelconque des revendications précédentes,
où le matériau de construction présente des cations polyvalents et/ou des ions métalliques polyvalents, en particulier des cations divalents et/ou des ions métalliques divalents, de préférence des ions de métaux alcalino-terreux, de préférence des ions de calcium et/ou des ions de magnésium, et/ou est équipé de ceux-ci;
en particulier où les cations polyvalents et/ou les ions métalliques polyvalents, en particulier les cations divalents et/ou les ions métalliques divalents, de préférence les ions de métaux alcalino-terreux, de préférence les ions de calcium et/ou les ions de magnésium, en particulier indépendamment les uns des autres, sont utilisés ou présents sous forme de sels, de préférence sous forme de sels inorganiques ou organiques, de préférence sous forme de carbonates, d'hydrogénocarbonates, d'hydroxydes, d'halogénures et/ou de sels contenant des halogénures.

6. Utilisation d'un biopolymère antimicrobien et/ou herbicide choisi parmi le chitosane et/ou son sel,
où le biopolymère antimicrobien et/ou herbicide a une masse moléculaire moyenne en poids M_{w} dans la plage de 1500 Da à 9499 Da et où le biopolymère antimicrobien et/ou herbicide a un indice de polydispersité, calculé comme le quotient de la masse moléculaire moyenne en poids M_{w} et de la masse moléculaire moyenne en nombre Mₙ, dans la plage de 1,05 à 5, et
où le biopolymère antimicrobien et/ou herbicide est utilisé conjointement avec au moins un additif, l'additif étant choisi dans le groupe constitué par (i) des protéines et des hydrolysats de protéines choisis dans le groupe constitué par le lactosérum, les protéines de lactosérum, l'hydrolysat de kératine, l'hydrolysat de protéines de blé, l'hydrolysat de collagène et la gélatine; (ii) les acides hydroxycarboxyliques choisis dans le groupe constitué par l'acide lactique, l'acide citrique, l'acide malique, l'acide tartrique, l'acide mandélique et l'acide salicylique; et (iii) l'acide ascorbique; ainsi que leurs mélanges et combinaisons,
pour l'équipement et/ou l'obtention d'un matériau de construction pour la construction de bâtiments et/ou pour des bâtiments, de préférence pour l'extérieur et/ou pour des locaux humides, en particulier tel que défini dans l'une des revendications précédentes, ayant des propriétés antimicrobiennes et/ou herbicides; ou
pour la réduction de la contamination par des germes et/ou des algues et/ou des mousses et/ou des champignons d'un matériau de construction pour la construction de bâtiments et/ou pour des bâtiments, de préférence pour l'extérieur et/ou pour des locaux humides, en particulier comme défini dans l'une des revendications précédentes.

7. Utilisation selon la revendication 6,
où le biopolymère antimicrobien et/ou herbicide, de préférence le chitosane, présente un degré d'acétylation dans la plage de 2,1 % à 40 %, en particulier dans la plage de 2,5 % à 30 %, de préférence dans la plage de 3 % à 25 %, de préférence dans la plage de 4 % à 20 %, de manière particulièrement préférée dans la plage de 5 % à 15 %, par rapport aux groupes fonctionnels acétylables, en particulier aux groupes amino, du biopolymère, de préférence du chitosane.

8. Utilisation selon la revendication 6 ou 7,
où le biopolymère antimicrobien et/ou herbicide, de préférence le chitosane, présente une propriété choisie dans le groupe constitué par (i) des propriétés antibactériennes, en particulier des propriétés bactéricides et bactériostatiques; (ii) des propriétés antifongiques, en particulier des propriétés fongistatiques et fongicides; (iii) des propriétés herbicides et herbistatiques; (iv) des propriétés antialgues, en particulier des propriétés algistatiques et algicides; et (vi) leurs combinaisons; et/ou
où le biopolymère antimicrobien et/ou herbicide, de préférence le chitosan, présente des propriétés inhibant et/ou empêchant la croissance et/ou l'activité de bactéries, champignons, virus, algues, mousses et/ou lichens.

9. Utilisation selon l'une quelconque des revendications 6 à 8,
où le biopolymère antimicrobien et/ou herbicide, de préférence le chitosane, est utilisé conjointement avec des cations polyvalents et/ou des ions métalliques polyvalents, en particulier des cations divalents et/ou des ions métalliques divalents, de préférence des ions de métaux alcalino-terreux, de préférence des ions de calcium et/ou des ions de magnésium ;
en particulier où les cations polyvalents et/ou les ions métalliques polyvalents, en particulier les cations divalents et/ou les ions métalliques divalents, de préférence les ions de métaux alcalino-terreux, de préférence les ions de calcium et/ou les ions de magnésium, en particulier indépendamment les uns des autres, sont utilisés ou présents sous forme de sels, de préférence sous forme de sels inorganiques ou organiques, de préférence sous forme de carbonates, d'hydrogénocarbonates, d'hydroxydes, d'halogénures et/ou de sels contenant des halogénures.

10. Composition, de préférence sous forme de solution ou dispersion aqueuse et/ou notamment à base aqueuse, pour le traitement et/ou l'obtention d'un matériau de construction, notamment tel que défini dans l'une quelconque des revendications 1 à 5, comprenant au moins un biopolymère antimicrobien et/ou herbicide,
où la composition contient les ingrédients suivants:
(a) au moins un biopolymère antimicrobien et/ou herbicide choisi parmi le chitosane et/ou son sel, où le biopolymère antimicrobien et/ou herbicide a une masse moléculaire moyenne en poids M_{w} dans la plage de 1500 Da à 9499 Da et où le biopolymère antimicrobien et/ou herbicide a un indice de polydispersité, calculé comme le quotient de la masse moléculaire moyenne en poids M_{w} et de la masse moléculaire moyenne en nombre Mₙ , dans la plage de 1,05 à 5;
(b) au moins un additif, en particulier au moins un additif pour améliorer la distribution et/ou l'homogénéisation du biopolymère (a),
où l'additif est choisi dans le groupe des solubilisants, des dispersants et des complexants, et leurs mélanges et combinaisons, où (b) l'additif est choisi dans le groupe (i) des protéines et des hydrolysats de protéines choisis dans le groupe du lactosérum, des protéines de lactosérum, de l'hydrolysat de kératine, de l'hydrolysat de protéines de blé, de l'hydrolysat de collagène et de la gélatine; (ii) des acides hydroxycarboxyliques choisis dans le groupe constitué par l'acide lactique, l'acide citrique, l'acide malique, l'acide tartrique, l'acide mandélique et l'acide salicylique; et (iii) de l'acide ascorbique; ainsi que leurs mélanges et combinaisons; et
(c) au moins un milieu porteur, en particulier au moins un milieu porteur liquide à température ambiante et à pression ambiante, de préférence de l'eau;
ladite composition ayant un pH d'au plus 7.

11. Composition selon la revendication 10,
où la composition a un pH d'au plus 6,75, de préférence d'au plus 6,5, de préférence d'au plus 6,25, de préférence d'au plus 6, tout particulièrement d'au plus 5,4, de préférence encore d'au plus 4,9; et/ou
où la composition a un pH dans la plage de 2 à 7, en particulier dans la plage de 2,5 à 6,75, de préférence dans la plage de 3 à 6,5, de préférence dans la plage de 3,5 à 6,25, de manière particulièrement préférée dans la plage de 4 à 6, de manière tout à fait préférée dans la plage de 4 à 5,4, de manière encore plus préférée dans la plage de 4 à 4,9; et/ou
où la composition comprend (a) un biopolymère antimicrobien et/ou herbicide, de préférence du chitosan, en une quantité comprise entre 0,01 % et 25 % en poids, en particulier entre 0,05 % et 20 % en poids, et (b) un agent de conservation, de préférence du chitosan.%, de préférence dans la plage de 0,1 % à 15 % en poids, de préférence dans la plage de 0,5 % à 10 % en poids, de manière particulièrement préférée dans la plage de 1 % à 6 % en poids, par rapport à la composition; et/ou
où le biopolymère antimicrobien et/ou herbicide, de préférence le chitosane, présente un degré d'acétylation dans la plage de 2,1 % à 40 %, en particulier dans la plage de 2,5 % à 30 %, de préférence dans la plage de 3 % à 25 %, de préférence dans la plage de 4 % à 20 %, de manière particulièrement préférée dans la plage de 5 % à 15 %, par rapport aux groupes fonctionnels acétylables, en particulier aux groupes amino, du biopolymère, de préférence du chitosane.

12. Composition selon la revendication 10 ou 11,
où la composition contient l'additif (b) en une quantité comprise dans la plage de 0,1 % à 49 % en poids, en particulier dans la plage de 0,5 % à 45 % en poids, de préférence dans la plage de 1 % à 40 % en poids, de préférence dans la plage de 1,5 % à 35 % en poids, de manière particulièrement préférée dans la plage de 2 % à 32,5 % en poids, par rapport à la composition.

13. Composition selon l'une quelconque des revendications 10 à 12,
où l'additif (b) a des groupes fonctionnels sous la forme de groupes hydroxyle, de groupes carboxyle et/ou de groupes carbonyle, de préférence des groupes hydroxyle et/ou des groupes carboxyle; et/ou
où l'additif (b) est utilisé en une quantité telle que le rapport molaire des groupes fonctionnels de l'additif (b), de préférence sous la forme de groupes hydroxyle, de groupes carboxyle et/ou de groupes carbonyle, de préférence de groupes hydroxyle et/ou de groupes carboxyle, par rapport aux groupes acétylés, en particulier aux groupes amino acétylés, du (a) biopolymère se situe dans la plage de 0,2 à 2, en particulier dans la plage de 0,3 à 1,5, de préférence dans la plage de 0,4 à 1,3, de préférence dans la plage de 0,6 à 1,25; et/ou
où la composition comprend le (a) biopolymère et l'(b) additif dans un rapport en poids de (a) biopolymère, de préférence du chitosane, à (b) additif dans la plage de 1:1 à 1000:1, en particulier dans la plage de 2:1 à 500:1, de préférence dans la plage de 10:1 à 2500:1.

14. Utilisation d'une composition, en particulier d'une composition aqueuse, de préférence sous la forme d'une solution ou d'une dispersion, de préférence sous la forme d'une solution ou d'une dispersion formée par voie aqueuse et/ou en particulier à base aqueuse, telle que définie dans l'une quelconque des revendications 10 à 13,
pour l'équipement et/ou l'obtention d'un matériau de construction pour la construction de bâtiments et/ou pour des bâtiments, de préférence pour l'extérieur et/ou pour des locaux humides, en particulier tel que défini dans l'une des revendications 1 à 5, ayant des propriétés antimicrobiennes et/ou herbicides; ou
pour réduire la contamination par des germes et/ou des algues et/ou des mousses et/ou des champignons d'un matériau de construction pour le bâtiment et/ou pour des bâtiments, de préférence pour l'extérieur et/ou pour des locaux humides, en particulier tel que défini dans l'une quelconque des revendications 1 à 5; ou
pour le remplissage et/ou l'obturation de joints et/ou de fissures d'un matériau de construction pour la construction de bâtiments et/ou pour des bâtiments, de préférence pour l'extérieur et/ou pour des locaux humides, en particulier tel que défini dans l'une des revendications 1 à 5, en particulier pour le remplissage et/ou l'obturation de joints et/ou de fissures dans des enduits, des briques de construction, en particulier des briques silico-calcaires, des corps ou des surfaces en ciment et/ou en béton, des revêtements de sol, des chapes, des éléments de panneaux ou similaires; ou
comme composition de remplissage de joints et/ou de fissures; ou
pour l'apprêt d'un matériau de construction pour la construction de bâtiments et/ou pour des bâtiments, de préférence pour l'extérieur et/ou pour des locaux humides, en particulier tel que défini dans l'une des revendications 1 à 5, de préférence pour l'apprêt d'enduits, de briques, en particulier de briques silico-calcaires, de corps ou de surfaces en ciment et/ou en béton, de revêtements muraux, de revêtements de sol, de chapes, d'éléments de panneaux ou similaires, de préférence de panneaux de particules ou de panneaux OSB, de préférence à des fins d'amélioration de l'adhérence de peintures, en particulier de peintures minérales, de vernis ou similaires; ou
comme composition d'apprêt et/ou d'accrochage; ou
pour imprégner un matériau de construction pour la construction de bâtiments et/ou pour des bâtiments, de préférence pour l'extérieur et/ou pour des locaux humides, en particulier tel que défini dans l'une des revendications 1 à 5, de préférence pour imprégner des enduits, des briques de construction, en particulier des briques silico-calcaires, des corps ou des surfaces en ciment et/ou en béton, des -surfaces, des peintures, en particulier des peintures minérales, des vernis ou similaires, des revêtements muraux, des revêtements de sol, des chapes, des éléments de panneaux ou similaires, de préférence pour conférer aux matériaux de construction précités des propriétés de résistance à l'humidité et/ou aux salissures et/ou pour fournir un effet de lotus; ou
comme composition d'imprégnation et/ou de protection contre les salissures; ou
comme composant de peintures, en particulier de peintures minérales, de vernis ou similaires, en particulier pour augmenter l'adhérence et/ou la compatibilité avec les substrats et/ou pour augmenter la durée de vie et/ou la résistance aux intempéries et/ou pour réduire la contamination par des germes et/ou des algues et/ou des mousses et/ou des champignons des peintures, en particulier des peintures minérales, des vernis ou similaires; ou
pour coller des revêtements muraux, en particulier des papiers peints, de préférence des papiers peints à base de papier, et/ou comme agent adhésif et/ou colle pour des revêtements muraux, en particulier des papiers peints, de préférence des papiers peints à base de papier; ou
comme composition adhésive et/ou de liaison; ou
pour conférer des propriétés anticorrosives à des supports et/ou substrats métalliques; ou
comme inhibiteur de corrosion; ou
pour conférer des propriétés antisalissures à des éléments ou objets utilisés en particulier dans le milieu marin, notamment des navires, bateaux, bouées, filets, tubes sous-marins, plates-formes pétrolières ou similaires; ou
comme composition antisalissure, en particulier comme composition de traitement antisalissure, de préférence pour des éléments de construction ou des objets utilisés dans le domaine de l'eau de mer.

15. Procédé d'équipement et/ou d'obtention d'un matériau de construction pour le bâtiment et/ou pour les bâtiments, de préférence pour l'extérieur et/ou les locaux humides, notamment tel que défini dans l'une quelconque des revendications 1 à 5, ayant des propriétés antimicrobiennes et/ou herbicides; ou
pour augmenter la durée de vie et/ou la résistance aux intempéries, en particulier pour augmenter la résistance à long terme et/ou aux intempéries d'un matériau de construction pour la construction de bâtiments et/ou pour des bâtiments, de préférence pour l'extérieur et/ou pour des locaux humides, en particulier comme défini dans l'une quelconque des revendications 1 à 5; ou
pour réduire la contamination par des germes et/ou des algues et/ou des mousses et/ou des champignons d'un matériau de construction pour le bâtiment et/ou pour des bâtiments, de préférence pour l'extérieur et/ou pour des locaux humides, en particulier tel que défini dans l'une quelconque des revendications 1 à 5; ou
pour le remplissage et/ou l'obturation de joints et/ou de fissures d'un matériau de construction pour la construction de bâtiments et/ou pour des bâtiments, de préférence pour l'extérieur et/ou pour des locaux humides, en particulier tel que défini dans l'une des revendications 1 à 5, en particulier pour le remplissage et/ou l'obturation de joints et/ou de fissures dans des enduits, des briques de construction, en particulier des briques silico-calcaires, des corps ou des surfaces en ciment et/ou en béton, des revêtements de sol, des chapes, des éléments de panneaux ou similaires; ou
pour l'apprêt d'un matériau de construction pour la construction de bâtiments et/ou pour des bâtiments, de préférence pour l'extérieur et/ou pour des locaux humides, en particulier tel que défini dans l'une des revendications 1 à 5, de préférence pour l'apprêt d'enduits, de briques, en particulier de briques silico-calcaires, de corps ou de surfaces en ciment et/ou en béton, de revêtements muraux, de revêtements de sol, de chapes, d'éléments de panneaux ou similaires, de préférence de panneaux de particules ou de panneaux OSB, de préférence pour améliorer l'adhérence de peintures, en particulier de peintures minérales, de laques ou similaires; ou
pour imprégner un matériau de construction pour la construction de bâtiments et/ou pour des bâtiments, de préférence pour l'extérieur et/ou pour des locaux humides, en particulier tel que défini dans l'une des revendications 1 à 5, de préférence pour imprégner des enduits, des briques de construction, en particulier des briques silico-calcaires, des corps ou des surfaces en ciment et/ou en béton, des -surfaces, des peintures, en particulier des peintures minérales, des vernis ou similaires, des revêtements muraux, des revêtements de sol, des chapes, des éléments de panneaux ou similaires, de préférence pour conférer aux matériaux de construction précités des propriétés de résistance à l'humidité et/ou aux salissures et/ou pour fournir un effet de lotus; ou
pour coller des revêtements muraux, en particulier des papiers peints, de préférence des papiers peints à base de papier, et/ou comme agent adhésif et/ou colle pour des revêtements muraux, en particulier des papiers peints, de préférence des papiers peints à base de papier; ou
pour conférer des propriétés anticorrosives à des supports et/ou substrats métalliques; ou
pour conférer *des propriétés antisalissures à des* éléments ou objets utilisés en particulier dans le milieu marin, notamment des navires, bateaux, bouées, filets, tubes sous-marins, plates-formes pétrolières ou similaires;
où le matériau de construction et/ou l'objet est mis en contact avec une composition telle que définie dans l'un quelconque des 10 à 13, en particulier où le milieu porteur de la composition est ensuite éliminé.
